# EUROPEAN PATENT SPECIFICATION

(11) **EP 2 983 513 B1**
(45) Date of publication and mention of the grant of the patent: **18.12.2019**
(21) Application number: 14769669.4
(22) Date of filing: 07.03.2014
(51) Int. Cl.: A23L 19/00, A23L 19/18, A23L 33/10, A23L 33/20, A23J 7/00, A23D 9/013, A23P 20/18, A23P 20/17, A23P 20/10, A23L 29/10

(54) **TAILORING THE WETTING AND LUBRICATION PROPERTIES OF EDIBLE FAT WITH LOW HLB EMULSIFIERS OR LECITHINS**
ANPASSUNG DER BEFEUCHTUNGS- UND GLEITEIGENSCHAFTEN VON ESSBAREM FETT MIT EMULGATOREN ODER LECITHINEN VON GERINGEM HLB-GEHALT
ADAPTATION DES PROPRIÉTÉS DE MOUILLAGE ET DE LUBRIFICATION DE MATIÈRE GRASSE COMESTIBLE AYANT DES FAIBLES TENEURS EN ÉMULSIFIANTS HLB OU EN LÉCITHINES

(30) Priority: 15.03.2013 US 201361788225 P
(43) Date of publication of application: 17.02.2016
(73) Proprietor: PepsiCo, Inc., Purchase, New York 10577 (US)
(72) Inventor: BAIER, Stefan K., Purchase, New York 10577 (US); BOEHM, Michael W., Purchase, New York 10577 (US); STOKES, Jason R., Purchase, New York 10577 (US)
(74) Representative: Jenkins, Peter David
(86) International application number: PCT/US2014/021735
(87) International publication number: WO 2014/149986

(56) References cited:
- WO-A1-2004/108874
- WO-A1-2012/059590
- JP-A- 2003 284 497
- US-A- 4 483 880
- US-A1- 2003 203 070
- US-A1- 2007 087 085
- US-A1- 2007 237 860
- US-A1- 2008 187 645
- US-A1- 2012 100 251
- US-B2- 8 277 858
- DATABASE GNPD [Online] MINTEL; July 2012 (2012-07), Anonymous: "Chipotle BBQ Black Bean Chips", retrieved from www.gnpd.com Database accession no. 1836034
- Anonymous: "Prune - Wikipedia", Wikipedia, 12 March 2013 (2013-03-12), pages 1-3, XP055496976, Retrieved from the Internet: URL:https://en.wikipedia.org/w/index.php?t itle=Prune&oldid=543637685 [retrieved on 2018-08-02]
- DATABASE GNPD [Online] MINTEL; November 2012 (2012-11), Anonymous: "Barbecue Flavored Baked Potato Crisps", Database accession no. 1933411

## Description

### FIELD OF THE INVENTION

The present invention relates generally to food products and methods of producing food products.

### BACKGROUND OF THE INVENTION

In recent years, significant consumer interest has developed in weight control and reduced intake of fats and oils. As a result, numerous efforts have been made to reduce the oil and fat content of various snack foods. However, while nutritional concerns favor a reduction in fat and oil content, organoleptic considerations do not.

When oil and fat levels are reduced in food products, the organoleptic properties are typically adversely affected because of the absence of lubrication normally imparted by oil and fat. The mouthfeel of full-oil and full-fat products is generally attributable to free oil which separates from the bulk product in the mouth, coats the mouth and provides lubrication. The lack of free oil in low-oil food products results in a dry mouthfeel.

In order to provide health conscious consumers with low-fat alternatives to traditional full-fat food products without sacrificing organoleptic desirability, attempts have previously been made to duplicate the mouthfeel of full-fat products in low-fat products by using xanthan gum, alginate gum, cellulose, cellulose derivatives, starches and various microparticulated polymeric complexes. However, such additives have typically been unsuccessful in providing the desired organoleptic characteristics classically associated with full-fat food products.

Therefore, there exists a need in the food industry for a method of enhancing the organoleptic properties of low-oil and low-fat snack products so that such properties mimic that of full-oil and full-fat snack products.

US-A-2003/0203070 discloses potato dough compositions comprising sorbitan monoesters. US-A-2012/0100251 discloses food compositions comprising organogels. WO-A-2004/108874 discloses a spray shortening system.

JP 2003-284497 A discloses an oil composition containing ≤0.1% of lecithin, and obtained by adjusting the viscosity to ≤10,000 cP at 45°C by using a condensed polyglycerol ester of ricinoleic acid or a surfactant with low HLB (HLB ≤2) and a high oil content; and a method of producing coated foods coating the composition.

US2007/0087085 A1 discloses a composition comprising about 10-65 weight % of a protein particulate material, about 35-90 weight % of a lipid-containing material, and no more than small amounts of an emulsifier, which can be used as a coating composition for a food product, or as an ingredient in a coating composition for a food product.

US2007/0237860 A1 discloses edible adhesive coatings for multi-component food products, methods of making edible adhesive coatings, food products comprising these edible adhesive coatings, and methods to make multi-component food products comprising edible adhesive coatings.

### BRIEF SUMMARY OF THE INVENTION

The invention is directed to low-oil food products with improved mouthfeel and tactile perception compared to low-oil food products that do not comprise the present fat-emulsifier component, and methods of making such products by using lecithins or low HLB emulsifiers to tailor the wetting and lubrication properties of edible fats used with low-oil food products.
The present invention provides a food product according to claim 1. Preferred features are defined in the dependent claims directed to the food product. The present invention also provides a method of producing the food product of the present invention, the method being according to claim 14. Preferred features are defined in the dependent claims directed to the method.

In certain embodiments, the solid comestible component comprises potato, sweet potato, yam, corn, waxy corn, oats, wheat, sorghum, rice, millet, amaranth, kamut, rye, barley, waxy rice, kidney beans, pinto beans, lentils, chickpeas, tapioca, yucca, taro, beet, carrot, arrowroot, cassava, parsnip, Jerusalem artichoke, triticale, buckwheat, quinoa, banana, plantain, apple, strawberry, masa, rutabaga, turnip, jicama, garlic, onion, shallot, kale, spinach, kohlrabi, soybean, pepper, pea, or combinations thereof.

In certain embodiments, the solid comestible component comprises at least one chip, slice, flake, crisp, pellet, stick, cluster, cracker, cake, bar, dough, composite, puff, extrudate, cereal, solid matrix, extruded solid matrix, or combination thereof.

In one embodiment, the edible fat component comprises sunflower oil, mid oleic sunflower oil, high oleic sunflower oil, canola oil, soybean oil, palm kernel oil, coconut oil, corn oil, cottonseed oil, palm oil, palm olein, safflower oil, high oleic safflower oil, palm stearin, rapeseed oil, or combinations thereof.

### BRIEF DESCRIPTION OF THE DRAWINGS

FIG. 1 is a Stribeck Curve illustrating the wetting and lubrication properties of high oleic sunflower oil ("HOSO").
FIG. 2 is a Stribeck Curve illustrating modulation of the wetting and lubrication properties of high oleic sunflower oil ("HOSO") with 5 weight % polyglycerol polyricinoleate ("PGPR").
FIG. 3 is a Stribeck Curve illustrating modulation of the wetting and lubrication properties of high oleic sunflower oil ("HOSO") with 15 weight % polyglycerol polyricinoleate ("PGPR").
FIG. 4 is a Stribeck Curve illustrating modulation of the wetting and lubrication properties of high oleic sunflower oil ("HOSO") with polyglycerol polyricinoleate ("PGPR") at varying concentrations.
FIG. 5 is a Stribeck Curve illustrating modulation of the wetting and lubrication properties of high oleic sunflower oil ("HOSO") with 5 weight % soy lecithin sold under the trademark ALCOLEC ("ALCOLEC").
FIG. 6 is a Stribeck Curve illustrating modulation of the wetting and lubrication properties of high oleic sunflower oil ("HOSO") with 5 weight % sunflower lecithin and 5 weight % soy lecithin produced by CARGILL and sold under the trademarks TOPCITHIN ("TOPCITHIN SF") (sunflower lecithin), EPIKURON ("EPIKURON") (soy lecithin) and LECIGRAN ("LECIGRAN") (soy lecithin).

### DETAILED DESCRIPTION

The present inventors discovered that, in addition to an inferior mouthfeel, there is a significant difference in the yield properties of low-oil, solid food products as compared to full-fat versions. For example, the yield point of reduced fat potato chips was found to be half an order of magnitude higher than that of the full-fat version. Thus, a consumer needs to chew the low-oil food product longer and utilize more saliva to achieve the same transition from solid to liquid flow that occurs when consuming full-fat versions.

The present inventors discovered that topical application of surface active molecules, such as the lecithins and low hydrophilic-lipophilic balance (HLB) value emulsifiers described herein, can be used to tailor the wetting and lubrication properties of edible fats in order to produce low-oil food products with improved mouthfeel and tactile perception. Without being bound by theory, it is believed that the perceived dryness associated with low-oil food products is overcome because the surface active molecules allow for more rapid wetting of the bolus.

In its various embodiments, the present invention is directed to low-oil and oil-free food products with improved mouthfeel and tactile perception compared to low-oil and oil-free food products that do not comprise the present fat-emulsifier component, and to methods of making such products by using the lecithins or low HLB emulsifiers described herein to tailor the wetting and lubrication properties of edible fats used with low-oil food products. In one aspect, the present invention is directed to a food product comprising:
a) a solid comestible component, wherein said solid comestible component has an oil content less than or equal to 15 grams/28.4 grams (15 grams/ounce); and
b) a fat-emulsifier component topically applied to the solid comestible component, wherein the fat-emulsifier component comprises:
   i. an edible fat component; and either
   iia. An emulsifier component with a hydrophilic-lipophilic balance (HLB) value less than or equal to 9, wherein the emulsifier component comprises polyglycerol polyricinoleate, or acetic acid esters; or
   iib. A lecithin component with an acetone insoluble (AI) percentage in the range of from 20 to 90 and a phosphatidylcholine (PC) percentage of from 20 to 90, wherein the lecithin component comprises soybean lecithin, sunflower lecithin, canola lecithin, rapeseed lecithin, cottonseed lecithin, corn lecithin, flaxseed lecithin, hempseed lecithin, palm lecithin, egg lecithin, de-oiled lecithin, hydrophobically-modified lecithin, or a combination thereof,
   wherein said emulsifier component or lecithin component is dispersed or solubilized in the edible fat component, and
   wherein the fat-emulsifier component comprises 1 to 15 wt.% of the emulsifier component or lecithin component based on the total weight of the fat-emulsifier component.

As used herein, "food product" refers to both processed and semi-processed solid, edible compositions for human consumption. Processed compositions are final products (i.e. ready for human consumption), while semi-processed compositions may be subjected to further minor processing (i.e. flavoring, coloring, seasoning, preserving, etc.) in order to yield final products. Representative examples of food products include, but are not limited to, snack chips (i.e. potato chips, pita chips, corn chips, tortilla chips, root vegetable chips, composite chips, multigrain chips, sweet potato chips, fruit chips, vegetable chips, whole grain chips, etc.), snack crisps (i.e. vegetable, potato, root vegetable, fruit, soy, potato-based composites, corn-based composites, rice-based composites, vegetable-based composites, fruit-based composites, nut-based composites, etc.), snack crackers (i.e. dough-based, wheat-based, grain-based, vegetable-based, rice-based, corn-based, soy-based, potato-based, fruit-based, nut-based, etc.), snack bars (i.e. granola bars, cereal bars, breakfast bars, fruit bars, multigrain bars, whole grain bars, protein bars, fiber bars, soy-based bars, etc.), snack cakes (i.e. rice cakes, corn cakes, popcorn cakes, soy cakes, etc.), snack sticks (i.e. pretzel, vegetable, potato, root vegetable, fruit, soy, potato-based composites, corn-based composites, rice-based composites, vegetable-based composites, fruit-based composites, nut-based composites, grain-based composites, wheat, rice, corn, etc.), snack slices (i.e. vegetable, root vegetable, potato, fruit, potato-based composites, corn-based composites, rice-based composites, vegetable-based, fruit-based, etc.), snack rings (i.e. pretzel, vegetable, potato, root vegetable, fruit, soy, potato-based composites, corn-based composites, rice-based composites, vegetable-based composites, fruit-based composites, grain-based composites, wheat, rice, corn, etc.), snack wafers (i.e. vegetable, potato, root vegetable, fruit, soy, potato-based composites, corn-based composites, rice-based composites, vegetable-based composites, soy-based composites, fruit-based composites, nut-based composites, grain-based composites, wheat, rice, corn, etc.), pretzels, snack skins (i.e. potato skins, etc.), snack flakes (i.e. potato flakes, cereal flakes, wheat flakes, rice flakes, corn flakes, grain flakes, etc.), snack pellets (i.e. granola, cereal, corn, rice, soy, grain, etc.), snack clusters (i.e. granola, cereal, rice, corn, wheat, nut, grain, fruit, etc.), snack puffs (i.e. popcorn, cheese flavored puffs, potato-based puffs, corn-based puffs, rice-based puffs, grain-based puffs, vegetable-based puffs, soy-based puffs, etc.), cereals, and combinations thereof. The food product of the present invention includes at least one type of food product. In some embodiments, the food product may include combinations of two or more types of food products, including combinations of any two or more, three or more, four or more, five or more, etc. of the food products described herein. For example, in some embodiments of the present invention, the food product of the present invention may comprise one type of food product (i.e. potato chips, tortilla chips, corn chips, soy crisps, vegetable chips, rice chips, multigrain chips, fruit chips, crackers, baked chips, fried chips, granola bars, nut bars, fruit bars, pita chips, breakfast bars, fiber bars, protein bars, potato flakes, sweet potato chips, cereal, cheese flavored puffs, pretzels, root vegetable chips, rice cakes, corn cakes, soy cakes, or popcorn, etc.). In other embodiments, the food product of the present invention may comprise a combination of two or more types of food products (i.e. a snack mix comprising, for example, pretzels and crackers; a snack mix comprising, for example, potato chips and vegetable crisps; a snack mixing comprising, for example, assorted root vegetable chips and potato chips; a snack mix comprising nuts, grain-based composites and crackers; a snack mix comprising, for example, pretzels, corn-based chips, cheese flavored puffs and multigrain chips; a snack mix comprising, for example, pretzels, crackers, grain-based composites and nuts; a snack mix comprising, for example, nuts, granola and dried fruit; a snack bar comprising, for example, rice puffs, nuts and fruit; a snack bar comprising, for example, granola clusters, nuts and fruit; etc.).

In some embodiments, the food product of the present invention has an oil content less than or equal to about 16 grams/ounce, less than or equal to about 15.5 grams/ounce, less than or equal to about 15 grams/ounce, less than or equal to about 14.5 grams/ounce, less than or equal to about 14 grams/ounce, less than or equal to about 13.5 grams/ounce, less than or equal to about 13 grams/ounce, less than or equal to about 12.5 grams/ounce, less than or equal to about 12 grams/ounce, less than or equal to about 11.5 grams/ounce, less than or equal to about 11 grams/ounce, less than or equal to about 10.5 grams/ounce, less than or equal to about 10 grams/ounce, less than or equal to about 9.5 grams/ounce, less than or equal to about 9 grams/ounce, less than or equal to about 8.5 grams/ounce, less than or equal to about 8 grams/ounce, less than or equal to about 7.5 grams/ounce, less than or equal to about 7 grams/ounce, less than or equal to about 6.5 grams/ounce, less than or equal to about 6 grams/ounce, less than or equal to about 5.5 grams/ounce, less than or equal to about 5 grams/ounce, less than or equal to about 4.5 grams/ounce, less than or equal to about 4 grams/ounce, less than or equal to about 3.5 grams/ounce, less than or equal to about 3 grams/ounce, less than or equal to about 2.5 grams/ounce, less than or equal to about 2 grams/ounce, less than or equal to about 1.5 grams/ounce, less than or equal to about 1 grams/ounce, less than or equal to about 0.5 grams/ounce, or equal to about 0 grams/ounce, and in each case 1 ounce equals 28,4 grams.

In some embodiments, the food product of the present invention has an oil content in the range of from about 0.5 grams/ounce to about 16 grams/ounce, in the range of from about 0.5 grams/ounce to about 15.5 grams/ounce, in the range of from about 0.5 grams/ounce to about 15 grams/ounce, in the range of from about 0.5 grams/ounce to about 14.5 grams/ounce, in the range of from about 0.5 grams/ounce to about 14 grams/ounce, in the range of from about 0.5 grams/ounce to about 13.5 grams/ounce, in the range of from about 0.5 grams/ounce to about 13 grams/ounce, in the range of from about 0.5 grams/ounce to about 12.5 grams/ounce, in the range of from about 0.5 grams/ounce to about 12 grams/ounce, in the range of from about 0.5 grams/ounce to about 11.5 grams/ounce, in the range of from about 0.5 grams/ounce to about 11 grams/ounce, in the range of from about 0.5 grams/ounce to about 10.5 grams/ounce, in the range of from about 0.5 grams/ounce to about 10 grams/ounce, in the range of from about 0.5 grams/ounce to about 9.5 grams/ounce, in the range of from about 0.5 grams/ounce to about 9 grams/ounce, in the range of from about 0.5 grams/ounce to about 8.5 grams/ounce, in the range of from about 0.5 grams/ounce to about 8 grams/ounce, in the range of from about 0.5 grams/ounce to about 7.5 grams/ounce, in the range of from about 0.5 grams/ounce to about 7 grams/ounce, in the range of from about 0.5 grams/ounce to about 6.5 grams/ounce, in the range of from about 0.5 grams/ounce to about 6 grams/ounce, in the range of from about 0.5 grams/ounce to about 5.5 grams/ounce, in the range of from about 0.5 grams/ounce to about 5 grams/ounce, in the range of from about 0.5 grams/ounce to about 4.5 grams/ounce, in the range of from about 0.5 grams/ounce to about 4 grams/ounce, in the range of from about 0.5 grams/ounce to about 3.5 grams/ounce, in the range of from about 0.5 grams/ounce to about 3 grams/ounce, in the range of from about 0.5 grams/ounce to about 2.5 grams/ounce, in the range of from about 0.5 grams/ounce to about 2 grams/ounce, in the range of from about 0.5 grams/ounce to about 1.5 grams/ounce, in the range of from about 0.5 grams/ounce to about 1 grams/ounce, in the range of from about 1 grams/ounce to about 16 grams/ounce, in the range of from about 1 grams/ounce to about 15.5 grams/ounce, in the range of from about 1 grams/ounce to about 15 grams/ounce, in the range of from about 1 grams/ounce to about 14.5 grams/ounce, in the range of from about 1 grams/ounce to about 14 grams/ounce, in the range of from about 1 grams/ounce to about 13.5 grams/ounce, in the range of from about 1 grams/ounce to about 13 grams/ounce, in the range of from about 1 grams/ounce to about 12.5 grams/ounce, in the range of from about 1 grams/ounce to about 12 grams/ounce, in the range of from about 1 grams/ounce to about 11.5 grams/ounce, in the range of from about 1 grams/ounce to about 11 grams/ounce, in the range of from about 1 grams/ounce to about 10.5 grams/ounce, in the range of from about 1 grams/ounce to about 10 grams/ounce, in the range of from about 1 grams/ounce to about 9.5 grams/ounce, in the range of from about 1 grams/ounce to about 9 grams/ounce, in the range of from about 1 grams/ounce to about 8.5 grams/ounce, in the range of from about 1 grams/ounce to about 8 grams/ounce, in the range of from about 1 grams/ounce to about 7.5 grams/ounce, in the range of from about 1 grams/ounce to about 7 grams/ounce, in the range of from about 1 grams/ounce to about 6.5 grams/ounce, in the range of from about 1 grams/ounce to about 6 grams/ounce, in the range of from about 1 grams/ounce to about 5.5 grams/ounce, in the range of from about 1 grams/ounce to about 5 grams/ounce, in the range of from about 1 grams/ounce to about 4.5 grams/ounce, in the range of from about 1 grams/ounce to about 4 grams/ounce, in the range of from about 1 grams/ounce to about 3.5 grams/ounce, in the range of from about 1 grams/ounce to about 3 grams/ounce, in the range of from about 1 grams/ounce to about 2.5 grams/ounce, in the range of from about 1 grams/ounce to about 2 grams/ounce, in the range of from about 1 grams/ounce to about 1.5 grams/ounce, in the range of from about 1.5 grams/ounce to about 16 grams/ounce, in the range of from about 1.5 grams/ounce to about 15.5 grams/ounce, in the range of from about 1.5 grams/ounce to about 15 grams/ounce, in the range of from about 1.5 grams/ounce to about 14.5 grams/ounce, in the range of from about 1.5 grams/ounce to about 14 grams/ounce, in the range of from about 1.5 grams/ounce to about 13.5 grams/ounce, in the range of from about 1.5 grams/ounce to about 13 grams/ounce, in the range of from about 1.5 grams/ounce to about 12.5 grams/ounce, in the range of from about 1.5 grams/ounce to about 12 grams/ounce, in the range of from about 1.5 grams/ounce to about 11.5 grams/ounce, in the range of from about 1.5 grams/ounce to about 11 grams/ounce, in the range of from about 1.5 grams/ounce to about 10.5 grams/ounce, in the range of from about 1.5 grams/ounce to about 10 grams/ounce, in the range of from about 1.5 grams/ounce to about 9.5 grams/ounce, in the range of from about 1.5 grams/ounce to about 9 grams/ounce, in the range of from about 1.5 grams/ounce to about 8.5 grams/ounce, in the range of from about 1.5 grams/ounce to about 8 grams/ounce, in the range of from about 1.5 grams/ounce to about 7.5 grams/ounce, in the range of from about 1.5 grams/ounce to about 7 grams/ounce, in the range of from about 1.5 grams/ounce to about 6.5 grams/ounce, in the range of from about 1.5 grams/ounce to about 6 grams/ounce, in the range of from about 1.5 grams/ounce to about 5.5 grams/ounce, in the range of from about 1.5 grams/ounce to about 5 grams/ounce, in the range of from about 1.5 grams/ounce to about 4.5 grams/ounce, in the range of from about 1.5 grams/ounce to about 4 grams/ounce, in the range of from about 1.5 grams/ounce to about 3.5 grams/ounce, in the range of from about 1.5 grams/ounce to about 3 grams/ounce, in the range of from about 1.5 grams/ounce to about 2.5 grams/ounce, in the range of from about 1.5 grams/ounce to about 2 grams/ounce, in the range of from about 2 grams/ounce to about 16 grams/ounce, in the range of from about 2 grams/ounce to about 15.5 grams/ounce, in the range of from about 2 grams/ounce to about 15 grams/ounce, in the range of from about 2 grams/ounce to about 14.5 grams/ounce, in the range of from about 2 grams/ounce to about 14 grams/ounce, in the range of from about 2 grams/ounce to about 13.5 grams/ounce, in the range of from about 2 grams/ounce to about 13 grams/ounce, in the range of from about 2 grams/ounce to about 12.5 grams/ounce, in the range of from about 2 grams/ounce to about 12 grams/ounce, in the range of from about 2 grams/ounce to about 11.5 grams/ounce, in the range of from about 2 grams/ounce to about 11 grams/ounce, in the range of from about 2 grams/ounce to about 10.5 grams/ounce, in the range of from about 2 grams/ounce to about 10 grams/ounce, in the range of from about 2 grams/ounce to about 9.5 grams/ounce, in the range of from about 2 grams/ounce to about 9 grams/ounce, in the range of from about 2 grams/ounce to about 8.5 grams/ounce, in the range of from about 2 grams/ounce to about 8 grams/ounce, in the range of from about 2 grams/ounce to about 7.5 grams/ounce, in the range of from about 2 grams/ounce to about 7 grams/ounce, in the range of from about 2 grams/ounce to about 6.5 grams/ounce, in the range of from about 2 grams/ounce to about 6 grams/ounce, in the range of from about 2 grams/ounce to about 5.5 grams/ounce, in the range of from about 2 grams/ounce to about 5 grams/ounce, in the range of from about 2 grams/ounce to about 4.5 grams/ounce, in the range of from about 2 grams/ounce to about 4 grams/ounce, in the range of from about 2 grams/ounce to about 3.5 grams/ounce, in the range of from about 2 grams/ounce to about 3 grams/ounce, in the range of from about 2 grams/ounce to about 2.5 grams/ounce, in the range of from about 2.5 grams/ounce to about 16 grams/ounce, in the range of from about 2.5 grams/ounce to about 15.5 grams/ounce, in the range of from about 2.5 grams/ounce to about 15 grams/ounce, in the range of from about 2.5 grams/ounce to about 14.5 grams/ounce, in the range of from about 2.5 grams/ounce to about 14 grams/ounce, in the range of from about 2.5 grams/ounce to about 13.5 grams/ounce, in the range of from about 2.5 grams/ounce to about 13 grams/ounce, in the range of from about 2.5 grams/ounce to about 12.5 grams/ounce, in the range of from about 2.5 grams/ounce to about 12 grams/ounce, in the range of from about 2.5 grams/ounce to about 11.5 grams/ounce, in the range of from about 2.5 grams/ounce to about 11 grams/ounce, in the range of from about 2.5 grams/ounce to about 10.5 grams/ounce, in the range of from about 2.5 grams/ounce to about 10 grams/ounce, in the range of from about 2.5 grams/ounce to about 9.5 grams/ounce, in the range of from about 2.5 grams/ounce to about 9 grams/ounce, in the range of from about 2.5 grams/ounce to about 8.5 grams/ounce, in the range of from about 2.5 grams/ounce to about 8 grams/ounce, in the range of from about 2.5 grams/ounce to about 7.5 grams/ounce, in the range of from about 2.5 grams/ounce to about 7 grams/ounce, in the range of from about 2.5 grams/ounce to about 6.5 grams/ounce, in the range of from about 2.5 grams/ounce to about 6 grams/ounce, in the range of from about 2.5 grams/ounce to about 5.5 grams/ounce, in the range of from about 2.5 grams/ounce to about 5 grams/ounce, in the range of from about 2.5 grams/ounce to about 4.5 grams/ounce, in the range of from about 2.5 grams/ounce to about 4 grams/ounce, in the range of from about 2.5 grams/ounce to about 3.5 grams/ounce, in the range of from about 2.5 grams/ounce to about 3 grams/ounce, in the range of from about 3 grams/ounce to about 16 grams/ounce, in the range of from about 3 grams/ounce to about 15.5 grams/ounce, in the range of from about 3 grams/ounce to about 15 grams/ounce, in the range of from about 3 grams/ounce to about 14.5 grams/ounce, in the range of from about 3 grams/ounce to about 14 grams/ounce, in the range of from about 3 grams/ounce to about 13.5 grams/ounce, in the range of from about 3 grams/ounce to about 13 grams/ounce, in the range of from about 3 grams/ounce to about 12.5 grams/ounce, in the range of from about 3 grams/ounce to about 12 grams/ounce, in the range of from about 3 grams/ounce to about 11.5 grams/ounce, in the range of from about 3 grams/ounce to about 11 grams/ounce, in the range of from about 3 grams/ounce to about 10.5 grams/ounce, in the range of from about 3 grams/ounce to about 10 grams/ounce, in the range of from about 3 grams/ounce to about 9.5 grams/ounce, in the range of from about 3 grams/ounce to about 9 grams/ounce, in the range of from about 3 grams/ounce to about 8.5 grams/ounce, in the range of from about 3 grams/ounce to about 8 grams/ounce, in the range of from about 3 grams/ounce to about 7.5 grams/ounce, in the range of from about 3 grams/ounce to about 7 grams/ounce, in the range of from about 3 grams/ounce to about 6.5 grams/ounce, in the range of from about 3 grams/ounce to about 6 grams/ounce, in the range of from about 3 grams/ounce to about 5.5 grams/ounce, in the range of from about 3 grams/ounce to about 5 grams/ounce, in the range of from about 3 grams/ounce to about 4.5 grams/ounce, in the range of from about 3 grams/ounce to about 4 grams/ounce, in the range of from about 3 grams/ounce to about 3.5 grams/ounce, in the range of from about 3.5 grams/ounce to about 16 grams/ounce, in the range of from about 3.5 grams/ounce to about 15.5 grams/ounce, in the range of from about 3.5 grams/ounce to about 15 grams/ounce, in the range of from about 3.5 grams/ounce to about 14.5 grams/ounce, in the range of from about 3.5 grams/ounce to about 14 grams/ounce, in the range of from about 3.5 grams/ounce to about 13.5 grams/ounce, in the range of from about 3.5 grams/ounce to about 13 grams/ounce, in the range of from about 3.5 grams/ounce to about 12.5 grams/ounce, in the range of from about 3.5 grams/ounce to about 12 grams/ounce, in the range of from about 3.5 grams/ounce to about 11.5 grams/ounce, in the range of from about 3.5 grams/ounce to about 11 grams/ounce, in the range of from about 3.5 grams/ounce to about 10.5 grams/ounce, in the range of from about 3.5 grams/ounce to about 10 grams/ounce, in the range of from about 3.5 grams/ounce to about 9.5 grams/ounce, in the range of from about 3.5 grams/ounce to about 9 grams/ounce, in the range of from about 3.5 grams/ounce to about 8.5 grams/ounce, in the range of from about 3.5 grams/ounce to about 8 grams/ounce, in the range of from about 3.5 grams/ounce to about 7.5 grams/ounce, in the range of from about 3.5 grams/ounce to about 7 grams/ounce, in the range of from about 3.5 grams/ounce to about 6.5 grams/ounce, in the range of from about 3.5 grams/ounce to about 6 grams/ounce, in the range of from about 3.5 grams/ounce to about 5.5 grams/ounce, in the range of from about 3.5 grams/ounce to about 5 grams/ounce, in the range of from about 3.5 grams/ounce to about 4.5 grams/ounce, in the range of from about 3.5 grams/ounce to about 4 grams/ounce, in the range of from about 4 grams/ounce to about 16 grams/ounce, in the range of from about 4 grams/ounce to about 15.5 grams/ounce, in the range of from about 4 grams/ounce to about 15 grams/ounce, in the range of from about 4 grams/ounce to about 14.5 grams/ounce, in the range of from about 4 grams/ounce to about 14 grams/ounce, in the range of from about 4 grams/ounce to about 13.5 grams/ounce, in the range of from about 4 grams/ounce to about 13 grams/ounce, in the range of from about 4 grams/ounce to about 12.5 grams/ounce, in the range of from about 4 grams/ounce to about 12 grams/ounce, in the range of from about 4 grams/ounce to about 11.5 grams/ounce, in the range of from about 4 grams/ounce to about 11 grams/ounce, in the range of from about 4 grams/ounce to about 10.5 grams/ounce, in the range of from about 4 grams/ounce to about 10 grams/ounce, in the range of from about 4 grams/ounce to about 9.5 grams/ounce, in the range of from about 4 grams/ounce to about 9 grams/ounce, in the range of from about 4 grams/ounce to about 8.5 grams/ounce, in the range of from about 4 grams/ounce to about 8 grams/ounce, in the range of from about 4 grams/ounce to about 7.5 grams/ounce, in the range of from about 4 grams/ounce to about 7 grams/ounce, in the range of from about 4 grams/ounce to about 6.5 grams/ounce, in the range of from about 4 grams/ounce to about 6 grams/ounce, in the range of from about 4 grams/ounce to about 5.5 grams/ounce, in the range of from about 4 grams/ounce to about 5 grams/ounce, in the range of from about 4 grams/ounce to about 4.5 grams/ounce, in the range of from about 4.5 grams/ounce to about 16 grams/ounce, in the range of from about 4.5 grams/ounce to about 15.5 grams/ounce, in the range of from about 4.5 grams/ounce to about 15 grams/ounce, in the range of from about 4.5 grams/ounce to about 14.5 grams/ounce, in the range of from about 4.5 grams/ounce to about 14 grams/ounce, in the range of from about 4.5 grams/ounce to about 13.5 grams/ounce, in the range of from about 4.5 grams/ounce to about 13 grams/ounce, in the range of from about 4.5 grams/ounce to about 12.5 grams/ounce, in the range of from about 4.5 grams/ounce to about 12 grams/ounce, in the range of from about 4.5 grams/ounce to about 11.5 grams/ounce, in the range of from about 4.5 grams/ounce to about 11 grams/ounce, in the range of from about 4.5 grams/ounce to about 10.5 grams/ounce, in the range of from about 4.5 grams/ounce to about 10 grams/ounce, in the range of from about 4.5 grams/ounce to about 9.5 grams/ounce, in the range of from about 4.5 grams/ounce to about 9 grams/ounce, in the range of from about 4.5 grams/ounce to about 8.5 grams/ounce, in the range of from about 4.5 grams/ounce to about 8 grams/ounce, in the range of from about 4.5 grams/ounce to about 7.5 grams/ounce, in the range of from about 4.5 grams/ounce to about 7 grams/ounce, in the range of from about 4.5 grams/ounce to about 6.5 grams/ounce, in the range of from about 4.5 grams/ounce to about 6 grams/ounce, in the range of from about 4.5 grams/ounce to about 5.5 grams/ounce, in the range of from about 4.5 grams/ounce to about 5 grams/ounce, in the range of from about 5 grams/ounce to about 16 grams/ounce, in the range of from about 5 grams/ounce to about 15.5 grams/ounce, in the range of from about 5 grams/ounce to about 15 grams/ounce, in the range of from about 5 grams/ounce to about 14.5 grams/ounce, in the range of from about 5 grams/ounce to about 14 grams/ounce, in the range of from about 5 grams/ounce to about 13.5 grams/ounce, in the range of from about 5 grams/ounce to about 13 grams/ounce, in the range of from about 5 grams/ounce to about 12.5 grams/ounce, in the range of from about 5 grams/ounce to about 12 grams/ounce, in the range of from about 5 grams/ounce to about 11.5 grams/ounce, in the range of from about 5 grams/ounce to about 11 grams/ounce, in the range of from about 5 grams/ounce to about 10.5 grams/ounce, in the range of from about 5 grams/ounce to about 10 grams/ounce, in the range of from about 5 grams/ounce to about 9.5 grams/ounce, in the range of from about 5 grams/ounce to about 9 grams/ounce, in the range of from about 5 grams/ounce to about 8.5 grams/ounce, in the range of from about 5 grams/ounce to about 8 grams/ounce, in the range of from about 5 grams/ounce to about 7.5 grams/ounce, in the range of from about 5 grams/ounce to about 7 grams/ounce, in the range of from about 5 grams/ounce to about 6.5 grams/ounce, in the range of from about 5 grams/ounce to about 6 grams/ounce, in the range of from about 5 grams/ounce to about 5.5 grams/ounce, in the range of from about 5.5 grams/ounce to about 16 grams/ounce, in the range of from about 5.5 grams/ounce to about 15.5 grams/ounce, in the range of from about 5.5 grams/ounce to about 15 grams/ounce, in the range of from about 5.5 grams/ounce to about 14.5 grams/ounce, in the range of from about 5.5 grams/ounce to about 14 grams/ounce, in the range of from about 5.5 grams/ounce to about 13.5 grams/ounce, in the range of from about 5.5 grams/ounce to about 13 grams/ounce, in the range of from about 5.5 grams/ounce to about 12.5 grams/ounce, in the range of from about 5.5 grams/ounce to about 12 grams/ounce, in the range of from about 5.5 grams/ounce to about 11.5 grams/ounce, in the range of from about 5.5 grams/ounce to about 11 grams/ounce, in the range of from about 5.5 grams/ounce to about 10.5 grams/ounce, in the range of from about 5.5 grams/ounce to about 10 grams/ounce, in the range of from about 5.5 grams/ounce to about 9.5 grams/ounce, in the range of from about 5.5 grams/ounce to about 9 grams/ounce, in the range of from about 5.5 grams/ounce to about 8.5 grams/ounce, in the range of from about 5.5 grams/ounce to about 8 grams/ounce, in the range of from about 5.5 grams/ounce to about 7.5 grams/ounce, in the range of from about 5.5 grams/ounce to about 7 grams/ounce, in the range of from about 5.5 grams/ounce to about 6.5 grams/ounce, in the range of from about 5.5 grams/ounce to about 6 grams/ounce, in the range of from about 6 grams/ounce to about 16 grams/ounce, in the range of from about 6 grams/ounce to about 15.5 grams/ounce, in the range of from about 6 grams/ounce to about 15 grams/ounce, in the range of from about 6 grams/ounce to about 14.5 grams/ounce, in the range of from about 6 grams/ounce to about 14 grams/ounce, in the range of from about 6 grams/ounce to about 13.5 grams/ounce, in the range of from about 6 grams/ounce to about 13 grams/ounce, in the range of from about 6 grams/ounce to about 12.5 grams/ounce, in the range of from about 6 grams/ounce to about 12 grams/ounce, in the range of from about 6 grams/ounce to about 11.5 grams/ounce, in the range of from about 6 grams/ounce to about 11 grams/ounce, in the range of from about 6 grams/ounce to about 10.5 grams/ounce, in the range of from about 6 grams/ounce to about 10 grams/ounce, in the range of from about 6 grams/ounce to about 9.5 grams/ounce, in the range of from about 6 grams/ounce to about 9 grams/ounce, in the range of from about 6 grams/ounce to about 8.5 grams/ounce, in the range of from about 6 grams/ounce to about 8 grams/ounce, in the range of from about 6 grams/ounce to about 7.5 grams/ounce, in the range of from about 6 grams/ounce to about 7 grams/ounce, in the range of from about 6 grams/ounce to about 6.5 grams/ounce, in the range of from about 6.5 grams/ounce to about 16 grams/ounce, in the range of from about 6.5 grams/ounce to about 15.5 grams/ounce, in the range of from about 6.5 grams/ounce to about 15 grams/ounce, in the range of from about 6.5 grams/ounce to about 14.5 grams/ounce, in the range of from about 6.5 grams/ounce to about 14 grams/ounce, in the range of from about 6.5 grams/ounce to about 13.5 grams/ounce, in the range of from about 6.5 grams/ounce to about 13 grams/ounce, in the range of from about 6.5 grams/ounce to about 12.5 grams/ounce, in the range of from about 6.5 grams/ounce to about 12 grams/ounce, in the range of from about 6.5 grams/ounce to about 11.5 grams/ounce, in the range of from about 6.5 grams/ounce to about 11 grams/ounce, in the range of from about 6.5 grams/ounce to about 10.5 grams/ounce, in the range of from about 6.5 grams/ounce to about 10 grams/ounce, in the range of from about 6.5 grams/ounce to about 9.5 grams/ounce, in the range of from about 6.5 grams/ounce to about 9 grams/ounce, in the range of from about 6.5 grams/ounce to about 8.5 grams/ounce, in the range of from about 6.5 grams/ounce to about 8 grams/ounce, in the range of from about 6.5 grams/ounce to about 7.5 grams/ounce, in the range of from about 6.5 grams/ounce to about 7 grams/ounce, in the range of from about 7 grams/ounce to about 16 grams/ounce, in the range of from about 7 grams/ounce to about 15.5 grams/ounce, in the range of from about 7 grams/ounce to about 15 grams/ounce, in the range of from about 7 grams/ounce to about 14.5 grams/ounce, in the range of from about 7 grams/ounce to about 14 grams/ounce, in the range of from about 7 grams/ounce to about 13.5 grams/ounce, in the range of from about 7 grams/ounce to about 13 grams/ounce, in the range of from about 7 grams/ounce to about 12.5 grams/ounce, in the range of from about 7 grams/ounce to about 12 grams/ounce, in the range of from about 7 grams/ounce to about 11.5 grams/ounce, in the range of from about 7 grams/ounce to about 11 grams/ounce, in the range of from about 7 grams/ounce to about 10.5 grams/ounce, in the range of from about 7 grams/ounce to about 10 grams/ounce, in the range of from about 7 grams/ounce to about 9.5 grams/ounce, in the range of from about 7 grams/ounce to about 9 grams/ounce, in the range of from about 7 grams/ounce to about 8.5 grams/ounce, in the range of from about 7 grams/ounce to about 8 grams/ounce, in the range of from about 7 grams/ounce to about 7.5 grams/ounce, in the range of from about 7.5 grams/ounce to about 16 grams/ounce, in the range of from about 7.5 grams/ounce to about 15.5 grams/ounce, in the range of from about 7.5 grams/ounce to about 15 grams/ounce, in the range of from about 7.5 grams/ounce to about 14.5 grams/ounce, in the range of from about 7.5 grams/ounce to about 14 grams/ounce, in the range of from about 7.5 grams/ounce to about 13.5 grams/ounce, in the range of from about 7.5 grams/ounce to about 13 grams/ounce, in the range of from about 7.5 grams/ounce to about 12.5 grams/ounce, in the range of from about 7.5 grams/ounce to about 12 grams/ounce, in the range of from about 7.5 grams/ounce to about 11.5 grams/ounce, in the range of from about 7.5 grams/ounce to about 11 grams/ounce, in the range of from about 7.5 grams/ounce to about 10.5 grams/ounce, in the range of from about 7.5 grams/ounce to about 10 grams/ounce, in the range of from about 7.5 grams/ounce to about 9.5 grams/ounce, in the range of from about 7.5 grams/ounce to about 9 grams/ounce, in the range of from about 7.5 grams/ounce to about 8.5 grams/ounce, in the range of from about 7.5 grams/ounce to about 8 grams/ounce, in the range of from about 8 grams/ounce to about 16 grams/ounce, in the range of from about 8 grams/ounce to about 15.5 grams/ounce, in the range of from about 8 grams/ounce to about 15 grams/ounce, in the range of from about 8 grams/ounce to about 14.5 grams/ounce, in the range of from about 8 grams/ounce to about 14 grams/ounce, in the range of from about 8 grams/ounce to about 13.5 grams/ounce, in the range of from about 8 grams/ounce to about 13 grams/ounce, in the range of from about 8 grams/ounce to about 12.5 grams/ounce, in the range of from about 8 grams/ounce to about 12 grams/ounce, in the range of from about 8 grams/ounce to about 11.5 grams/ounce, in the range of from about 8 grams/ounce to about 11 grams/ounce, in the range of from about 8 grams/ounce to about 10.5 grams/ounce, in the range of from about 8 grams/ounce to about 10 grams/ounce, in the range of from about 8 grams/ounce to about 9.5 grams/ounce, in the range of from about 8 grams/ounce to about 9 grams/ounce, in the range of from about 8 grams/ounce to about 8.5 grams/ounce, in the range of from about 8.5 grams/ounce to about 16 grams/ounce, in the range of from about 8.5 grams/ounce to about 15.5 grams/ounce, in the range of from about 8.5 grams/ounce to about 15 grams/ounce, in the range of from about 8.5 grams/ounce to about 14.5 grams/ounce, in the range of from about 8.5 grams/ounce to about 14 grams/ounce, in the range of from about 8.5 grams/ounce to about 13.5 grams/ounce, in the range of from about 8.5 grams/ounce to about 13 grams/ounce, in the range of from about 8.5 grams/ounce to about 12.5 grams/ounce, in the range of from about 8.5 grams/ounce to about 12 grams/ounce, in the range of from about 8.5 grams/ounce to about 11.5 grams/ounce, in the range of from about 8.5 grams/ounce to about 11 grams/ounce, in the range of from about 8.5 grams/ounce to about 10.5 grams/ounce, in the range of from about 8.5 grams/ounce to about 10 grams/ounce, in the range of from about 8.5 grams/ounce to about 9.5 grams/ounce, in the range of from about 8.5 grams/ounce to about 9 grams/ounce, in the range of from about 9 grams/ounce to about 16 grams/ounce, in the range of from about 9 grams/ounce to about 15.5 grams/ounce, in the range of from about 9 grams/ounce to about 15 grams/ounce, in the range of from about 9 grams/ounce to about 14.5 grams/ounce, in the range of from about 9 grams/ounce to about 14 grams/ounce, in the range of from about 9 grams/ounce to about 13.5 grams/ounce, in the range of from about 9 grams/ounce to about 13 grams/ounce, in the range of from about 9 grams/ounce to about 12.5 grams/ounce, in the range of from about 9 grams/ounce to about 12 grams/ounce, in the range of from about 9 grams/ounce to about 11.5 grams/ounce, in the range of from about 9 grams/ounce to about 11 grams/ounce, in the range of from about 9 grams/ounce to about 10.5 grams/ounce, in the range of from about 9 grams/ounce to about 10 grams/ounce, in the range of from about 9 grams/ounce to about 9.5 grams/ounce, in the range of from about 9.5 grams/ounce to about 16 grams/ounce, in the range of from about 9.5 grams/ounce to about 15.5 grams/ounce, in the range of from about 9.5 grams/ounce to about 15 grams/ounce, in the range of from about 9.5 grams/ounce to about 14.5 grams/ounce, in the range of from about 9.5 grams/ounce to about 14 grams/ounce, in the range of from about 9.5 grams/ounce to about 13.5 grams/ounce, in the range of from about 9.5 grams/ounce to about 13 grams/ounce, in the range of from about 9.5 grams/ounce to about 12.5 grams/ounce, in the range of from about 9.5 grams/ounce to about 12 grams/ounce, in the range of from about 9.5 grams/ounce to about 11.5 grams/ounce, in the range of from about 9.5 grams/ounce to about 11 grams/ounce, in the range of from about 9.5 grams/ounce to about 10.5 grams/ounce, in the range of from about 9.5 grams/ounce to about 10 grams/ounce, in the range of from about 10 grams/ounce to about 16 grams/ounce, in the range of from about 10 grams/ounce to about 15.5 grams/ounce, in the range of from about 10 grams/ounce to about 15 grams/ounce, in the range of from about 10 grams/ounce to about 14.5 grams/ounce, in the range of from about 10 grams/ounce to about 14 grams/ounce, in the range of from about 10 grams/ounce to about 13.5 grams/ounce, in the range of from about 10 grams/ounce to about 13 grams/ounce, in the range of from about 10 grams/ounce to about 12.5 grams/ounce, in the range of from about 10 grams/ounce to about 12 grams/ounce, in the range of from about 10 grams/ounce to about 11.5 grams/ounce, in the range of from about 10 grams/ounce to about 11 grams/ounce, in the range of from about 10 grams/ounce to about 10.5 grams/ounce, in the range of from about 10.5 grams/ounce to about 16 grams/ounce, in the range of from about 10.5 grams/ounce to about 15.5 grams/ounce, in the range of from about 10.5 grams/ounce to about 15 grams/ounce, in the range of from about 10.5 grams/ounce to about 14.5 grams/ounce, in the range of from about 10.5 grams/ounce to about 14 grams/ounce, in the range of from about 10.5 grams/ounce to about 13.5 grams/ounce, in the range of from about 10.5 grams/ounce to about 13 grams/ounce, in the range of from about 10.5 grams/ounce to about 12.5 grams/ounce, in the range of from about 10.5 grams/ounce to about 12 grams/ounce, in the range of from about 10.5 grams/ounce to about 11.5 grams/ounce, in the range of from about 10.5 grams/ounce to about 11 grams/ounce, in the range of from about 11 grams/ounce to about 16 grams/ounce, in the range of from about 11 grams/ounce to about 15.5 grams/ounce, in the range of from about 11 grams/ounce to about 15 grams/ounce, in the range of from about 11 grams/ounce to about 14.5 grams/ounce, in the range of from about 11 grams/ounce to about 14 grams/ounce, in the range of from about 11 grams/ounce to about 13.5 grams/ounce, in the range of from about 11 grams/ounce to about 13 grams/ounce, in the range of from about 11 grams/ounce to about 12.5 grams/ounce, in the range of from about 11 grams/ounce to about 12 grams/ounce, in the range of from about 11 grams/ounce to about 11.5 grams/ounce, in the range of from about 11.5 grams/ounce to about 16 grams/ounce, in the range of from about 11.5 grams/ounce to about 15.5 grams/ounce, in the range of from about 11.5 grams/ounce to about 15 grams/ounce, in the range of from about 11.5 grams/ounce to about 14.5 grams/ounce, in the range of from about 11.5 grams/ounce to about 14 grams/ounce, in the range of from about 11.5 grams/ounce to about 13.5 grams/ounce, in the range of from about 11.5 grams/ounce to about 13 grams/ounce, in the range of from about 11.5 grams/ounce to about 12.5 grams/ounce, in the range of from about 11.5 grams/ounce to about 12 grams/ounce, in the range of from about 12 grams/ounce to about 16 grams/ounce, in the range of from about 12 grams/ounce to about 15.5 grams/ounce, in the range of from about 12 grams/ounce to about 15 grams/ounce, in the range of from about 12 grams/ounce to about 14.5 grams/ounce, in the range of from about 12 grams/ounce to about 14 grams/ounce, in the range of from about 12 grams/ounce to about 13.5 grams/ounce, in the range of from about 12 grams/ounce to about 13 grams/ounce, in the range of from about 12 grams/ounce to about 12.5 grams/ounce, in the range of from about 12.5 grams/ounce to about 16 grams/ounce, in the range of from about 12.5 grams/ounce to about 15.5 grams/ounce, in the range of from about 12.5 grams/ounce to about 15 grams/ounce, in the range of from about 12.5 grams/ounce to about 14.5 grams/ounce, in the range of from about 12.5 grams/ounce to about 14 grams/ounce, in the range of from about 12.5 grams/ounce to about 13.5 grams/ounce, in the range of from about 12.5 grams/ounce to about 13 grams/ounce, in the range of from about 13 grams/ounce to about 16 grams/ounce, in the range of from about 13 grams/ounce to about 15.5 grams/ounce, in the range of from about 13 grams/ounce to about 15 grams/ounce, in the range of from about 13 grams/ounce to about 14.5 grams/ounce, in the range of from about 13 grams/ounce to about 14 grams/ounce, in the range of from about 13 grams/ounce to about 13.5 grams/ounce, in the range of from about 13.5 grams/ounce to about 16 grams/ounce, in the range of from about 13.5 grams/ounce to about 15.5 grams/ounce, in the range of from about 13.5 grams/ounce to about 15 grams/ounce, in the range of from about 13.5 grams/ounce to about 14.5 grams/ounce, in the range of from about 13.5 grams/ounce to about 14 grams/ounce, in the range of from about 14 grams/ounce to about 16 grams/ounce, in the range of from about 14 grams/ounce to about 15.5 grams/ounce, in the range of from about 14 grams/ounce to about 15 grams/ounce, in the range of from about 14 grams/ounce to about 14.5 grams/ounce, in the range of from about 14.5 grams/ounce to about 16 grams/ounce, in the range of from about 14.5 grams/ounce to about 15.5 grams/ounce, in the range of from about 14.5 grams/ounce to about 15 grams/ounce, in the range of from about 15 grams/ounce to about 16 grams/ounce, in the range of from about 15 grams/ounce to about 15.5 grams/ounce, in the range of from about 15.5 grams/ounce to about 16 grams/ounce, about 16 grams/ounce, about 15.5 grams/ounce, about 15 grams/ounce, about 14.5 grams/ounce, about 14 grams/ounce, about 13.5 grams/ounce, about 13 grams/ounce, about 12.5 grams/ounce, about 12 grams/ounce, about 11.5 grams/ounce, about 11 grams/ounce, about 10.5 grams/ounce, about 10 grams/ounce, about 9.5 grams/ounce, about 9 grams/ounce, about 8.5 grams/ounce, about 8 grams/ounce, about 7.5 grams/ounce, about 7 grams/ounce, about 6.5 grams/ounce, about 6 grams/ounce, about 5.5 grams/ounce, about 5 grams/ounce, about 4.5 grams/ounce, about 4 grams/ounce, about 3.5 grams/ounce, about 3 grams/ounce, about 2.5 grams/ounce, about 2 grams/ounce, about 1.5 grams/ounce, about 1 grams/ounce, about 0.5 grams/ounce, and in each case 1 ounce equals 28,4 grams.

The terms "oil" and "fat" are used interchangeably herein.

As used herein, "solid comestible component" refers to raw and semi-processed solid, edible compositions for human consumption. Raw compositions have not been subjected to any processing (i.e. flavoring, coloring, heating, drying, frying, baking, mixing, etc.), while semi-processed compositions are those that have been at least somewhat processed and may be subjected to further processing in order to yield final products. Representative examples of a solid comestible component usable in the present invention include, but are not limited to, a solid starch component, a solid fiber component, a solid carbohydrate component, a solid protein component, and combinations thereof. The food product of the present invention may include at least one type of solid comestible component selected from the group consisting of a solid starch component, a solid fiber component, a solid carbohydrate component, a solid protein component, and a combination thereof. In some embodiments, the food product may include combinations of two or more types of solid comestible components, including combinations of any two or more, three or more, four or more, etc. of the types of solid comestible components described herein.

As used herein, "solid starch component" refers to any solid starch or solid starch-based material. Examples of solid starch components usable in the present invention include, but are not limited to, tubers (stem or root), cereal grains, pulses, vegetables, fruits, and combinations thereof. A wide variety of solid starch components are commercially available. Representative examples of the solid starch component usable in the present invention include, but are not limited to, potato, sweet potato, yam, corn, waxy corn, oats, wheat, sorghum, rice, millet, amaranth, kamut, rye, barley, waxy rice, kidney beans, pinto beans, lentils, chickpeas, tapioca, yucca, taro, beet, carrot, arrowroot, cassava, parsnip, Jerusalem artichoke, triticale, buckwheat, quinoa, banana, plantain, apple, strawberry, masa, rutabaga, turnip, jicama, garlic, onion, shallot, kale, spinach, kohlrabi, soybean, pepper, pea, and combinations thereof. The solid starch component is not limited to any particular variety or physiological or biological make-up. In some embodiments, the solid starch component may comprise a commercially available solid starch component such as those discussed in U.S. Pat. Nos. 4,152,462; 4,537,786; 4,689,238; 4,756,916; 4,767,630; 4,767,633; 4,869,911; 4,879,122; 4,933,194; 4,933,199; 5,275,830; 5,275,831; 6,303,163; 6,375,998; 6,387,436; 6,472,004; 6,569,481; 6,610,335; 6,685,976; 6,821,537; 6,827,956; 6,905,718; 6,951,659; 7,141,257; 7,169,422; 7,258,879; 7,452,560; 7,695,746; 7,867,533; 7,947,320; 7,993,693; 8,080,273; 8,110,240; 8,124,160; and 8,158,175.

The food product of the present invention may include at least one type of solid starch component. In some embodiments, the food product may include combinations of two or more types of solid starch components, including combinations of any two or more, three or more, four or more, five or more, etc. of the types of solid starch components described herein.

In some embodiments, the food product may include one type of solid starch component. For example, the food product may include potato, sweet potato, yam, corn, waxy corn, oats, wheat, sorghum, rice, millet, amaranth, kamut, rye, barley, waxy rice, kidney beans, pinto beans, lentils, chickpeas, tapioca, yucca, taro, beet, carrot, arrowroot, cassava, parsnip, Jerusalem artichoke, triticale, buckwheat, quinoa, banana, plantain, apple, strawberry, masa, rutabaga, turnip, jicama, garlic, onion, shallot, kale, spinach, kohlrabi, soybean, pepper, or pea.

In other embodiments, the food product may include two types of solid starch components. For example, the food product may include potato and sweet potato, potato and yam, potato and corn, potato and waxy corn, potato and oats, potato and wheat, potato and sorghum, potato and rice, potato and millet, potato and amaranth, potato and kamut, potato and rye, potato and barley, potato and waxy rice, potato and kidney beans, potato and pinto beans, potato and lentils, potato and chickpeas, potato and tapioca, potato and yucca, potato and taro, potato and beet, potato and carrot, potato and arrowroot, potato and cassava, potato and parsnip, potato and Jerusalem artichoke, potato and triticale, potato and buckwheat, potato and quinoa, potato and banana, potato and plantain, potato and apple, potato and strawberry, potato and masa, potato and rutabaga, potato and turnip, potato and jicama, potato and garlic, potato and onion, potato and shallot, potato and kale, potato and spinach, potato and kohlrabi, potato and soybean, potato and pepper, potato and pea, etc.

In still other embodiments, the food product may include three or more types of solid starch components. For example, the food product may include potato, sweet potato and yam; potato, sweet potato and corn; potato, sweet potato and waxy corn; potato, sweet potato and oats; potato, sweet potato and wheat; potato, sweet potato and sorghum; potato, sweet potato and rice; potato, sweet potato and millet; potato, sweet potato and amaranth; potato, sweet potato and kamut; potato, sweet potato and rye; potato, sweet potato and barley; potato, sweet potato and waxy rice; potato, sweet potato and kidney beans; potato, sweet potato and pinto beans; potato, sweet potato and lentils; potato, sweet potato and chickpeas; potato, sweet potato and tapioca; potato, sweet potato and yucca; potato, sweet potato and taro; potato, sweet potato and beet; potato, sweet potato and carrot; potato, sweet potato and arrowroot; potato, sweet potato and cassava; potato, sweet potato and parsnip; potato, sweet potato and Jerusalem artichoke; potato, sweet potato and triticale; potato, sweet potato and buckwheat; potato, sweet potato and quinoa; potato, sweet potato and banana; potato, sweet potato and plantain; potato, sweet potato and apple; potato, sweet potato and strawberry; potato, sweet potato and masa; potato, sweet potato and rutabaga; potato, sweet potato and turnip; potato, sweet potato and jicama; potato, sweet potato and garlic; potato, sweet potato and onion; potato, sweet potato and shallot; potato, sweet potato and kale; potato, sweet potato and spinach; potato, sweet potato and kohlrabi; potato, sweet potato and soybean; potato, sweet potato and pepper; potato, sweet potato and pea, etc.

In some embodiments, the food product includes one variety of a particular type of solid starch component. For example, the food product may comprise one variety of potato (i.e. Saturna, Lady Rosetta, Lady Clair, Hermes, Maris Piper, Erntestolz, Agria, Atlantic, Monona, Norchip, Snowden, Kennebec, Oneida, Tobique, Marfona, King Edward, Yukon Gold, Desiree, Karlena, Estima, Russet Burbank or Bintje, etc.). In other embodiments, the food product may include combinations of two or more varieties of a particular type of solid starch component, including combinations of any two or more, three or more, four or more, five or more, etc. of varieties of the particular types of solid starch components described herein. For example, the food product may include two or more varieties of potato (i.e. Saturna and Lady Rosetta, Saturna and Lady Clair, Saturna and Hermes, Saturna and Maris Piper, Saturna and Erntestolz, Saturna and Agria, Saturna and Atlantic, Saturna and Monona, Saturna and Norchip, Saturna and Snowden, Saturna and Kennebec, Saturna and Oneida, Saturna and Tobique, Saturna and Marfona, Saturna and King Edward, Saturna and Yukon Gold, Saturna and Desiree, Saturna and Karlena, Saturna and Estima, Saturna and Russet Burbank, Saturna and Bintje, etc.).

As used herein, "solid fiber component" refers to any solid fiber or solid fiber-based material. The solid fiber component may comprise soluble fiber or insoluble fiber. Examples of solid fiber components usable in the present invention include, but are not limited to, whole grains, fruits, legumes, vegetables, nuts (i.e. peanuts, cashews, almonds, walnuts, etc.) and seeds. A wide variety of solid fiber components are commercially available. The food product of the present invention may include at least one type of solid fiber component. In some embodiments, the food product may include combinations of two or more types of solid fiber components, including combinations of any two or more, three or more, four or more, five or more, etc. of the types of solid fiber components described herein.

As used herein, "solid carbohydrate component" refers to any solid carbohydrate or solid carbohydrate-based material. Examples of solid carbohydrate components usable in the present invention include, but are not limited to, whole grains, fruits, legumes, vegetables, nuts (i.e. peanuts, cashews, almonds, walnuts, etc.) and seeds. A wide variety of solid carbohydrate components are commercially available. The food product of the present invention may include at least one type of solid carbohydrate component. In some embodiments, the food product may include combinations of two or more types of solid carbohydrate components, including combinations of any two or more, three or more, four or more, five or more, etc. of the types of solid carbohydrate components described herein.

As used herein, "solid protein component" refers to any solid protein or solid protein-based material. Examples of solid protein components usable in the present invention include, but are not limited to, whole grains, fruits, legumes, vegetables, nuts (i.e. peanuts, cashews, almonds, walnuts, etc.) and seeds. A wide variety of solid protein components are commercially available. The food product of the present invention may include at least one type of solid protein component. In some embodiments, the food product may include combinations of two or more types of solid protein components, including combinations of any two or more, three or more, four or more, five or more, etc. of the types of solid protein components described herein.

The present invention is not limited to any particular pre-topical fat-emulsifier component application processing. The solid comestible component may be raw and unprocessed or semi-processed (i.e. in some embodiments, the solid comestible of the present invention may be washed, peeled, de-shelled, de-oiled, sliced, rinsed, soaked, milled, ground, blended, mixed, formed into a dough, shaped, extruded, rolled, cut, blanched, dehydrated, dewatered, rehydrated, combined with additives, heated, fried, baked, toasted, cooked, dried, seasoned, salted, colored, flavored, preserved, sterilized, or combinations thereof) prior to topical application of the fat-emulsifier component. Semi-processed solid comestible components may be subjected to any known process for producing low-oil solid comestible components. In some embodiments, the solid comestible component may comprise a commercially available solid comestible component such as those discussed in U.S. Pat. Nos. 4,152,462; 4,537,786; 4,689,238; 4,756,916; 4,767,630; 4,767,633; 4,869,911; 4,879,122; 4,933,194; 4,933,199; 5,275,830; 5,275,831; 6,303,163; 6,375,998; 6,387,436; 6,472,004; 6,569,481; 6,610,335; 6,685,976; 6,821,537; 6,827,956; 6,905,718; 6,951,659; 7,141,257; 7,169,422; 7,258,879; 7,452,560; 7,695,746; 7,867,533; 7,947,320; 7,993,693; 8,080,273; 8,110,240; 8,124,160; and 8,158,175.

The solid comestible component is not limited to any particular solid form, shape or geometry. In certain embodiments, the solid comestible component comprises at least one chip, slice, flake, crisp, pellet, stick, cluster, cracker, cake, bar, dough, composite, puff, extrudate, cereal, solid matrix, extruded solid matrix, or combination thereof. In some embodiments, the solid comestible may have a smooth surface, ridged surface, uneven surface, uniform surface, rippled surface, wavy surface, irregular surface, curved surface, porous surface, amorphous surface, pitted surface, or combination thereof. In some embodiments, the solid comestible component may comprise at least one commercially available solid comestible component such as those discussed in U.S. Pat. Nos. 4,152,462; 4,537,786; 4,689,238; 4,756,916; 4,767,630; 4,767,633; 4,869,911; 4,879,122; 4,933,194; 4,933,199; 5,275,830; 5,275,831; 6,303,163; 6,375,998; 6,387,436; 6,472,004; 6,569,481; 6,610,335; 6,685,976; 6,821,537; 6,827,956; 6,905,718; 6,951,659; 7,141,257; 7,169,422; 7,258,879; 7,452,560; 7,695,746; 7,867,533; 7,947,320; 7,993,693; 8,080,273; 8,110,240; 8,124,160; and 8,158,175.

Examples of solid comestible components usable in the present invention include, but are not limited to, baked, dehydrated, toasted or fried slices of a raw solid starch component (i.e. a raw fruit, raw tuber, raw pulse, raw vegetable, etc.), a raw solid fiber component (i.e. a raw fruit, raw legume, raw vegetable, etc.), a raw solid carbohydrate component (i.e. a raw fruit, raw legume, raw vegetable, etc.), a raw solid protein component (i.e. a raw fruit, raw legume, raw vegetable, etc.), or a combination thereof; baked, dehydrated, toasted or fried slices of a dough formed from a solid starch component, a solid fiber component, a solid carbohydrate component, a solid protein component, or a combination thereof; baked, dehydrated, toasted or fried slices cut from dough formed from a solid starch component, a solid fiber component, a solid carbohydrate component, a solid protein component, or a combination thereof; baked, dehydrated, toasted or fried snack bars comprising a solid starch component, a solid fiber component, a solid carbohydrate component, a solid protein component, or a combination thereof; baked, dehydrated, toasted or fried chips comprising a solid starch component, a solid fiber component, a solid carbohydrate component, a solid protein component, or a combination thereof; baked, dehydrated, toasted or fried crisps comprising a solid starch component, a solid fiber component, a solid carbohydrate component, a solid protein component, or a combination thereof; baked, dehydrated, toasted or fried flakes comprising a solid starch component, a solid fiber component, a solid carbohydrate component, a solid protein component, or a combination thereof; baked, dehydrated, toasted or fried pellets comprising a solid starch component, a solid fiber component, a solid carbohydrate component, a solid protein component, or a combination thereof; baked, dehydrated, toasted or fried sticks comprising a solid starch component, a solid fiber component, a solid carbohydrate component, a solid protein component, or a combination thereof; baked, dehydrated, toasted or fried clusters comprising a solid starch component, a solid fiber component, a solid carbohydrate component, a solid protein component, or a combination thereof; baked, dehydrated, toasted or fried crackers comprising a solid starch component, a solid fiber component, a solid carbohydrate component, a solid protein component, or a combination thereof; baked, dehydrated, toasted or fried snack cakes comprising a solid starch component, a solid fiber component, a solid carbohydrate component, a solid protein component, or a combination thereof; baked, dehydrated, toasted or fried puffs comprising a solid starch component, a solid fiber component, a solid carbohydrate component, a solid protein component, or a combination thereof; baked, dehydrated, toasted or fried cereal comprising a solid starch component, a solid fiber component, a solid carbohydrate component, a solid protein component, or a combination thereof; etc. In some embodiments, the solid comestible component is formed or sliced from a dough comprising granules, flour, meal, particles, powder, flakes, or combinations thereof produced from a solid starch component, a solid fiber component, a solid carbohydrate component, a solid protein component, or a combination thereof.

In accordance with the present invention, the solid comestible component has an oil content less than or equal to about 15 grams/ounce, and optionally less than or equal to about 14.5 grams/ounce, less than or equal to about 14 grams/ounce, less than or equal to about 13.5 grams/ounce, less than or equal to about 13 grams/ounce, less than or equal to about 12.5 grams/ounce, less than or equal to about 12 grams/ounce, less than or equal to about 11.5 grams/ounce, less than or equal to about 11 grams/ounce, less than or equal to about 10.5 grams/ounce, less than or equal to about 10 grams/ounce, less than or equal to about 9.5 grams/ounce, less than or equal to about 9 grams/ounce, less than or equal to about 8.5 grams/ounce, less than or equal to about 8 grams/ounce, less than or equal to about 7.5 grams/ounce, less than or equal to about 7 grams/ounce, less than or equal to about 6.5 grams/ounce, less than or equal to about 6 grams/ounce, less than or equal to about 5.5 grams/ounce, less than or equal to about 5 grams/ounce, less than or equal to about 4.5 grams/ounce, less than or equal to about 4 grams/ounce, less than or equal to about 3.5 grams/ounce, less than or equal to about 3 grams/ounce, less than or equal to about 2.5 grams/ounce, less than or equal to about 2 grams/ounce, less than or equal to about 1.5 grams/ounce, less than or equal to about 1 grams/ounce, less than or equal to about 0.5 grams/ounce, or equal to about 0 grams/ounce, and in each case 1 ounce equals 28,4 grams.

In some embodiments, the solid comestible component has an oil content in the range of from about 0 grams/ounce to about 15 grams/ounce, in the range of from about 0 grams/ounce to about 14.5 grams/ounce, in the range of from about 0 grams/ounce to about 14 grams/ounce, in the range of from about 0 grams/ounce to about 13.5 grams/ounce, in the range of from about 0 grams/ounce to about 13 grams/ounce, in the range of from about 0 grams/ounce to about 12.5 grams/ounce, in the range of from about 0 grams/ounce to about 12 grams/ounce, in the range of from about 0 grams/ounce to about 11.5 grams/ounce, in the range of from about 0 grams/ounce to about 11 grams/ounce, in the range of from about 0 grams/ounce to about 10.5 grams/ounce, in the range of from about 0 grams/ounce to about 10 grams/ounce, in the range of from about 0 grams/ounce to about 9.5 grams/ounce, in the range of from about 0 grams/ounce to about 9 grams/ounce, in the range of from about 0 grams/ounce to about 8.5 grams/ounce, in the range of from about 0 grams/ounce to about 8 grams/ounce, in the range of from about 0 grams/ounce to about 7.5 grams/ounce, in the range of from about 0 grams/ounce to about 7 grams/ounce, in the range of from about 0 grams/ounce to about 6.5 grams/ounce, in the range of from about 0 grams/ounce to about 6 grams/ounce, in the range of from about 0 grams/ounce to about 5.5 grams/ounce, in the range of from about 0 grams/ounce to about 5 grams/ounce, in the range of from about 0 grams/ounce to about 4.5 grams/ounce, in the range of from about 0 grams/ounce to about 4 grams/ounce, in the range of from about 0 grams/ounce to about 3.5 grams/ounce, in the range of from about 0 grams/ounce to about 3 grams/ounce, in the range of from about 0 grams/ounce to about 2.5 grams/ounce, in the range of from about 0 grams/ounce to about 2 grams/ounce, in the range of from about 0 grams/ounce to about 1.5 grams/ounce, in the range of from about 0 grams/ounce to about 1 grams/ounce, in the range of from about 0 grams/ounce to about 0.5 grams/ounce, in the range of from about 0.5 grams/ounce to about 15 grams/ounce, in the range of from about 0.5 grams/ounce to about 14.5 grams/ounce, in the range of from about 0.5 grams/ounce to about 14 grams/ounce, in the range of from about 0.5 grams/ounce to about 13.5 grams/ounce, in the range of from about 0.5 grams/ounce to about 13 grams/ounce, in the range of from about 0.5 grams/ounce to about 12.5 grams/ounce, in the range of from about 0.5 grams/ounce to about 12 grams/ounce, in the range of from about 0.5 grams/ounce to about 11.5 grams/ounce, in the range of from about 0.5 grams/ounce to about 11 grams/ounce, in the range of from about 0.5 grams/ounce to about 10.5 grams/ounce, in the range of from about 0.5 grams/ounce to about 10 grams/ounce, in the range of from about 0.5 grams/ounce to about 9.5 grams/ounce, in the range of from about 0.5 grams/ounce to about 9 grams/ounce, in the range of from about 0.5 grams/ounce to about 8.5 grams/ounce, in the range of from about 0.5 grams/ounce to about 8 grams/ounce, in the range of from about 0.5 grams/ounce to about 7.5 grams/ounce, in the range of from about 0.5 grams/ounce to about 7 grams/ounce, in the range of from about 0.5 grams/ounce to about 6.5 grams/ounce, in the range of from about 0.5 grams/ounce to about 6 grams/ounce, in the range of from about 0.5 grams/ounce to about 5.5 grams/ounce, in the range of from about 0.5 grams/ounce to about 5 grams/ounce, in the range of from about 0.5 grams/ounce to about 4.5 grams/ounce, in the range of from about 0.5 grams/ounce to about 4 grams/ounce, in the range of from about 0.5 grams/ounce to about 3.5 grams/ounce, in the range of from about 0.5 grams/ounce to about 3 grams/ounce, in the range of from about 0.5 grams/ounce to about 2.5 grams/ounce, in the range of from about 0.5 grams/ounce to about 2 grams/ounce, in the range of from about 0.5 grams/ounce to about 1.5 grams/ounce, in the range of from about 0.5 grams/ounce to about 1 grams/ounce, in the range of from about 1 grams/ounce to about 15 grams/ounce, in the range of from about 1 grams/ounce to about 14.5 grams/ounce, in the range of from about 1 grams/ounce to about 14 grams/ounce, in the range of from about 1 grams/ounce to about 13.5 grams/ounce, in the range of from about 1 grams/ounce to about 13 grams/ounce, in the range of from about 1 grams/ounce to about 12.5 grams/ounce, in the range of from about 1 grams/ounce to about 12 grams/ounce, in the range of from about 1 grams/ounce to about 11.5 grams/ounce, in the range of from about 1 grams/ounce to about 11 grams/ounce, in the range of from about 1 grams/ounce to about 10.5 grams/ounce, in the range of from about 1 grams/ounce to about 10 grams/ounce, in the range of from about 1 grams/ounce to about 9.5 grams/ounce, in the range of from about 1 grams/ounce to about 9 grams/ounce, in the range of from about 1 grams/ounce to about 8.5 grams/ounce, in the range of from about 1 grams/ounce to about 8 grams/ounce, in the range of from about 1 grams/ounce to about 7.5 grams/ounce, in the range of from about 1 grams/ounce to about 7 grams/ounce, in the range of from about 1 grams/ounce to about 6.5 grams/ounce, in the range of from about 1 grams/ounce to about 6 grams/ounce, in the range of from about 1 grams/ounce to about 5.5 grams/ounce, in the range of from about 1 grams/ounce to about 5 grams/ounce, in the range of from about 1 grams/ounce to about 4.5 grams/ounce, in the range of from about 1 grams/ounce to about 4 grams/ounce, in the range of from about 1 grams/ounce to about 3.5 grams/ounce, in the range of from about 1 grams/ounce to about 3 grams/ounce, in the range of from about 1 grams/ounce to about 2.5 grams/ounce, in the range of from about 1 grams/ounce to about 2 grams/ounce, in the range of from about 1 grams/ounce to about 1.5 grams/ounce, in the range of from about 1.5 grams/ounce to about 15 grams/ounce, in the range of from about 1.5 grams/ounce to about 14.5 grams/ounce, in the range of from about 1.5 grams/ounce to about 14 grams/ounce, in the range of from about 1.5 grams/ounce to about 13.5 grams/ounce, in the range of from about 1.5 grams/ounce to about 13 grams/ounce, in the range of from about 1.5 grams/ounce to about 12.5 grams/ounce, in the range of from about 1.5 grams/ounce to about 12 grams/ounce, in the range of from about 1.5 grams/ounce to about 11.5 grams/ounce, in the range of from about 1.5 grams/ounce to about 11 grams/ounce, in the range of from about 1.5 grams/ounce to about 10.5 grams/ounce, in the range of from about 1.5 grams/ounce to about 10 grams/ounce, in the range of from about 1.5 grams/ounce to about 9.5 grams/ounce, in the range of from about 1.5 grams/ounce to about 9 grams/ounce, in the range of from about 1.5 grams/ounce to about 8.5 grams/ounce, in the range of from about 1.5 grams/ounce to about 8 grams/ounce, in the range of from about 1.5 grams/ounce to about 7.5 grams/ounce, in the range of from about 1.5 grams/ounce to about 7 grams/ounce, in the range of from about 1.5 grams/ounce to about 6.5 grams/ounce, in the range of from about 1.5 grams/ounce to about 6 grams/ounce, in the range of from about 1.5 grams/ounce to about 5.5 grams/ounce, in the range of from about 1.5 grams/ounce to about 5 grams/ounce, in the range of from about 1.5 grams/ounce to about 4.5 grams/ounce, in the range of from about 1.5 grams/ounce to about 4 grams/ounce, in the range of from about 1.5 grams/ounce to about 3.5 grams/ounce, in the range of from about 1.5 grams/ounce to about 3 grams/ounce, in the range of from about 1.5 grams/ounce to about 2.5 grams/ounce, in the range of from about 1.5 grams/ounce to about 2 grams/ounce, in the range of from about 2 grams/ounce to about 15 grams/ounce, in the range of from about 2 grams/ounce to about 14.5 grams/ounce, in the range of from about 2 grams/ounce to about 14 grams/ounce, in the range of from about 2 grams/ounce to about 13.5 grams/ounce, in the range of from about 2 grams/ounce to about 13 grams/ounce, in the range of from about 2 grams/ounce to about 12.5 grams/ounce, in the range of from about 2 grams/ounce to about 12 grams/ounce, in the range of from about 2 grams/ounce to about 11.5 grams/ounce, in the range of from about 2 grams/ounce to about 11 grams/ounce, in the range of from about 2 grams/ounce to about 10.5 grams/ounce, in the range of from about 2 grams/ounce to about 10 grams/ounce, in the range of from about 2 grams/ounce to about 9.5 grams/ounce, in the range of from about 2 grams/ounce to about 9 grams/ounce, in the range of from about 2 grams/ounce to about 8.5 grams/ounce, in the range of from about 2 grams/ounce to about 8 grams/ounce, in the range of from about 2 grams/ounce to about 7.5 grams/ounce, in the range of from about 2 grams/ounce to about 7 grams/ounce, in the range of from about 2 grams/ounce to about 6.5 grams/ounce, in the range of from about 2 grams/ounce to about 6 grams/ounce, in the range of from about 2 grams/ounce to about 5.5 grams/ounce, in the range of from about 2 grams/ounce to about 5 grams/ounce, in the range of from about 2 grams/ounce to about 4.5 grams/ounce, in the range of from about 2 grams/ounce to about 4 grams/ounce, in the range of from about 2 grams/ounce to about 3.5 grams/ounce, in the range of from about 2 grams/ounce to about 3 grams/ounce, in the range of from about 2 grams/ounce to about 2.5 grams/ounce, in the range of from about 2.5 grams/ounce to about 15 grams/ounce, in the range of from about 2.5 grams/ounce to about 14.5 grams/ounce, in the range of from about 2.5 grams/ounce to about 14 grams/ounce, in the range of from about 2.5 grams/ounce to about 13.5 grams/ounce, in the range of from about 2.5 grams/ounce to about 13 grams/ounce, in the range of from about 2.5 grams/ounce to about 12.5 grams/ounce, in the range of from about 2.5 grams/ounce to about 12 grams/ounce, in the range of from about 2.5 grams/ounce to about 11.5 grams/ounce, in the range of from about 2.5 grams/ounce to about 11 grams/ounce, in the range of from about 2.5 grams/ounce to about 10.5 grams/ounce, in the range of from about 2.5 grams/ounce to about 10 grams/ounce, in the range of from about 2.5 grams/ounce to about 9.5 grams/ounce, in the range of from about 2.5 grams/ounce to about 9 grams/ounce, in the range of from about 2.5 grams/ounce to about 8.5 grams/ounce, in the range of from about 2.5 grams/ounce to about 8 grams/ounce, in the range of from about 2.5 grams/ounce to about 7.5 grams/ounce, in the range of from about 2.5 grams/ounce to about 7 grams/ounce, in the range of from about 2.5 grams/ounce to about 6.5 grams/ounce, in the range of from about 2.5 grams/ounce to about 6 grams/ounce, in the range of from about 2.5 grams/ounce to about 5.5 grams/ounce, in the range of from about 2.5 grams/ounce to about 5 grams/ounce, in the range of from about 2.5 grams/ounce to about 4.5 grams/ounce, in the range of from about 2.5 grams/ounce to about 4 grams/ounce, in the range of from about 2.5 grams/ounce to about 3.5 grams/ounce, in the range of from about 2.5 grams/ounce to about 3 grams/ounce, in the range of from about 3 grams/ounce to about 15 grams/ounce, in the range of from about 3 grams/ounce to about 14.5 grams/ounce, in the range of from about 3 grams/ounce to about 14 grams/ounce, in the range of from about 3 grams/ounce to about 13.5 grams/ounce, in the range of from about 3 grams/ounce to about 13 grams/ounce, in the range of from about 3 grams/ounce to about 12.5 grams/ounce, in the range of from about 3 grams/ounce to about 12 grams/ounce, in the range of from about 3 grams/ounce to about 11.5 grams/ounce, in the range of from about 3 grams/ounce to about 11 grams/ounce, in the range of from about 3 grams/ounce to about 10.5 grams/ounce, in the range of from about 3 grams/ounce to about 10 grams/ounce, in the range of from about 3 grams/ounce to about 9.5 grams/ounce, in the range of from about 3 grams/ounce to about 9 grams/ounce, in the range of from about 3 grams/ounce to about 8.5 grams/ounce, in the range of from about 3 grams/ounce to about 8 grams/ounce, in the range of from about 3 grams/ounce to about 7.5 grams/ounce, in the range of from about 3 grams/ounce to about 7 grams/ounce, in the range of from about 3 grams/ounce to about 6.5 grams/ounce, in the range of from about 3 grams/ounce to about 6 grams/ounce, in the range of from about 3 grams/ounce to about 5.5 grams/ounce, in the range of from about 3 grams/ounce to about 5 grams/ounce, in the range of from about 3 grams/ounce to about 4.5 grams/ounce, in the range of from about 3 grams/ounce to about 4 grams/ounce, in the range of from about 3 grams/ounce to about 3.5 grams/ounce, in the range of from about 3.5 grams/ounce to about 15 grams/ounce, in the range of from about 3.5 grams/ounce to about 14.5 grams/ounce, in the range of from about 3.5 grams/ounce to about 14 grams/ounce, in the range of from about 3.5 grams/ounce to about 13.5 grams/ounce, in the range of from about 3.5 grams/ounce to about 13 grams/ounce, in the range of from about 3.5 grams/ounce to about 12.5 grams/ounce, in the range of from about 3.5 grams/ounce to about 12 grams/ounce, in the range of from about 3.5 grams/ounce to about 11.5 grams/ounce, in the range of from about 3.5 grams/ounce to about 11 grams/ounce, in the range of from about 3.5 grams/ounce to about 10.5 grams/ounce, in the range of from about 3.5 grams/ounce to about 10 grams/ounce, in the range of from about 3.5 grams/ounce to about 9.5 grams/ounce, in the range of from about 3.5 grams/ounce to about 9 grams/ounce, in the range of from about 3.5 grams/ounce to about 8.5 grams/ounce, in the range of from about 3.5 grams/ounce to about 8 grams/ounce, in the range of from about 3.5 grams/ounce to about 7.5 grams/ounce, in the range of from about 3.5 grams/ounce to about 7 grams/ounce, in the range of from about 3.5 grams/ounce to about 6.5 grams/ounce, in the range of from about 3.5 grams/ounce to about 6 grams/ounce, in the range of from about 3.5 grams/ounce to about 5.5 grams/ounce, in the range of from about 3.5 grams/ounce to about 5 grams/ounce, in the range of from about 3.5 grams/ounce to about 4.5 grams/ounce, in the range of from about 3.5 grams/ounce to about 4 grams/ounce, in the range of from about 4 grams/ounce to about 15 grams/ounce, in the range of from about 4 grams/ounce to about 14.5 grams/ounce, in the range of from about 4 grams/ounce to about 14 grams/ounce, in the range of from about 4 grams/ounce to about 13.5 grams/ounce, in the range of from about 4 grams/ounce to about 13 grams/ounce, in the range of from about 4 grams/ounce to about 12.5 grams/ounce, in the range of from about 4 grams/ounce to about 12 grams/ounce, in the range of from about 4 grams/ounce to about 11.5 grams/ounce, in the range of from about 4 grams/ounce to about 11 grams/ounce, in the range of from about 4 grams/ounce to about 10.5 grams/ounce, in the range of from about 4 grams/ounce to about 10 grams/ounce, in the range of from about 4 grams/ounce to about 9.5 grams/ounce, in the range of from about 4 grams/ounce to about 9 grams/ounce, in the range of from about 4 grams/ounce to about 8.5 grams/ounce, in the range of from about 4 grams/ounce to about 8 grams/ounce, in the range of from about 4 grams/ounce to about 7.5 grams/ounce, in the range of from about 4 grams/ounce to about 7 grams/ounce, in the range of from about 4 grams/ounce to about 6.5 grams/ounce, in the range of from about 4 grams/ounce to about 6 grams/ounce, in the range of from about 4 grams/ounce to about 5.5 grams/ounce, in the range of from about 4 grams/ounce to about 5 grams/ounce, in the range of from about 4 grams/ounce to about 4.5 grams/ounce, in the range of from about 4.5 grams/ounce to about 15 grams/ounce, in the range of from about 4.5 grams/ounce to about 14.5 grams/ounce, in the range of from about 4.5 grams/ounce to about 14 grams/ounce, in the range of from about 4.5 grams/ounce to about 13.5 grams/ounce, in the range of from about 4.5 grams/ounce to about 13 grams/ounce, in the range of from about 4.5 grams/ounce to about 12.5 grams/ounce, in the range of from about 4.5 grams/ounce to about 12 grams/ounce, in the range of from about 4.5 grams/ounce to about 11.5 grams/ounce, in the range of from about 4.5 grams/ounce to about 11 grams/ounce, in the range of from about 4.5 grams/ounce to about 10.5 grams/ounce, in the range of from about 4.5 grams/ounce to about 10 grams/ounce, in the range of from about 4.5 grams/ounce to about 9.5 grams/ounce, in the range of from about 4.5 grams/ounce to about 9 grams/ounce, in the range of from about 4.5 grams/ounce to about 8.5 grams/ounce, in the range of from about 4.5 grams/ounce to about 8 grams/ounce, in the range of from about 4.5 grams/ounce to about 7.5 grams/ounce, in the range of from about 4.5 grams/ounce to about 7 grams/ounce, in the range of from about 4.5 grams/ounce to about 6.5 grams/ounce, in the range of from about 4.5 grams/ounce to about 6 grams/ounce, in the range of from about 4.5 grams/ounce to about 5.5 grams/ounce, in the range of from about 4.5 grams/ounce to about 5 grams/ounce, in the range of from about 5 grams/ounce to about 15 grams/ounce, in the range of from about 5 grams/ounce to about 14.5 grams/ounce, in the range of from about 5 grams/ounce to about 14 grams/ounce, in the range of from about 5 grams/ounce to about 13.5 grams/ounce, in the range of from about 5 grams/ounce to about 13 grams/ounce, in the range of from about 5 grams/ounce to about 12.5 grams/ounce, in the range of from about 5 grams/ounce to about 12 grams/ounce, in the range of from about 5 grams/ounce to about 11.5 grams/ounce, in the range of from about 5 grams/ounce to about 11 grams/ounce, in the range of from about 5 grams/ounce to about 10.5 grams/ounce, in the range of from about 5 grams/ounce to about 10 grams/ounce, in the range of from about 5 grams/ounce to about 9.5 grams/ounce, in the range of from about 5 grams/ounce to about 9 grams/ounce, in the range of from about 5 grams/ounce to about 8.5 grams/ounce, in the range of from about 5 grams/ounce to about 8 grams/ounce, in the range of from about 5 grams/ounce to about 7.5 grams/ounce, in the range of from about 5 grams/ounce to about 7 grams/ounce, in the range of from about 5 grams/ounce to about 6.5 grams/ounce, in the range of from about 5 grams/ounce to about 6 grams/ounce, in the range of from about 5 grams/ounce to about 5.5 grams/ounce, in the range of from about 5.5 grams/ounce to about 15 grams/ounce, in the range of from about 5.5 grams/ounce to about 14.5 grams/ounce, in the range of from about 5.5 grams/ounce to about 14 grams/ounce, in the range of from about 5.5 grams/ounce to about 13.5 grams/ounce, in the range of from about 5.5 grams/ounce to about 13 grams/ounce, in the range of from about 5.5 grams/ounce to about 12.5 grams/ounce, in the range of from about 5.5 grams/ounce to about 12 grams/ounce, in the range of from about 5.5 grams/ounce to about 11.5 grams/ounce, in the range of from about 5.5 grams/ounce to about 11 grams/ounce, in the range of from about 5.5 grams/ounce to about 10.5 grams/ounce, in the range of from about 5.5 grams/ounce to about 10 grams/ounce, in the range of from about 5.5 grams/ounce to about 9.5 grams/ounce, in the range of from about 5.5 grams/ounce to about 9 grams/ounce, in the range of from about 5.5 grams/ounce to about 8.5 grams/ounce, in the range of from about 5.5 grams/ounce to about 8 grams/ounce, in the range of from about 5.5 grams/ounce to about 7.5 grams/ounce, in the range of from about 5.5 grams/ounce to about 7 grams/ounce, in the range of from about 5.5 grams/ounce to about 6.5 grams/ounce, in the range of from about 5.5 grams/ounce to about 6 grams/ounce, in the range of from about 6 grams/ounce to about 15 grams/ounce, in the range of from about 6 grams/ounce to about 14.5 grams/ounce, in the range of from about 6 grams/ounce to about 14 grams/ounce, in the range of from about 6 grams/ounce to about 13.5 grams/ounce, in the range of from about 6 grams/ounce to about 13 grams/ounce, in the range of from about 6 grams/ounce to about 12.5 grams/ounce, in the range of from about 6 grams/ounce to about 12 grams/ounce, in the range of from about 6 grams/ounce to about 11.5 grams/ounce, in the range of from about 6 grams/ounce to about 11 grams/ounce, in the range of from about 6 grams/ounce to about 10.5 grams/ounce, in the range of from about 6 grams/ounce to about 10 grams/ounce, in the range of from about 6 grams/ounce to about 9.5 grams/ounce, in the range of from about 6 grams/ounce to about 9 grams/ounce, in the range of from about 6 grams/ounce to about 8.5 grams/ounce, in the range of from about 6 grams/ounce to about 8 grams/ounce, in the range of from about 6 grams/ounce to about 7.5 grams/ounce, in the range of from about 6 grams/ounce to about 7 grams/ounce, in the range of from about 6 grams/ounce to about 6.5 grams/ounce, in the range of from about 6.5 grams/ounce to about 15 grams/ounce, in the range of from about 6.5 grams/ounce to about 14.5 grams/ounce, in the range of from about 6.5 grams/ounce to about 14 grams/ounce, in the range of from about 6.5 grams/ounce to about 13.5 grams/ounce, in the range of from about 6.5 grams/ounce to about 13 grams/ounce, in the range of from about 6.5 grams/ounce to about 12.5 grams/ounce, in the range of from about 6.5 grams/ounce to about 12 grams/ounce, in the range of from about 6.5 grams/ounce to about 11.5 grams/ounce, in the range of from about 6.5 grams/ounce to about 11 grams/ounce, in the range of from about 6.5 grams/ounce to about 10.5 grams/ounce, in the range of from about 6.5 grams/ounce to about 10 grams/ounce, in the range of from about 6.5 grams/ounce to about 9.5 grams/ounce, in the range of from about 6.5 grams/ounce to about 9 grams/ounce, in the range of from about 6.5 grams/ounce to about 8.5 grams/ounce, in the range of from about 6.5 grams/ounce to about 8 grams/ounce, in the range of from about 6.5 grams/ounce to about 7.5 grams/ounce, in the range of from about 6.5 grams/ounce to about 7 grams/ounce, in the range of from about 7 grams/ounce to about 15 grams/ounce, in the range of from about 7 grams/ounce to about 14.5 grams/ounce, in the range of from about 7 grams/ounce to about 14 grams/ounce, in the range of from about 7 grams/ounce to about 13.5 grams/ounce, in the range of from about 7 grams/ounce to about 13 grams/ounce, in the range of from about 7 grams/ounce to about 12.5 grams/ounce, in the range of from about 7 grams/ounce to about 12 grams/ounce, in the range of from about 7 grams/ounce to about 11.5 grams/ounce, in the range of from about 7 grams/ounce to about 11 grams/ounce, in the range of from about 7 grams/ounce to about 10.5 grams/ounce, in the range of from about 7 grams/ounce to about 10 grams/ounce, in the range of from about 7 grams/ounce to about 9.5 grams/ounce, in the range of from about 7 grams/ounce to about 9 grams/ounce, in the range of from about 7 grams/ounce to about 8.5 grams/ounce, in the range of from about 7 grams/ounce to about 8 grams/ounce, in the range of from about 7 grams/ounce to about 7.5 grams/ounce, in the range of from about 7.5 grams/ounce to about 15 grams/ounce, in the range of from about 7.5 grams/ounce to about 14.5 grams/ounce, in the range of from about 7.5 grams/ounce to about 14 grams/ounce, in the range of from about 7.5 grams/ounce to about 13.5 grams/ounce, in the range of from about 7.5 grams/ounce to about 13 grams/ounce, in the range of from about 7.5 grams/ounce to about 12.5 grams/ounce, in the range of from about 7.5 grams/ounce to about 12 grams/ounce, in the range of from about 7.5 grams/ounce to about 11.5 grams/ounce, in the range of from about 7.5 grams/ounce to about 11 grams/ounce, in the range of from about 7.5 grams/ounce to about 10.5 grams/ounce, in the range of from about 7.5 grams/ounce to about 10 grams/ounce, in the range of from about 7.5 grams/ounce to about 9.5 grams/ounce, in the range of from about 7.5 grams/ounce to about 9 grams/ounce, in the range of from about 7.5 grams/ounce to about 8.5 grams/ounce, in the range of from about 7.5 grams/ounce to about 8 grams/ounce, in the range of from about 8 grams/ounce to about 15 grams/ounce, in the range of from about 8 grams/ounce to about 14.5 grams/ounce, in the range of from about 8 grams/ounce to about 14 grams/ounce, in the range of from about 8 grams/ounce to about 13.5 grams/ounce, in the range of from about 8 grams/ounce to about 13 grams/ounce, in the range of from about 8 grams/ounce to about 12.5 grams/ounce, in the range of from about 8 grams/ounce to about 12 grams/ounce, in the range of from about 8 grams/ounce to about 11.5 grams/ounce, in the range of from about 8 grams/ounce to about 11 grams/ounce, in the range of from about 8 grams/ounce to about 10.5 grams/ounce, in the range of from about 8 grams/ounce to about 10 grams/ounce, in the range of from about 8 grams/ounce to about 9.5 grams/ounce, in the range of from about 8 grams/ounce to about 9 grams/ounce, in the range of from about 8 grams/ounce to about 8.5 grams/ounce, in the range of from about 8.5 grams/ounce to about 15 grams/ounce, in the range of from about 8.5 grams/ounce to about 14.5 grams/ounce, in the range of from about 8.5 grams/ounce to about 14 grams/ounce, in the range of from about 8.5 grams/ounce to about 13.5 grams/ounce, in the range of from about 8.5 grams/ounce to about 13 grams/ounce, in the range of from about 8.5 grams/ounce to about 12.5 grams/ounce, in the range of from about 8.5 grams/ounce to about 12 grams/ounce, in the range of from about 8.5 grams/ounce to about 11.5 grams/ounce, in the range of from about 8.5 grams/ounce to about 11 grams/ounce, in the range of from about 8.5 grams/ounce to about 10.5 grams/ounce, in the range of from about 8.5 grams/ounce to about 10 grams/ounce, in the range of from about 8.5 grams/ounce to about 9.5 grams/ounce, in the range of from about 8.5 grams/ounce to about 9 grams/ounce, in the range of from about 9 grams/ounce to about 15 grams/ounce, in the range of from about 9 grams/ounce to about 14.5 grams/ounce, in the range of from about 9 grams/ounce to about 14 grams/ounce, in the range of from about 9 grams/ounce to about 13.5 grams/ounce, in the range of from about 9 grams/ounce to about 13 grams/ounce, in the range of from about 9 grams/ounce to about 12.5 grams/ounce, in the range of from about 9 grams/ounce to about 12 grams/ounce, in the range of from about 9 grams/ounce to about 11.5 grams/ounce, in the range of from about 9 grams/ounce to about 11 grams/ounce, in the range of from about 9 grams/ounce to about 10.5 grams/ounce, in the range of from about 9 grams/ounce to about 10 grams/ounce, in the range of from about 9 grams/ounce to about 9.5 grams/ounce, in the range of from about 9.5 grams/ounce to about 15 grams/ounce, in the range of from about 9.5 grams/ounce to about 14.5 grams/ounce, in the range of from about 9.5 grams/ounce to about 14 grams/ounce, in the range of from about 9.5 grams/ounce to about 13.5 grams/ounce, in the range of from about 9.5 grams/ounce to about 13 grams/ounce, in the range of from about 9.5 grams/ounce to about 12.5 grams/ounce, in the range of from about 9.5 grams/ounce to about 12 grams/ounce, in the range of from about 9.5 grams/ounce to about 11.5 grams/ounce, in the range of from about 9.5 grams/ounce to about 11 grams/ounce, in the range of from about 9.5 grams/ounce to about 10.5 grams/ounce, in the range of from about 9.5 grams/ounce to about 10 grams/ounce, in the range of from about 10 grams/ounce to about 15 grams/ounce, in the range of from about 10 grams/ounce to about 14.5 grams/ounce, in the range of from about 10 grams/ounce to about 14 grams/ounce, in the range of from about 10 grams/ounce to about 13.5 grams/ounce, in the range of from about 10 grams/ounce to about 13 grams/ounce, in the range of from about 10 grams/ounce to about 12.5 grams/ounce, in the range of from about 10 grams/ounce to about 12 grams/ounce, in the range of from about 10 grams/ounce to about 11.5 grams/ounce, in the range of from about 10 grams/ounce to about 11 grams/ounce, in the range of from about 10 grams/ounce to about 10.5 grams/ounce, in the range of from about 10.5 grams/ounce to about 15 grams/ounce, in the range of from about 10.5 grams/ounce to about 14.5 grams/ounce, in the range of from about 10.5 grams/ounce to about 14 grams/ounce, in the range of from about 10.5 grams/ounce to about 13.5 grams/ounce, in the range of from about 10.5 grams/ounce to about 13 grams/ounce, in the range of from about 10.5 grams/ounce to about 12.5 grams/ounce, in the range of from about 10.5 grams/ounce to about 12 grams/ounce, in the range of from about 10.5 grams/ounce to about 11.5 grams/ounce, in the range of from about 10.5 grams/ounce to about 11 grams/ounce, in the range of from about 11 grams/ounce to about 15 grams/ounce, in the range of from about 11 grams/ounce to about 14.5 grams/ounce, in the range of from about 11 grams/ounce to about 14 grams/ounce, in the range of from about 11 grams/ounce to about 13.5 grams/ounce, in the range of from about 11 grams/ounce to about 13 grams/ounce, in the range of from about 11 grams/ounce to about 12.5 grams/ounce, in the range of from about 11 grams/ounce to about 12 grams/ounce, in the range of from about 11 grams/ounce to about 11.5 grams/ounce, in the range of from about 11.5 grams/ounce to about 15 grams/ounce, in the range of from about 11.5 grams/ounce to about 14.5 grams/ounce, in the range of from about 11.5 grams/ounce to about 14 grams/ounce, in the range of from about 11.5 grams/ounce to about 13.5 grams/ounce, in the range of from about 11.5 grams/ounce to about 13 grams/ounce, in the range of from about 11.5 grams/ounce to about 12.5 grams/ounce, in the range of from about 11.5 grams/ounce to about 12 grams/ounce, in the range of from about 12 grams/ounce to about 15 grams/ounce, in the range of from about 12 grams/ounce to about 14.5 grams/ounce, in the range of from about 12 grams/ounce to about 14 grams/ounce, in the range of from about 12 grams/ounce to about 13.5 grams/ounce, in the range of from about 12 grams/ounce to about 13 grams/ounce, in the range of from about 12 grams/ounce to about 12.5 grams/ounce, in the range of from about 12.5 grams/ounce to about 15 grams/ounce, in the range of from about 12.5 grams/ounce to about 14.5 grams/ounce, in the range of from about 12.5 grams/ounce to about 14 grams/ounce, in the range of from about 12.5 grams/ounce to about 13.5 grams/ounce, in the range of from about 12.5 grams/ounce to about 13 grams/ounce, in the range of from about 13 grams/ounce to about 15 grams/ounce, in the range of from about 13 grams/ounce to about 14.5 grams/ounce, in the range of from about 13 grams/ounce to about 14 grams/ounce, in the range of from about 13 grams/ounce to about 13.5 grams/ounce, in the range of from about 13.5 grams/ounce to about 15 grams/ounce, in the range of from about 13.5 grams/ounce to about 14.5 grams/ounce, in the range of from about 13.5 grams/ounce to about 14 grams/ounce, in the range of from about 14 grams/ounce to about 15 grams/ounce, in the range of from about 14 grams/ounce to about 14.5 grams/ounce, in the range of from about 14.5 grams/ounce to about 15 grams/ounce, about 15 grams/ounce, about 14.5 grams/ounce, about 14 grams/ounce, about 13.5 grams/ounce, about 13 grams/ounce, about 12.5 grams/ounce, about 12 grams/ounce, about 11.5 grams/ounce, about 11 grams/ounce, about 10.5 grams/ounce, about 10 grams/ounce, about 9.5 grams/ounce, about 9 grams/ounce, about 8.5 grams/ounce, about 8 grams/ounce, about 7.5 grams/ounce, about 7 grams/ounce, about 6.5 grams/ounce, about 6 grams/ounce, about 5.5 grams/ounce, about 5 grams/ounce, about 4.5 grams/ounce, about 4 grams/ounce, about 3.5 grams/ounce, about 3 grams/ounce, about 2.5 grams/ounce, about 2 grams/ounce, about 1.5 grams/ounce, about 1 grams/ounce, about 0.5 grams/ounce, or about 0 grams/ounce, etc., and in each case 1 ounce equals 28,4 grams.

As used herein, "fat-emulsifier component" refers to a substance comprising an edible fat component; and an emulsifier component with a hydrophilic-lipophilic balance (HLB) value less than or equal to 9 or a lecithin component with an acetone insolubles (AI) percentage in the range of from 20 to 90 and a phosphatidylcholine (PC) percentage of from 20 to 90, wherein said emulsifier component or lecithin component is dispersed or solubilized in the edible fat component. The edible fat component does not form a traditional emulsion (i.e. water-in-oil or oil-in-water) with the emulsifier component with an HLB value less than or equal to 9 or lecithin component with an AI percentage in the range of from 20 to 90 and a PC percentage of from 20 to 90. While traditional emulsions comprise a continuous phase and an aqueous phase, the fat-emulsifier component used in the present invention does not comprise an aqueous phase. An aqueous phase would make the comestible component soggy and thus, defeat the purpose of trying to obtain an improved mouthfeel. In the present invention, the emulsifier or lecithin is dispersed or solubilized in the edible fat component. If necessary, the emulsifier or lecithin may be dispersed in the edible fat component with the aid of heat, mixing, sonication or a combination thereof. In certain embodiments, the fat-emulsifier component comprises an edible fat component and an emulsifier component with an HLB value less than or equal to 9, wherein the edible fat component does not form an emulsion with the emulsifier component with an HLB value less than or equal to 9. In other embodiments, the fat-emulsifier component comprises an edible fat component and a lecithin component with an AI percentage in the range of from 20 to 90 and a PC percentage of from 20 to 90, wherein the edible fat component does not form an emulsion with the lecithin component with an AI percentage in the range of from 20 to 90 and a PC percentage of from 20 to 90.

In some embodiments, the fat-emulsifier component may further comprise non-aqueous food additives such as non-aqueous flavorings, seasonings, preservatives, color, edible acids, etc. For example, in some embodiments, the fat-emulsifier component may comprise an edible fat component, the emulsifier component with an HLB value less than or equal to 9 or lecithin component with an AI percentage in the range of from 20 to 90 and a PC percentage of from 20 to 90, and at least one non-aqueous food additive selected from the group consisting of non-aqueous flavorings, seasonings, preservatives, color, edible acids, and combinations thereof. In some embodiments, the fat-emulsifier component may include at least one non-aqueous food additive. In other embodiments, the fat-emulsifier component may include combinations of two or more non-aqueous food additives, including combinations of any two or more, three or more, four or more, five or more, etc. of the non-aqueous food additives described herein.

In certain embodiments, the fat-emulsifier component is liquid at room temperature (i.e. the temperature of consumption). In some embodiments, the emulsifier component with an HLB value less than or equal to 9 or lecithin component with an AI percentage in the range of from 20 to 90 and a PC percentage of from 20 to 90 may be waxy at room temperature due to a low melting temperature. In certain embodiments, when such waxy emulsifiers or lecithins are used, the waxy emulsifier or lecithin may be used in a lower concentration or combined with an emulsifier or lecithin that is liquid at room temperature.

As used herein, "edible fat component" refers to any vegetable oil, animal oil, animal fat, sucrose polyester, or combination thereof which is suitable for human consumption. The edible fat component may be solid or liquid. Examples of edible fat components useful in the present invention include, but are not limited to, sunflower oil, mid oleic sunflower oil, high oleic sunflower oil, canola oil, soybean oil, palm kernel oil, coconut oil, corn oil, cottonseed oil, palm oil, palm olein, safflower oil, high oleic safflower oil, palm stearin, rapeseed oil, olive oil, peanut oil, sesame oil, lard, tallow, mono-sucrose polyesters, di-sucrose polyesters, tri-sucrose polyesters, and combinations thereof. Edible fat components are commercially available.

The fat-emulsifier component includes at least one type of edible fat component. In some embodiments, the fat-emulsifier component may include combinations of two or more types of edible fat components, including combinations of any two or more, three or more, four or more, five or more, etc. of the types of edible fat components described herein. For example, in some embodiments, the edible fat component comprises high oleic sunflower oil. In other embodiments, the edible fat component may comprise high oleic sunflower oil and soybean oil; high oleic sunflower oil and canola oil; high oleic sunflower oil, soybean oil and canola oil; high oleic sunflower oil, soybean oil, canola oil and corn oil, etc.

As used herein, "an emulsifier component with an HLB value less than or equal to 9" refers to any emulsifier or surfactant with an HLB value less than or equal to 9 that is suitable for human consumption. The terms "emulsifier" and "surfactant" are used interchangeably herein. In accordance with the present invention, the emulsifier component has an HLB value less than or equal to 9. In some embodiments, the emulsifier component may have an HLB value less than or equal to about 8.5, less than or equal to about 8, less than or equal to about 7.5, less than or equal to about 7, less than or equal to about 6.5, less than or equal to about 6, less than or equal to about 5.5, less than or equal to about 5, less than or equal to about 4.5, less than or equal to about 4, less than or equal to about 3.5, less than or equal to about 3, less than or equal to about 2.5, less than or equal to about 2, less than or equal to about 1.5, less than or equal to about 1, less than or equal to about 0.5, less than or equal to about 0.2, or 0. In other embodiments, the emulsifier component may have an HLB value less than about 9, less than about 8.5, less than about 8, less than about 7.5, less than about 7, less than about 6.5, less than about 6, less than about 5.5, less than about 5, less than about 4.5, less than about 4, less than about 3.5, less than about 3, less than about 2.5, less than about 2, less than about 1.5, less than about 1, less than about 0.5, or less than about 0.2.

In accordance with the present invention, the emulsifier component may have an HLB value in the range of from 0 to 9, optionally from about 0 to about 8, from about 0 to about 7, from about 0 to about 6, from about 0 to about 5, from about 0 to about 4, from about 0 to about 3, from about 0 to about 2.5, from about 0 to about 2, from about 0 to about 1.5, from about 0 to about 1, from about 0 to about 0.5, from about 0 to about 0.2, from about 0.2 to 9, from about 0.2 to about 8, from about 0.2 to about 7, from about 0.2 to about 6, from about 0.2 to about 5, from about 0.2 to about 4, from about 0.2 to about 3, from about 0.2 to about 2.5, from about 0.2 to about 2, from about 0.2 to about 1.5, from about 0.2 to about 1, from about 0.2 to about 0.5, from about 0.5 to about 9, from about 0.5 to about 8, from about 0.5 to about 7, from about 0.5 to about 6, from about 0.5 to about 5, from about 0.5 to about 4, from about 0.5 to about 3, from about 0.5 to about 2.5, from about 0.5 to about 2, from about 0.5 to about 1.5, from about 0.5 to about 1, from about 1 to 9, from about 1 to about 8, from about 1 to about 7, from about 1 to about 6, from about 1 to about 5, from about 1 to about 4, from about 1 to about 3, from about 1 to about 2.5, from about 1 to about 2, from about 1 to about 1.5, from about 1.5 to 9, from about 1.5 to about 8, from about 1.5 to about 7, from about 1.5 to about 6, from about 1.5 to about 5, from about 1.5 to about 4, from about 1.5 to about 3, from about 1.5 to about 2.5, from about 1.5 to about 2, from about 2 to 9, from about 2 to about 8, from about 2 to about 7, from about 2 to about 6, from about 2 to about 5, from about 2 to about 4, from about 2 to about 3, from about 2 to about 2.5, from about 2.5 to 9, from about 2.5 to about 8, from about 2.5 to about 7, from about 2.5 to about 6, from about 2.5 to about 5, from about 2.5 to about 4, from about 2.5 to about 3, from about 3 to 9, from about 3 to about 8, from about 3 to about 7, from about 3 to about 6, from about 3 to about 5, from about 3 to about 4, from about 4 to 9, from about 4 to about 8, from about 4 to about 7, from about 4 to about 6, from about 4 to about 5, from about 5 to 9, from about 5 to about 8, from about 5 to about 7, from about 5 to about 6, from about 6 to 9, from about 6 to about 8, from about 6 to about 7, from about 7 to 9, from about 7 to about 8, or from about 8 to 9. In certain embodiments, the emulsifier component may have an HLB value of 9, about 8, about 7, about 6, about 5, about 4, about 3, about 2.5, about 2, about 1.5, about 1, about 0.5, about 0.2, or about 0.

The emulsifier component with an HLB value less than or equal to 9 used in the present invention includes polyglycerol polyricinoleate or acetic acid esters. Emulsifier components with an HLB value less than or equal to about 9 are commercially available.

The fat-emulsifier component may include one type of emulsifier component with an HLB value less than or equal to 9 or any combination thereof. In some embodiments, the fat-emulsifier component includes one emulsifier component with an HLB value less than or equal to 9. In other embodiments, the fat-emulsifier component may include combinations of two or more types of emulsifier components with an HLB value less than or equal to about 9, including combinations of any two or more, three or more, four or more, five or more, etc. of the types of emulsifier components with an HLB value less than or equal to 9 described herein.

As used herein, "lecithin component with an acetone insolubles (AI) percentage in the range of from 20 to 90 and a phosphatidylcholine (PC) percentage of from 20 to 90" refers to any edible lecithin or lecithin-based substance with an acetone insolubles (AI) percentage in the range of from 20 to 90 and a phosphatidylcholine (PC) percentage of from 20 to 90. The lecithin component may be fluid, solid or a combination thereof. Such lecithin component may be modified, unmodified, refined, de-oiled, fractionated, purified, unpurified or a combination thereof. The lecithin component may be derived from an oilseed. The lecithin component used in the present invention is soybean lecithin, sunflower lecithin, canola lecithin, rapeseed lecithin, cottonseed lecithin, corn lecithin, flaxseed lecithin, hempseed lecithin, palm lecithin, egg lecithin, de-oiled lecithin, hydrophobically-modified lecithin, or a combination thereof. Lecithin components are commercially available.

In certain embodiments, the lecithin component has an AI percentage in the range of from 20 to about 80, from 20 to about 75, from 20 to about 70, from 20 to about 60, from 20 to about 50, from 20 to about 40, from 20 to about 30, from about 30 to 90, from about 30 to about 80, from about 30 to about 75, from about 30 to about 70, from about 30 to about 60, from about 30 to about 50, from about 30 to about 40, from about 40 to 90, from about 40 to about 80, from about 40 to about 75, from about 40 to about 70, from about 40 to about 60, from about 40 to about 50, from about 50 to 90, from about 50 to about 80, from about 50 to about 75, from about 50 to about 70, from about 50 to about 60, from about 60 to 90, from about 60 to about 80, from about 60 to about 75, from about 60 to about 70, from about 70 to 90, from about 70 to about 80, from about 70 to about 75, from about 75 to 90, from about 75 to about 80, from about 80 to 90. In certain embodiments, the lecithin component has an AI percentage of 20, about 25, about 30, about 35, about 40, about 45, about 50, about 55, about 60, about 65, about 70, about 75, about 80, about 85 or 90.

In certain embodiments, the lecithin component has a PC percentage in the range of from 20 to about 80, from 20 to about 75, from 20 to about 70, from 20 to about 60, from 20 to about 50, from 20 to about 40, from 20 to about 30, from about 30 to 90, from about 30 to about 80, from about 30 to about 75, from about 30 to about 70, from about 30 to about 60, from about 30 to about 50, from about 30 to about 40, from about 40 to 90, from about 40 to about 80, from about 40 to about 75, from about 40 to about 70, from about 40 to about 60, from about 40 to about 50, from about 50 to 90, from about 50 to about 80, from about 50 to about 75, from about 50 to about 70, from about 50 to about 60, from about 60 to 90, from about 60 to about 80, from about 60 to about 75, from about 60 to about 70, from about 70 to 90, from about 70 to about 80, from about 70 to about 75, from about 75 to 90, from about 75 to about 80, from about 80 to 90. In certain embodiments, the lecithin component of the present invention has a PC percentage of 20, about 25, about 30, about 35, about 40, about 45, about 50, about 55, about 60, about 65, about 70, about 75, about 80, about 85 or 90.

The fat-emulsifier component may include one type of lecithin component with an acetone insolubles (AI) percentage in the range of from 20 to 90 and a phosphatidylcholine (PC) percentage of from 20 to 90 or any combination thereof. In some embodiments, the fat-emulsifier component includes one lecithin component with an acetone insolubles (AI) percentage in the range of from 20 to 90 and a phosphatidylcholine (PC) percentage of from 20 to 90. In other embodiments, the fat-emulsifier component may include combinations of two or more types of lecithin components with an acetone insolubles (AI) percentage in the range of from 20 to 90 and a phosphatidylcholine (PC) percentage of from 20 to 90, including combinations of any two or more, three or more, four or more, five or more, etc. of the types of lecithin components with an acetone insolubles (AI) percentage in the range of from 20 to 90 and a phosphatidylcholine (PC) percentage of from 20 to 90 described herein.

The fat-emulsifier component comprises at least one edible fat component; and at least one emulsifier component with an HLB value less than or equal to 9 or at least one lecithin component with an acetone insolubles (AI) percentage in the range of from 20 to 90 and a phosphatidylcholine (PC) percentage of from 20 to 90. The present inventors unexpectedly and surprisingly discovered that emulsifier components with an HLB value less than or equal to 9 and lecithin components with an acetone insolubles (AI) percentage in the range of from 20 to 90 and a phosphatidylcholine (PC) percentage of from 20 to 90 described substantially enhance the wetting and lubrication properties of edible fat, as illustrated in the examples below and in the appended figures. The emulsifier component with an HLB value less than or equal to 9 or the lecithin component with an acetone insolubles (AI) percentage in the range of from 20 to 90 and a phosphatidylcholine (PC) percentage of from 20 to 90, in combination with at least one edible fat component, synergistically increases the effectiveness of the products and methods of the present invention. In some embodiments, the synergistic compositions result in a significant reduction in friction in the boundary regime of the Stribeck curve, as compared to the amount of friction experienced in the boundary regime using edible fat alone.

Lubricated friction is characterized by the presence of a thin film of pressurized lubricant (i.e. squeeze film) between two surfaces. The ratio of the squeeze film (i.e. oil film) thickness, h, to the surface roughness, Ra, determines the type of the lubrication regime. Boundary lubrication (i.e. the boundary regime) occurs when h<Ra. Constant contact between the friction surfaces at high surface points (microasperities) occurs with boundary lubrication. The boundary regime is the most undesirable because it is characterized by a high coefficient of friction (i.e. energy loss). Without being bound by theory, it is believed that the boundary regime of the Stribeck curve is correlated with the degree of oiliness perception of a particular material. It is thought that preferential wetting of the lubricated surfaces may result in lower friction in the boundary regime, and that such friction reduction is correlated with a higher degree of oiliness perception due to the preferential wetting of the oil against the oral surface. By dispersing or solubilizing the emulsifier or lecithin components in the edible fat component, the edible oil is rendered more efficient in spreading across the oral surface and thus, oiliness perception is increased.

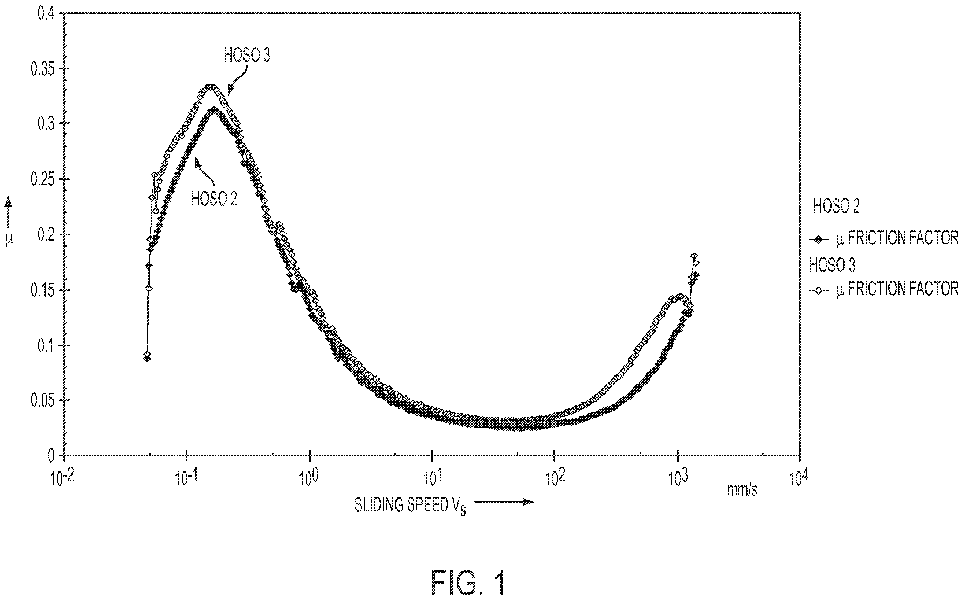

FIG. 1 is a Stribeck Curve illustrating the wetting and lubrication properties of high oleic sunflower oil ("HOSO"). HOSO 2 and HOSO 3 are replicas of the same experiment. As can be seen in FIG. 1, the HOSO Stribeck curve is reproducible.

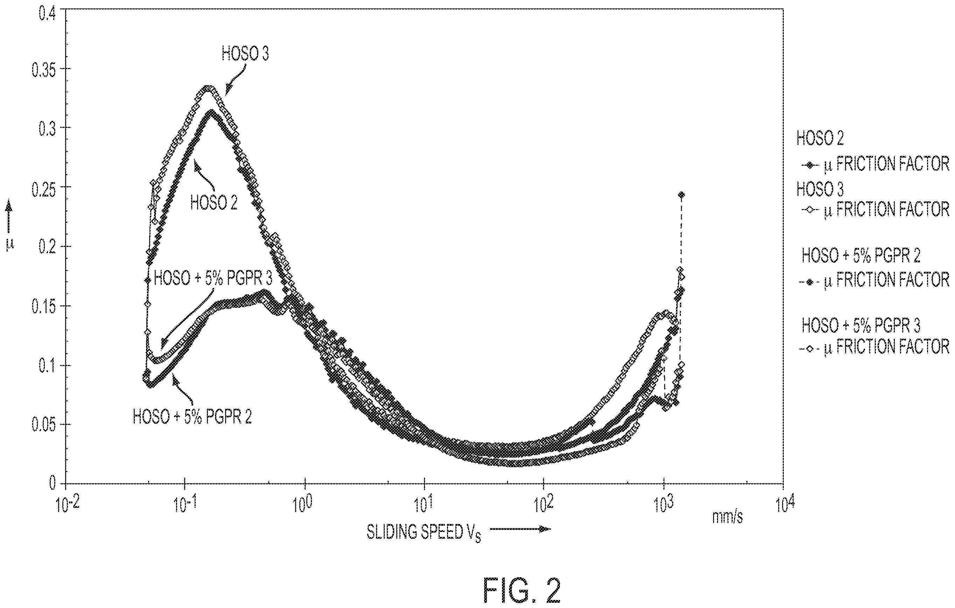

FIG. 2 illustrates modulation of the wetting and lubrication properties of high oleic sunflower oil ("HOSO") with 5 weight % polyglycerol polyricinoleate ("PGPR"). As can be seen in FIG. 2, PGPR significantly reduces friction in the boundary regime when added to the HOSO. HOSO 2 and HOSO 3 are the same experiment replicas depicted in FIG. 1. HOSO + 5% PGPR 2 and HOSO + 5% PGPR 3 are replicas of the same experiment. Without being bound by theory, it is believed that the reduction in friction in the boundary regime of the Stribeck curve indicates that HOSO with 5 weight % PGPR has a higher degree of oiliness perception relative to HOSO alone.

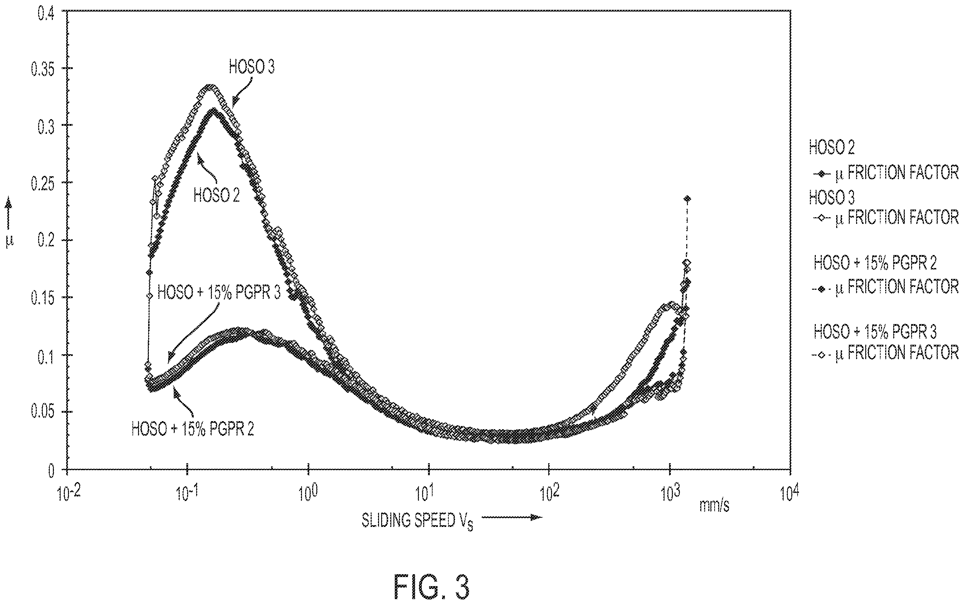

FIG. 3 is a Stribeck Curve illustrating modulation of the wetting and lubrication properties of high oleic sunflower oil ("HOSO") with 15 weight % polyglycerol polyricinoleate ("PGPR"). As can be seen in FIG. 3, friction in the boundary regime is further reduced when the amount of PGPR is increased. HOSO 2 and HOSO 3 are the same experiment replicas depicted in FIG. 1. HOSO + 15% PGPR 2 and HOSO + 15% PGPR 3 are replicas of the same experiment. The greater friction reduction in the boundary regime of the Stribeck curve with increased PGPR amount suggests that the higher level of PGPR may be more efficacious in rendering oiliness perception.

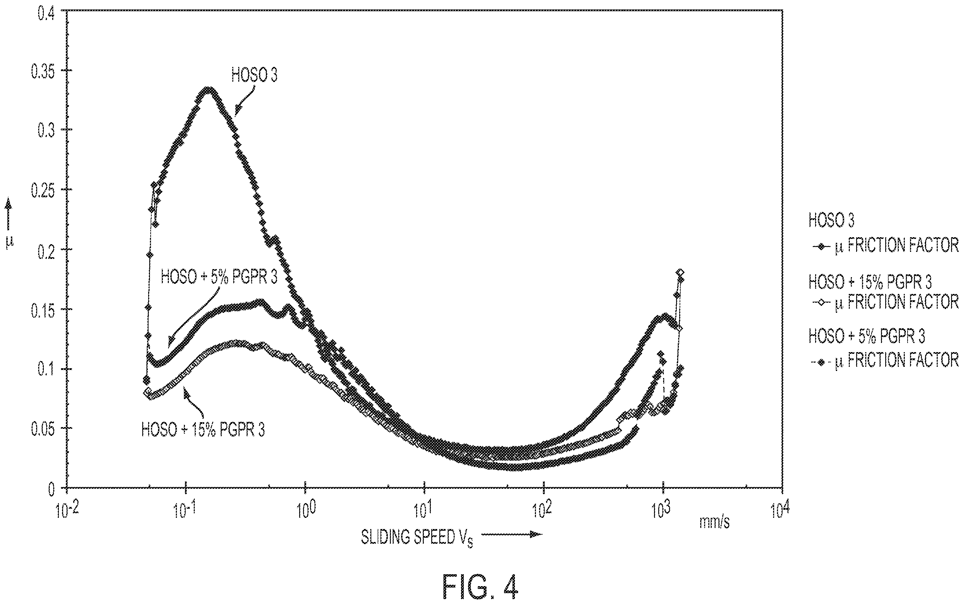

FIG. 4 is a Stribeck Curve illustrating modulation of the wetting and lubrication properties of high oleic sunflower oil ("HOSO") with polyglycerol polyricinoleate ("PGPR") at varying concentrations. As can be seen in FIG. 4, PGPR significantly reduces friction in the boundary regime when added to HOSO, and friction in the boundary regime is further reduced as the amount of PGPR is increased. HOSO 3 is the same experiment depicted in FIG. 1, HOSO + 5% PGPR 3 is the same experiment depicted in FIG. 2 and HOSO + 15% PGPR 3 is the same experiment depicted in FIG. 3. The increase in friction reduction in the boundary regime of the Stribeck curve as PGPR amount is increased suggests that increasing the level of PGPR may result in an increase in oiliness perception.

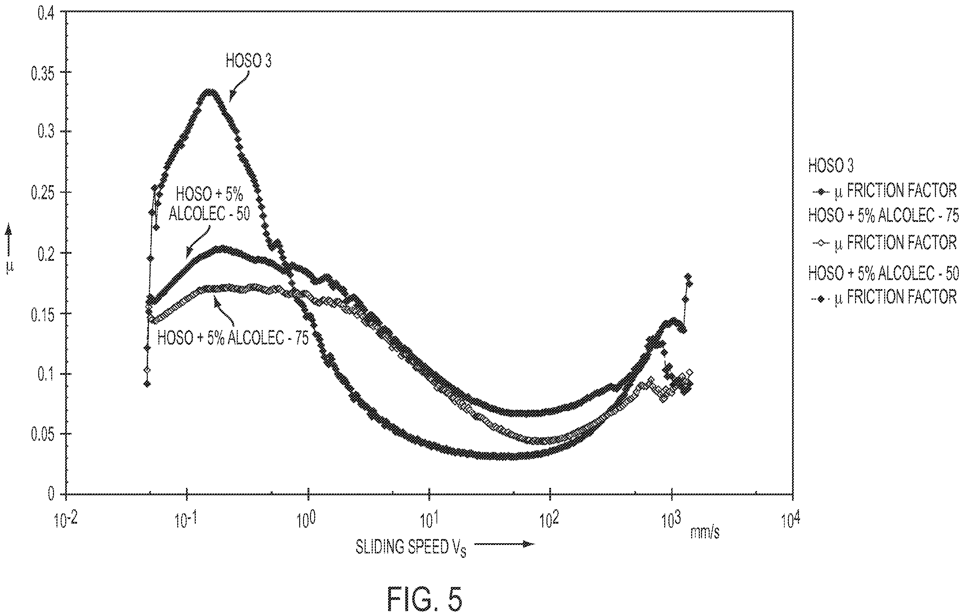

FIG. 5 is a Stribeck Curve illustrating modulation of the wetting and lubrication properties of high oleic sunflower oil ("HOSO") with 5 weight % soy lecithin sold under the trademark ALCOLEC ("ALCOLEC"). As can be seen in FIG. 5, soy lecithin significantly reduces friction in the boundary regime when added to HOSO. HOSO 3 is the same experiment depicted in FIG. 1. HOSO + 5% ALCOLEC - 75 is soy lecithin sold under the trademark ALCOLEC with a phosphatidylcholine (PC) percentage of 75. HOSO + 5% ALCOLEC - 50 is soy lecithin sold under the trademark ALCOLEC with a PC percentage of 50. Comparing the soy lecithin with a PC of 75 to the soy lecithin with a PC of 50, the soy lecithin with a higher degree of PC (75) results in a greater reduction in friction in the boundary regime of the Stribeck curve. Such greater friction reduction in the boundary regime with increased PC level suggests that the higher degree of PC may be more efficacious in rendering oiliness perception due to preferential wetting properties.

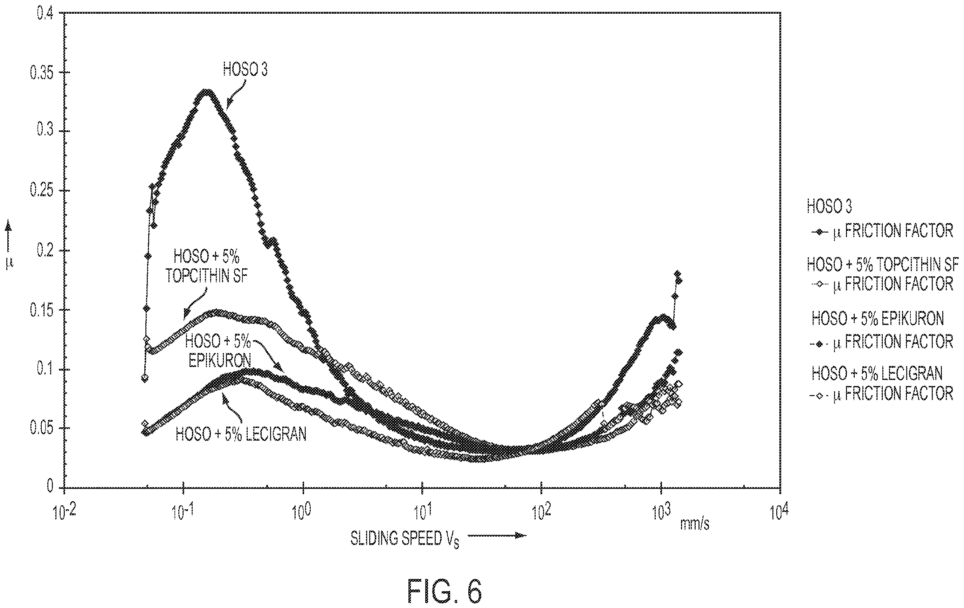

FIG. 6 is a Stribeck Curve illustrating modulation of the wetting and lubrication properties of high oleic sunflower oil ("HOSO") with 5 weight % sunflower lecithin and 5 weight % soy lecithin produced by CARGILL and sold under the trademarks TOPCITHIN ("TOPCITHIN SF") (sunflower lecithin), EPIKURON ("EPIKURON") (soy lecithin) and LECIGRAN ("LECIGRAN") (soy lecithin). As can be seen in FIG. 6, sunflower lecithin and soy lecithin significantly reduce friction in the boundary regime when added to HOSO. HOSO 3 is the same experiment depicted in FIG. 1. Comparing the soy lecithin to the sunflower lecithin, the soy lecithin results in a greater reduction in friction in the boundary regime of the Stribeck curve. Such greater friction reduction in the boundary regime suggests that the soy lecithin may be more efficacious in rendering oiliness perception.

Without being bound by theory, it is believed that the perceived dryness associated with low-oil food products is overcome because the surface active molecules (emulsifier component with an HLB value less than or equal to 9 or lecithin component with an acetone insolubles (AI) percentage in the range of from 20 to 90 and a phosphatidylcholine (PC) percentage of from about 20 to about 90) allow for more rapid wetting of the bolus.

The fat-emulsifier component may include one edible fat component; and one emulsifier component with an HLB value less than or equal to 9 or one lecithin component with an acetone insolubles (AI) percentage in the range of from 20 to 90 and a phosphatidylcholine (PC) percentage of from 20 to 90 detailed herein. For example, the fat-emulsifier may include sunflower oil and polyglycerol polyricinoleate, mid oleic sunflower oil and polyglycerol polyricinoleate, high oleic sunflower oil and polyglycerol polyricinoleate, canola oil and polyglycerol polyricinoleate, soybean oil and polyglycerol polyricinoleate, palm kernel oil and polyglycerol polyricinoleate, coconut oil and polyglycerol polyricinoleate, corn oil and polyglycerol polyricinoleate, cottonseed oil and polyglycerol polyricinoleate, palm oil and polyglycerol polyricinoleate, palm olein and polyglycerol polyricinoleate, safflower oil and polyglycerol polyricinoleate, high oleic safflower oil and polyglycerol polyricinoleate, palm stearin and polyglycerol polyricinoleate, rapeseed oil and polyglycerol polyricinoleate, olive oil and polyglycerol polyricinoleate, peanut oil and polyglycerol polyricinoleate, sesame oil and polyglycerol polyricinoleate, sunflower oil and soybean lecithin, mid oleic sunflower oil and soybean lecithin, high oleic sunflower oil and soybean lecithin, canola oil and soybean lecithin, soybean oil and soybean lecithin, palm kernel oil and soybean lecithin, coconut oil and soybean lecithin, corn oil and soybean lecithin, cottonseed oil and soybean lecithin, palm oil and soybean lecithin, palm olein and soybean lecithin, safflower oil and soybean lecithin, high oleic safflower oil and soybean lecithin, palm stearin and soybean lecithin, rapeseed oil and soybean lecithin, olive oil and soybean lecithin, peanut oil and soybean lecithin, sesame oil and soybean lecithin, etc.

The fat-emulsifier component may include one edible fat component; and two or more emulsifier components with an HLB value less than or equal to 9 detailed herein.

The fat-emulsifier component may include one edible fat component; and two or more lecithin components with an acetone insolubles (AI) percentage in the range of from 20 to 90 and a phosphatidylcholine (PC) percentage of from 20 to 90 detailed herein.

The fat-emulsifier component may include one edible fat component, one emulsifier component with an HLB value less than or equal to 9, and one lecithin component with an acetone insolubles (AI) percentage in the range of from about 20 to about 90 and a phosphatidylcholine (PC) percentage of from 20 to 90 detailed herein.

The fat-emulsifier component may include two or more edible fat components; and one emulsifier component with an HLB value less than or equal to 9 detailed herein.

The fat-emulsifier component may include two or more edible fat components; and one lecithin component with an acetone insolubles (AI) percentage in the range of from 20 to 90 and a phosphatidylcholine (PC) percentage of from 20 to 90 detailed herein.

The fat-emulsifier component may include two or more edible fat components; and two or more emulsifier components with an HLB value less than or equal to 9 detailed herein.

The fat-emulsifier component may include two or more edible fat components; and two or more lecithin components with an acetone insolubles (AI) percentage in the range of from 20 to 90 and a phosphatidylcholine (PC) percentage of from 20 to 90 detailed herein.

The fat-emulsifier component may include two or more edible fat components, two or more emulsifier components with an HLB value less than or equal to 9, and one lecithin component with an acetone insolubles (AI) percentage in the range of from 20 to 90 and a phosphatidylcholine (PC) percentage of from 20 to 90 detailed herein.

The fat-emulsifier component may include two or more edible fat components, one emulsifier component with an HLB value less than or equal to 9, and two or more lecithin components with an acetone insolubles (AI) percentage in the range of from 20 to 90 and a phosphatidylcholine (PC) percentage of from 20 to 90 detailed herein.

The fat-emulsifier component may include two or more edible fat components, two or more emulsifier components with an HLB value less than or equal to 9, and two or more lecithin components with an acetone insolubles (AI) percentage in the range of from 20 to 90 and a phosphatidylcholine (PC) percentage of from 20 to 90 detailed herein.

In accordance with the invention, the fat-emulsifier component comprises 1 to 15 weight % of the emulsifier or lecithin based on the total weight of the fat-emulsifier component. In some embodiments, the fat-emulsifier component comprises the emulsifier or lecithin component in an amount in the range of from 1 to about 1.75 weight %, from 1 to about 1.5 weight %, from 1 to about 1.25 weight %, from 1 to about 2.75 weight %, from 1 to about 2.5 weight %, from 1 to about 2.25 weight %, from 1 to about 2 weight %, from 1 to about 3.75 weight %, from 1 to about 3.5 weight %, from 1 to about 3.25 weight %, from 1 to about 3 weight %, from 1 to about 4.75 weight %, from 1 to about 4.5 weight %, from 1 to about 4.25 weight %, from 1 to about 4 weight %, from 1 to about 5.75 weight %, from 1 to about 5.5 weight %, from 1 to about 5.25 weight %, from 1 to about 5 weight %, from 1 to about 6.75 weight %, from 1 to about 6.5 weight %, from 1 to about 6.25 weight %, from 1 to about 6 weight %, from 1 to about 7.75 weight %, from 1 to about 7.5 weight %, from 1 to about 7.25 weight %, from 1 to about 7 weight %, from 1 to about 8.75 weight %, from 1 to about 8.5 weight %, from 1 to about 8.25 weight %, from 1 to about 8 weight %, from 1 to about 9.75 weight %, from 1 to about 9.5 weight %, from 1 to about 9.25 weight %, from 1 to about 9 weight %, from 1 to about 11 weight %, from 1 to about 11 weight %, from 1 to about 11 weight %, from 1 to about 10 weight %, from 1 to about 11.75 weight %, from 1 to about 11.5 weight %, from 1 to about 11.25 weight %, from 1 to about 11 weight %, from 1 to about 12.75 weight %, from 1 to about 12.5 weight %, from 1 to about 12.25 weight %, from 1 to about 12 weight %, from 1 to about 13.75 weight %, from 1 to about 13.5 weight %, from 1 to about 13.25 weight %, from 1 to about 13 weight %, from about 1 to about 14.75 weight %, from 1 to about 14.5 weight %, from 1 to about 14.25 weight %, from 1 to about 14 weight %, from about 1.25 to about 1.75 weight %, from about 1.25 to about 1.5 weight %, from about 1.25 to about 2.75 weight %, from about 1.25 to about 2.5 weight %, from about 1.25 to about 2.25 weight %, from about 1.25 to about 2 weight %, from about 1.25 to about 3.75 weight %, from about 1.25 to about 3.5 weight %, from about 1.25 to about 3.25 weight %, from about 1.25 to about 3 weight %, from about 1.25 to about 4.75 weight %, from about 1.25 to about 4.5 weight %, from about 1.25 to about 4.25 weight %, from about 1.25 to about 4 weight %, from about 1.25 to about 5.75 weight %, from about 1.25 to about 5.5 weight %, from about 1.25 to about 5.25 weight %, from about 1.25 to about 5 weight %, from about 1.25 to about 6.75 weight %, from about 1.25 to about 6.5 weight %, from about 1.25 to about 6.25 weight %, from about 1.25 to about 6 weight %, from about 1.25 to about 7.75 weight %, from about 1.25 to about 7.5 weight %, from about 1.25 to about 7.25 weight %, from about 1.25 to about 7 weight %, from about 1.25 to about 8.75 weight %, from about 1.25 to about 8.5 weight %, from about 1.25 to about 8.25 weight %, from about 1.25 to about 8 weight %, from about 1.25 to about 9.75 weight %, from about 1.25 to about 9.5 weight %, from about 1.25 to about 9.25 weight %, from about 1.25 to about 9 weight %, from about 1.25 to about 11 weight %, from about 1.25 to about 11 weight %, from about 1.25 to about 11 weight %, from about 1.25 to about 10 weight %, from about 1.25 to about 11.75 weight %, from about 1.25 to about 11.5 weight %, from about 1.25 to about 11.25 weight %, from about 1.25 to about 11 weight %, from about 1.25 to about 12.75 weight %, from about 1.25 to about 12.5 weight %, from about 1.25 to about 12.25 weight %, from about 1.25 to about 12 weight %, from about 1.25 to about 13.75 weight %, from about 1.25 to about 13.5 weight %, from about 1.25 to about 13.25 weight %, from about 1.25 to about 13 weight %, from about 1.25 to about 14.75 weight %, from about 1.25 to about 14.5 weight %, from about 1.25 to about 14.25 weight %, from about 1.25 to about 14 weight %, from about 1.25 to about 15 weight %, from about 1.5 to about 1.75 weight %, from about 1.5 to about 2.75 weight %, from about 1.5 to about 2.5 weight %, from about 1.5 to about 2.25 weight %, from about 1.5 to about 2 weight %, from about 1.5 to about 3.75 weight %, from about 1.5 to about 3.5 weight %, from about 1.5 to about 3.25 weight %, from about 1.5 to about 3 weight %, from about 1.5 to about 4.75 weight %, from about 1.5 to about 4.5 weight %, from about 1.5 to about 4.25 weight %, from about 1.5 to about 4 weight %, from about 1.5 to about 5.75 weight %, from about 1.5 to about 5.5 weight %, from about 1.5 to about 5.25 weight %, from about 1.5 to about 5 weight %, from about 1.5 to about 6.75 weight %, from about 1.5 to about 6.5 weight %, from about 1.5 to about 6.25 weight %, from about 1.5 to about 6 weight %, from about 1.5 to about 7.75 weight %, from about 1.5 to about 7.5 weight %, from about 1.5 to about 7.25 weight %, from about 1.5 to about 7 weight %, from about 1.5 to about 8.75 weight %, from about 1.5 to about 8.5 weight %, from about 1.5 to about 8.25 weight %, from about 1.5 to about 8 weight %, from about 1.5 to about 9.75 weight %, from about 1.5 to about 9.5 weight %, from about 1.5 to about 9.25 weight %, from about 1.5 to about 9 weight %, from about 1.5 to about 11 weight %, from about 1.5 to about 11 weight %, from about 1.5 to about 11 weight %, from about 1.5 to about 10 weight %, from about 1.5 to about 11.75 weight %, from about 1.5 to about 11.5 weight %, from about 1.5 to about 11.5 weight %, from about 1.5 to about 11 weight %, from about 1.5 to about 12.75 weight %, from about 1.5 to about 12.5 weight %, from about 1.5 to about 12.25 weight %, from about 1.5 to about 12 weight %, from about 1.5 to about 13.75 weight %, from about 1.5 to about 13.5 weight %, from about 1.5 to about 13.25 weight %, from about 1.5 to about 13 weight %, from about 1.5 to about 14.75 weight %, from about 1.5 to about 14.5 weight %, from about 1.5 to about 14.25 weight %, from about 1.5 to about 14 weight %, from about 1.5 to 15 weight %, from about 1.75 to about 2.75 weight %, from about 1.75 to about 2.5 weight %, from about 1.75 to about 2.25 weight %, from about 1.75 to about 2 weight %, from about 1.75 to about 3.75 weight %, from about 1.75 to about 3.5 weight %, from about 1.75 to about 3.25 weight %, from about 1.75 to about 3 weight %, from about 1.75 to about 4.75 weight %, from about 1.75 to about 4.5 weight %, from about 1.75 to about 4.25 weight %, from about 1.75 to about 4 weight %, from about 1.75 to about 5.75 weight %, from about 1.75 to about 5.5 weight %, from about 1.75 to about 5.25 weight %, from about 1.75 to about 5 weight %, from about 1.75 to about 6.75 weight %, from about 1.75 to about 6.5 weight %, from about 1.75 to about 6.25 weight %, from about 1.75 to about 6 weight %, from about 1.75 to about 7.75 weight %, from about 1.75 to about 7.5 weight %, from about 1.75 to about 7.25 weight %, from about 1.75 to about 7 weight %, from about 1.75 to about 8.75 weight %, from about 1.75 to about 8.5 weight %, from about 1.75 to about 8.25 weight %, from about 1.75 to about 8 weight %, from about 1.75 to about 9.75 weight %, from about 1.75 to about 9.5 weight %, from about 1.75 to about 9.25 weight %, from about 1.75 to about 9 weight %, from about 1.75 to about 11 weight %, from about 1.75 to about 11 weight %, from about 1.75 to about 11 weight %, from about 1.75 to about 10 weight %, from about 1.75 to about 11.75 weight %, from about 1.75 to about 11.75 weight %, from about 1.75 to about 11.75 weight %, from about 1.75 to about 11 weight %, from about 1.75 to about 12.75 weight %, from about 1.75 to about 12.5 weight %, from about 1.75 to about 12.25 weight %, from about 1.75 to about 12 weight %, from about 1.75 to about 13.75 weight %, from about 1.75 to about 13.5 weight %, from about 1.75 to about 13.25 weight %, from about 1.75 to about 13 weight %, from about 1.75 to about 14.75 weight %, from about 1.75 to about 14.5 weight %, from about 1.75 to about 14.25 weight %, from about 1.75 to about 14 weight %, from about 1.75 to 15 weight %, etc. based on the total weight of the fat-emulsifier component.

In certain embodiments, the fat-emulsifier component comprises the emulsifier or lecithin component in an amount of about 1 weight %, about 1.25 weight %, about 1.5 weight %, about 1.75 weight %, about 2 weight %, about 2.25 weight %, about 2.5 weight %, about 2.75 weight %, about 3 weight %, about 3.25 weight %, about 3.5 weight %, about 3.75 weight %, about 4 weight %, about 4.25 weight %, about 4.5 weight %, about 4.75 weight %, about 5 weight %, about 5.25 weight %, about 5.5 weight %, about 5.75 weight %, about 6 weight %, about 6.25 weight %, about 6.5 weight %, about 6.75 weight %, about 7 weight %, about 7.25 weight %, about 7.5 weight %, about 7.75 weight %, about 8 weight %, about 8.25 weight %, about 8.5 weight %, about 8.75 weight %, about 9 weight %, about 9.25 weight %, about 9.5 weight %, about 9.75 weight %, about 10 weight %, about 10.25 weight %, about 10.5 weight %, about 10.75 weight %, about 11 weight %, about 11.25 weight %, about 11.5 weight %, about 11.75 weight %, about 12 weight %, about 12.25 weight %, about 12.5 weight %, about 12.75 weight %, about 13 weight %, about 13.25 weight %, about 13.5 weight %, about 13.75 weight %, about 14 weight %, about 14.25 weight %, about 14.5 weight %, about 14.75 weight %, or 15 weight % based on the total weight of the fat-emulsifier component.

The food product of the present invention comprises at least one solid comestible component; and at least one fat-emulsifier component. The present inventors unexpectedly and surprisingly discovered that the fat-emulsifier components substantially enhance the mouthfeel and tactile perception of low-oil food products, as illustrated in the examples below and in the appended figures. The fat-emulsifier component, in combination with at least one solid comestible component, synergistically increases the effectiveness of the compositions and methods of the present invention. In some embodiments, the synergistic compositions of the present invention result in significantly improved mouthfeel and tactile perception, as compared to the mouthfeel and tactile perception of low-oil food products alone. The mouthfeel of the food products of the present invention is superior to conventional reduced fat products because the fat-emulsifier component preferentially wets the lubricated surfaces and results in a high degree of oiliness perception. The fat-emulsifier component renders the oil more efficient in spreading across the oral surface and thus, increases oiliness perception.

The food products may comprise any combination of one or more of the fat-emulsifier components and solid comestible components described herein. Such combinations may include any one or more, two or more, three or more, four or more, five or more, etc. of the fat-emulsifier components described herein topically applied to any one or more, two or more, three or more, four or more, five or more, etc. of the solid comestible components described herein.

In some embodiments, the food products of the present invention may further comprise non-aqueous food additives such as non-aqueous flavorings, seasonings, preservatives, color, edible acids, etc. topically applied to the combination of the solid comestible component and fat-emulsifier component. For example, in some embodiments, the food products of the present invention may comprise a solid comestible component, the fat-emulsifier component topically applied to the solid comestible component, and at least one non-aqueous food additive selected from the group consisting of non-aqueous flavorings, seasonings, preservatives, color, edible acids, and combinations thereof topically applied to the combination of the solid comestible component and fat-emulsifier component. In some embodiments, the food products of the present invention may include at least one non-aqueous food additive topically applied to the combination of the solid comestible component and fat-emulsifier component. In other embodiments, the food products may include combinations of two or more non-aqueous food additives, including combinations of any two or more, three or more, four or more, five or more, etc. of the non-aqueous food additives described herein topically applied to the combination of the solid comestible component and fat-emulsifier component.

As used herein, "topically applied to the solid comestible component" refers to application of the fat-emulsifier component to an outer surface of the solid comestible component. Examples of topical application useful in the present invention include, but are not limited to, spraying the fat-emulsifier component onto a surface of the solid comestible component, dipping the solid comestible component into the fat-emulsifier component, coating the solid comestible component with the fat-emulsifier component, and combinations thereof.

In certain embodiments, the fat-emulsifier component covers about 0.1 to about 100% of the surface of the comestible component. In some embodiments, the fat-emulsifier component covers at least about 0.1 % of the surface of the comestible component, at least about 15% of the surface of the comestible component, at least about 25% of the surface of the comestible component, at least about 35% of the surface of the comestible component, at least about 50% of the surface of the comestible component, at least about 60% of the surface of the comestible component, at least about 75% of the surface of the comestible component, at least about 90% of the surface of the comestible component, or 100% of the surface of the comestible component. In certain embodiments, the entire surface of the comestible component is covered with a film of the fat-emulsifier component. In other embodiments, at least one side of the comestible component is covered with a film of the fat-emulsifier component.

In some embodiments, the food product comprises the fat-emulsifier component in an amount of from about 0.1 to about 15 weight percent based on the total weight of the food product (i.e. the combination of the solid comestible component and fat-emulsifier component). In further embodiments, the food product comprises the fat-emulsifier component in an amount of from about 0.1 to about 1.75 weight %, from about 0.1 to about 1.5 weight %, from about 0.1 to about 1.25 weight %, from about 0.1 to about 1 weight %, from about 0.1 to about 2.75 weight %, from about 0.1 to about 2.5 weight %, from about 0.1 to about 2.25 weight %, from about 0.1 to about 2 weight %, from about 0.1 to about 3.75 weight %, from about 0.1 to about 3.5 weight %, from about 0.1 to about 3.25 weight %, from about 0.1 to about 3 weight %, from about 0.1 to about 4.75 weight %, from about 0.1 to about 4.5 weight %, from about 0.1 to about 4.25 weight %, from about 0.1 to about 4 weight %, from about 0.1 to about 5.75 weight %, from about 0.1 to about 5.5 weight %, from about 0.1 to about 5.25 weight %, from about 0.1 to about 5 weight %, from about 0.1 to about 6.75 weight %, from about 0.1 to about 6.5 weight %, from about 0.1 to about 6.25 weight %, from about 0.1 to about 6 weight %, from about 0.1 to about 7.75 weight %, from about 0.1 to about 7.5 weight %, from about 0.1 to about 7.25 weight %, from about 0.1 to about 7 weight %, from about 0.1 to about 8.75 weight %, from about 0.1 to about 8.5 weight %, from about 0.1 to about 8.25 weight %, from about 0.1 to about 8 weight %, from about 0.1 to about 9.75 weight %, from about 0.1 to about 9.5 weight %, from about 0.1 to about 9.25 weight %, from about 0.1 to about 9 weight %, from about 0.1 to about 10.75 weight %, from about 0.1 to about 10.5 weight %, from about 0.1 to about 10.25 weight %, from about 0.1 to about 10 weight %, from about 0.1 to about 11.75 weight %, from about 0.1 to about 11.5 weight %, from about 0.1 to about 11.25 weight %, from about 0.1 to about 11 weight %, from about 0.1 to about 12.75 weight %, from about 0.1 to about 12.5 weight %, from about 0.1 to about 12.25 weight %, from about 0.1 to about 12 weight %, from about 0.1 to about 13.75 weight %, from about 0.1 to about 13.5 weight %, from about 0.1 to about 13.25 weight %, from about 0.1 to about 13 weight %, from about 0.1 to about 14.75 weight %, from about 0.1 to about 14.5 weight %, from about 0.1 to about 14.25 weight %, from about 0.1 to about 14 weight %, from about 0.1 to about 15 weight %, from about 0.25 to about 1.75 weight %, from about 0.25 to about 1.5 weight %, from about 0.25 to about 1.25 weight %, from about 0.25 to about 1 weight %, from about 0.25 to about 2.75 weight %, from about 0.25 to about 2.5 weight %, from about 0.25 to about 2.25 weight %, from about 0.25 to about 2 weight %, from about 0.25 to about 3.75 weight %, from about 0.25 to about 3.5 weight %, from about 0.25 to about 3.25 weight %, from about 0.25 to about 3 weight %, from about 0.25 to about 4.75 weight %, from about 0.25 to about 4.5 weight %, from about 0.25 to about 4.25 weight %, from about 0.25 to about 4 weight %, from about 0.25 to about 5.75 weight %, from about 0.25 to about 5.5 weight %, from about 0.25 to about 5.25 weight %, from about 0.25 to about 5 weight %, from about 0.25 to about 6.75 weight %, from about 0.25 to about 6.5 weight %, from about 0.25 to about 6.25 weight %, from about 0.25 to about 6 weight %, from about 0.25 to about 7.75 weight %, from about 0.25 to about 7.5 weight %, from about 0.25 to about 7.25 weight %, from about 0.25 to about 7 weight %, from about 0.25 to about 8.75 weight %, from about 0.25 to about 8.5 weight %, from about 0.25 to about 8.25 weight %, from about 0.25 to about 8 weight %, from about 0.25 to about 9.75 weight %, from about 0.25 to about 9.5 weight %, from about 0.25 to about 9.25 weight %, from about 0.25 to about 9 weight %, from about 0.25 to about 10.75 weight %, from about 0.25 to about 10.5 weight %, from about 0.25 to about 10.25 weight %, from about 0.25 to about 10 weight %, from about 0.25 to about 11.75 weight %, from about 0.25 to about 11.5 weight %, from about 0.25 to about 11.25 weight %, from about 0.25 to about 11 weight %, from about 0.25 to about 12.75 weight %, from about 0.25 to about 12.5 weight %, from about 0.25 to about 12.25 weight %, from about 0.25 to about 12 weight %, from about 0.25 to about 13.75 weight %, from about 0.25 to about 13.5 weight %, from about 0.25 to about 13.25 weight %, from about 0.25 to about 13 weight %, from about 0.25 to about 14.75 weight %, from about 0.25 to about 14.5 weight %, from about 0.25 to about 14.25 weight %, from about 0.25 to about 14 weight %, from about 0.25 to about 15 weight %, from about 0.5 to about 1.75 weight %, from about 0.5 to about 1.5 weight %, from about 0.5 to about 1.25 weight %, from about 0.5 to about 1 weight %, from about 0.5 to about 2.75 weight %, from about 0.5 to about 2.5 weight %, from about 0.5 to about 2.25 weight %, from about 0.5 to about 2 weight %, from about 0.5 to about 3.75 weight %, from about 0.5 to about 3.5 weight %, from about 0.5 to about 3.25 weight %, from about 0.5 to about 3 weight %, from about 0.5 to about 4.75 weight %, from about 0.5 to about 4.5 weight %, from about 0.5 to about 4.25 weight %, from about 0.5 to about 4 weight %, from about 0.5 to about 5.75 weight %, from about 0.5 to about 5.5 weight %, from about 0.5 to about 5.25 weight %, from about 0.5 to about 5 weight %, from about 0.5 to about 6.75 weight %, from about 0.5 to about 6.5 weight %, from about 0.5 to about 6.25 weight %, from about 0.5 to about 6 weight %, from about 0.5 to about 7.75 weight %, from about 0.5 to about 7.5 weight %, from about 0.5 to about 7.25 weight %, from about 0.5 to about 7 weight %, from about 0.5 to about 8.75 weight %, from about 0.5 to about 8.5 weight %, from about 0.5 to about 8.25 weight %, from about 0.5 to about 8 weight %, from about 0.5 to about 9.75 weight %, from about 0.5 to about 9.5 weight %, from about 0.5 to about 9.25 weight %, from about 0.5 to about 9 weight %, from about 0.5 to about 10.75 weight %, from about 0.5 to about 10.5 weight %, from about 0.5 to about 10.5 weight %, from about 0.5 to about 10 weight %, from about 0.5 to about 11.75 weight %, from about 0.5 to about 11.5 weight %, from about 0.5 to about 11.25 weight %, from about 0.5 to about 11 weight %, from about 0.5 to about 12.75 weight %, from about 0.5 to about 12.5 weight %, from about 0.5 to about 12.25 weight %, from about 0.5 to about 12 weight %, from about 0.5 to about 13.75 weight %, from about 0.5 to about 13.5 weight %, from about 0.5 to about 13.25 weight %, from about 0.5 to about 13 weight %, from about 0.5 to about 14.75 weight %, from about 0.5 to about 14.5 weight %, from about 0.5 to about 14.25 weight %, from about 0.5 to about 14 weight %, from about 0.5 to about 15 weight %, from about 0.75 to about 1.75 weight %, from about 0.75 to about 1.5 weight %, from about 0.75 to about 1.25 weight %, from about 0.75 to about 1 weight %, from about 0.75 to about 2.75 weight %, from about 0.75 to about 2.5 weight %, from about 0.75 to about 2.25 weight %, from about 0.75 to about 2 weight %, from about 0.75 to about 3.75 weight %, from about 0.75 to about 3.5 weight %, from about 0.75 to about 3.25 weight %, from about 0.75 to about 3 weight %, from about 0.75 to about 4.75 weight %, from about 0.75 to about 4.5 weight %, from about 0.75 to about 4.25 weight %, from about 0.75 to about 4 weight %, from about 0.75 to about 5.75 weight %, from about 0.75 to about 5.5 weight %, from about 0.75 to about 5.25 weight %, from about 0.75 to about 5 weight %, from about 0.75 to about 6.75 weight %, from about 0.75 to about 6.5 weight %, from about 0.75 to about 6.25 weight %, from about 0.75 to about 6 weight %, from about 0.75 to about 7.75 weight %, from about 0.75 to about 7.5 weight %, from about 0.75 to about 7.25 weight %, from about 0.75 to about 7 weight %, from about 0.75 to about 8.75 weight %, from about 0.75 to about 8.5 weight %, from about 0.75 to about 8.25 weight %, from about 0.75 to about 8 weight %, from about 0.75 to about 9.75 weight %, from about 0.75 to about 9.5 weight %, from about 0.75 to about 9.25 weight %, from about 0.75 to about 9 weight %, from about 0.75 to about 10.75 weight %, from about 0.75 to about 10.75 weight %, from about 0.75 to about 10.75 weight %, from about 0.75 to about 10 weight %, from about 0.75 to about 11.75 weight %, from about 0.75 to about 11.5 weight %, from about 0.75 to about 11.25 weight %, from about 0.75 to about 11 weight %, from about 0.75 to about 12.75 weight %, from about 0.75 to about 12.5 weight %, from about 0.75 to about 12.25 weight %, from about 0.75 to about 12 weight %, from about 0.75 to about 13.75 weight %, from about 0.75 to about 13.5 weight %, from about 0.75 to about 13.25 weight %, from about 0.75 to about 13 weight %, from about 0.75 to about 14.75 weight %, from about 0.75 to about 14.5 weight %, from about 0.75 to about 14.25 weight %, from about 0.75 to about 14 weight %, from about 0.75 to about 15 weight %, from about 1 to about 1.75 weight %, from about 1 to about 1.5 weight %, from about 1 to about 1.25 weight %, from about 1 to about 2.75 weight %, from about 1 to about 2.5 weight %, from about 1 to about 2.25 weight %, from about 1 to about 2 weight %, from about 1 to about 3.75 weight %, from about 1 to about 3.5 weight %, from about 1 to about 3.25 weight %, from about 1 to about 3 weight %, from about 1 to about 4.75 weight %, from about 1 to about 4.5 weight %, from about 1 to about 4.25 weight %, from about 1 to about 4 weight %, from about 1 to about 5.75 weight %, from about 1 to about 5.5 weight %, from about 1 to about 5.25 weight %, from about 1 to about 5 weight %, from about 1 to about 6.75 weight %, from about 1 to about 6.5 weight %, from about 1 to about 6.25 weight %, from about 1 to about 6 weight %, from about 1 to about 7.75 weight %, from about 1 to about 7.5 weight %, from about 1 to about 7.25 weight %, from about 1 to about 7 weight %, from about 1 to about 8.75 weight %, from about 1 to about 8.5 weight %, from about 1 to about 8.25 weight %, from about 1 to about 8 weight %, from about 1 to about 9.75 weight %, from about 1 to about 9.5 weight %, from about 1 to about 9.25 weight %, from about 1 to about 9 weight %, from about 1 to about 11 weight %, from about 1 to about 11 weight %, from about 1 to about 11 weight %, from about 1 to about 10 weight %, from about 1 to about 11.75 weight %, from about 1 to about 11.5 weight %, from about 1 to about 11.25 weight %, from about 1 to about 11 weight %, from about 1 to about 12.75 weight %, from about 1 to about 12.5 weight %, from about 1 to about 12.25 weight %, from about 1 to about 12 weight %, from about 1 to about 13.75 weight %, from about 1 to about 13.5 weight %, from about 1 to about 13.25 weight %, from about 1 to about 13 weight %, from about 1 to about 14.75 weight %, from about 1 to about 14.5 weight %, from about 1 to about 14.25 weight %, from about 1 to about 14 weight %, from about 1 to about 15 weight %, from about 1.25 to about 1.75 weight %, from about 1.25 to about 1.5 weight %, from about 1.25 to about 2.75 weight %, from about 1.25 to about 2.5 weight %, from about 1.25 to about 2.25 weight %, from about 1.25 to about 2 weight %, from about 1.25 to about 3.75 weight %, from about 1.25 to about 3.5 weight %, from about 1.25 to about 3.25 weight %, from about 1.25 to about 3 weight %, from about 1.25 to about 4.75 weight %, from about 1.25 to about 4.5 weight %, from about 1.25 to about 4.25 weight %, from about 1.25 to about 4 weight %, from about 1.25 to about 5.75 weight %, from about 1.25 to about 5.5 weight %, from about 1.25 to about 5.25 weight %, from about 1.25 to about 5 weight %, from about 1.25 to about 6.75 weight %, from about 1.25 to about 6.5 weight %, from about 1.25 to about 6.25 weight %, from about 1.25 to about 6 weight %, from about 1.25 to about 7.75 weight %, from about 1.25 to about 7.5 weight %, from about 1.25 to about 7.25 weight %, from about 1.25 to about 7 weight %, from about 1.25 to about 8.75 weight %, from about 1.25 to about 8.5 weight %, from about 1.25 to about 8.25 weight %, from about 1.25 to about 8 weight %, from about 1.25 to about 9.75 weight %, from about 1.25 to about 9.5 weight %, from about 1.25 to about 9.25 weight %, from about 1.25 to about 9 weight %, from about 1.25 to about 11 weight %, from about 1.25 to about 11 weight %, from about 1.25 to about 11 weight %, from about 1.25 to about 10 weight %, from about 1.25 to about 11.75 weight %, from about 1.25 to about 11.5 weight %, from about 1.25 to about 11.25 weight %, from about 1.25 to about 11 weight %, from about 1.25 to about 12.75 weight %, from about 1.25 to about 12.5 weight %, from about 1.25 to about 12.25 weight %, from about 1.25 to about 12 weight %, from about 1.25 to about 13.75 weight %, from about 1.25 to about 13.5 weight %, from about 1.25 to about 13.25 weight %, from about 1.25 to about 13 weight %, from about 1.25 to about 14.75 weight %, from about 1.25 to about 14.5 weight %, from about 1.25 to about 14.25 weight %, from about 1.25 to about 14 weight %, from about 1.25 to about 15 weight %, from about 1.5 to about 1.75 weight %, from about 1.5 to about 2.75 weight %, from about 1.5 to about 2.5 weight %, from about 1.5 to about 2.25 weight %, from about 1.5 to about 2 weight %, from about 1.5 to about 3.75 weight %, from about 1.5 to about 3.5 weight %, from about 1.5 to about 3.25 weight %, from about 1.5 to about 3 weight %, from about 1.5 to about 4.75 weight %, from about 1.5 to about 4.5 weight %, from about 1.5 to about 4.25 weight %, from about 1.5 to about 4 weight %, from about 1.5 to about 5.75 weight %, from about 1.5 to about 5.5 weight %, from about 1.5 to about 5.25 weight %, from about 1.5 to about 5 weight %, from about 1.5 to about 6.75 weight %, from about 1.5 to about 6.5 weight %, from about 1.5 to about 6.25 weight %, from about 1.5 to about 6 weight %, from about 1.5 to about 7.75 weight %, from about 1.5 to about 7.5 weight %, from about 1.5 to about 7.25 weight %, from about 1.5 to about 7 weight %, from about 1.5 to about 8.75 weight %, from about 1.5 to about 8.5 weight %, from about 1.5 to about 8.25 weight %, from about 1.5 to about 8 weight %, from about 1.5 to about 9.75 weight %, from about 1.5 to about 9.5 weight %, from about 1.5 to about 9.25 weight %, from about 1.5 to about 9 weight %, from about 1.5 to about 11 weight %, from about 1.5 to about 11 weight %, from about 1.5 to about 11 weight %, from about 1.5 to about 10 weight %, from about 1.5 to about 11.75 weight %, from about 1.5 to about 11.5 weight %, from about 1.5 to about 11.5 weight %, from about 1.5 to about 11 weight %, from about 1.5 to about 12.75 weight %, from about 1.5 to about 12.5 weight %, from about 1.5 to about 12.25 weight %, from about 1.5 to about 12 weight %, from about 1.5 to about 13.75 weight %, from about 1.5 to about 13.5 weight %, from about 1.5 to about 13.25 weight %, from about 1.5 to about 13 weight %, from about 1.5 to about 14.75 weight %, from about 1.5 to about 14.5 weight %, from about 1.5 to about 14.25 weight %, from about 1.5 to about 14 weight %, from about 1.5 to about 15 weight %, from about 1.75 to about 2.75 weight %, from about 1.75 to about 2.5 weight %, from about 1.75 to about 2.25 weight %, from about 1.75 to about 2 weight %, from about 1.75 to about 3.75 weight %, from about 1.75 to about 3.5 weight %, from about 1.75 to about 3.25 weight %, from about 1.75 to about 3 weight %, from about 1.75 to about 4.75 weight %, from about 1.75 to about 4.5 weight %, from about 1.75 to about 4.25 weight %, from about 1.75 to about 4 weight %, from about 1.75 to about 5.75 weight %, from about 1.75 to about 5.5 weight %, from about 1.75 to about 5.25 weight %, from about 1.75 to about 5 weight %, from about 1.75 to about 6.75 weight %, from about 1.75 to about 6.5 weight %, from about 1.75 to about 6.25 weight %, from about 1.75 to about 6 weight %, from about 1.75 to about 7.75 weight %, from about 1.75 to about 7.5 weight %, from about 1.75 to about 7.25 weight %, from about 1.75 to about 7 weight %, from about 1.75 to about 8.75 weight %, from about 1.75 to about 8.5 weight %, from about 1.75 to about 8.25 weight %, from about 1.75 to about 8 weight %, from about 1.75 to about 9.75 weight %, from about 1.75 to about 9.5 weight %, from about 1.75 to about 9.25 weight %, from about 1.75 to about 9 weight %, from about 1.75 to about 11 weight %, from about 1.75 to about 11 weight %, from about 1.75 to about 11 weight %, from about 1.75 to about 10 weight %, from about 1.75 to about 11.75 weight %, from about 1.75 to about 11.75 weight %, from about 1.75 to about 11.75 weight %, from about 1.75 to about 11 weight %, from about 1.75 to about 12.75 weight %, from about 1.75 to about 12.5 weight %, from about 1.75 to about 12.25 weight %, from about 1.75 to about 12 weight %, from about 1.75 to about 13.75 weight %, from about 1.75 to about 13.5 weight %, from about 1.75 to about 13.25 weight %, from about 1.75 to about 13 weight %, from about 1.75 to about 14.75 weight %, from about 1.75 to about 14.5 weight %, from about 1.75 to about 14.25 weight %, from about 1.75 to about 14 weight %, from about 1.75 to about 15 weight %, etc.

In certain embodiments, the food product comprises the fat-emulsifier component in an amount of about 0.1 weight %, about 0.11 weight %, about 0.12 weight %, about 0.13 weight %, about 0.14 weight %, about 0.15 weight %, about 0.16 weight %, about 0.17 weight %, about 0.18 weight %, about 0.19 weight %, about 0.2 weight %, about 0.21 weight %, about 0.22 weight %, about 0.23 weight %, about 0.24 weight %, about 0.25 weight %, about 0.26 weight %, about 0.27 weight %, about 0.28 weight %, about 0.29 weight %, about 0.3 weight %, about 0.31 weight %, about 0.32 weight %, about 0.33 weight %, about 0.34 weight %, about 0.35 weight %, about 0.36 weight %, about 0.37 weight %, about 0.38 weight %, about 0.39 weight %, about 0.4 weight %, about 0.41 weight %, about 0.42 weight %, about 0.43 weight %, about 0.44 weight %, about 0.45 weight %, about 0.46 weight %, about 0.47 weight %, about 0.48 weight %, about 0.49 weight %, about 0.5 weight %, about 0.51 weight %, about 0.52 weight %, about 0.53 weight %, about 0.54 weight %, about 0.55 weight %, about 0.56 weight %, about 0.57 weight %, about 0.58 weight %, about 0.59 weight %, about 0.6 weight %, about 0.61 weight %, about 0.62 weight %, about 0.63 weight %, about 0.64 weight %, about 0.65 weight %, about 0.66 weight %, about 0.67 weight %, about 0.68 weight %, about 0.69 weight %, about 0.7 weight %, about 0.71 weight %, about 0.72 weight %, about 0.73 weight %, about 0.74 weight %, about 0.75 weight %, about 0.76 weight %, about 0.77 weight %, about 0.78 weight %, about 0.79 weight %, about 0.8 weight %, about 0.81 weight %, about 0.82 weight %, about 0.83 weight %, about 0.84 weight %, about 0.85 weight %, about 0.86 weight %, about 0.87 weight %, about 0.88 weight %, about 0.89 weight %, about 0.9 weight %, about 1 weight %, about 1.25 weight %, about 1.5 weight %, about 1.75 weight %, about 2 weight %, about 2.25 weight %, about 2.5 weight %, about 2.75 weight %, about 3 weight %, about 3.25 weight %, about 3.5 weight %, about 3.75 weight %, about 4 weight %, about 4.25 weight %, about 4.5 weight %, about 4.75 weight %, about 5 weight %, about 5.25 weight %, about 5.5 weight %, about 5.75 weight %, about 6 weight %, about 6.25 weight %, about 6.5 weight %, about 6.75 weight %, about 7 weight %, about 7.25 weight %, about 7.5 weight %, about 7.75 weight %, about 8 weight %, about 8.25 weight %, about 8.5 weight %, about 8.75 weight %, about 9 weight %, about 9.25 weight %, about 9.5 weight %, about 9.75 weight %, about 10 weight %, about 10.25 weight %, about 10.5 weight %, about 10.75 weight %, about 11 weight %, about 11.25 weight %, about 11.5 weight %, about 11.75 weight %, about 12 weight %, about 12.25 weight %, about 12.5 weight %, about 12.75 weight %, about 13 weight %, about 13.25 weight %, about 13.5 weight %, about 13.75 weight %, about 14 weight %, about 14.25 weight %, about 14.5 weight %, about 14.75 weight %, or about 15 weight %.

In other embodiments, the food product of the present invention comprises a solid potato component, wherein said solid potato component has an oil content less than or equal to about 7g/28.4g (7 grams/ounce); and a fat-emulsifier component topically applied to the solid potato component, wherein the fat-emulsifier component comprises: high oleic sunflower oil; and polyglycerol polyricinoleate or acetic acid esters, wherein said polyglycerol polyricinoleate or acetic acid esters is dispersed or solubilized in the high oleic unflower oil.

The solid potato component may be any solid potato or potato-based material. The solid potato component is not limited to any particular variety. In some embodiments, the solid potato component includes one variety of a particular type of solid potato component. For example, the solid potato component may comprise one variety of potato (i.e. Saturna, Lady Rosetta, Lady Clair, Hermes, Maris Piper, Erntestolz, Agria, Atlantic, Monona, Norchip, Snowden, Kennebec, Oneida, Tobique, Marfona, King Edward, Yukon Gold, Desiree, Karlena, Estima, Russet Burbank or Bintje, etc.). In other embodiments, the solid potato component may include combinations of two or more varieties of a particular type of solid potato component, including combinations of any two or more, three or more, four or more, five or more, etc. of varieties of the particular types of solid potato components described herein. For example, the solid potato component may include two or more varieties of potato (i.e. Saturna and Lady Rosetta, Saturna and Lady Clair, Saturna and Hermes, Saturna and Maris Piper, Saturna and Erntestolz, Saturna and Agria, Saturna and Atlantic, Saturna and Monona, Saturna and Norchip, Saturna and Snowden, Saturna and Kennebec, Saturna and Oneida, Saturna and Tobique, Saturna and Marfona, Saturna and King Edward, Saturna and Yukon Gold, Saturna and Desiree, Saturna and Karlena, Saturna and Estima, Saturna and Russet Burbank, Saturna and Bintje, etc.).

In some embodiments, the solid potato component comprises at least one chip, slice, flake, crisp, pellet, stick, cluster, cracker, cake, bar, dough, composite, puff, extrudate, cereal, solid matrix, extruded solid matrix, or combination thereof.

In some embodiments, the solid potato component has an oil content less than or equal to about 5 grams/ounce, less than or equal to about 3 grams/ounce, less than or equal to about 1 grams/ounce, or less than or equal to about 0.5 grams/ounce, and in each case 1 ounce equals 28,4 grams.

In some embodiments, the fat-emulsifier component comprises polyglycerol polyricinoleate. In other embodiments, the fat-emulsifier component comprises acetic acid esters. In certain embodiments, the fat-emulsifier component comprises about 5 weight % of the polyglycerol polyricinoleate or acetic acid esters based on the total weight of the fat-emulsifier component.

In some embodiments, the food product has an oil content less than or equal to about 7.5 grams/ounce, less than or equal to about 5.5 grams/ounce, less than or equal to about 3.5 grams/ounce, less than or equal to about 1.5 grams/ounce, or less than or equal to about 1 grams/ounce, and in each case 1 ounce equals 28,4 grams.

All discussion herein regarding the food product of the present invention refers to both the food product comprising a solid comestible component and the food product comprising a solid potato component.

In one aspect, the present invention provides a method of producing the food product of the present invention, which method comprises: dispersing or solubilizing the emulsifier component in the edible fat component to obtain the fat-emulsifier component; and topically applying the fat-emulsifier component to the solid comestible component.

In some embodiments, the method of producing the food product of the present invention comprises: dispersing or solubilizing the polyglycerol polyricinoleate or acetic acid esters in the high oleic sunflower oil to obtain the fat-emulsifier component; and topically applying the fat-emulsifier component to the solid potato component.

In certain embodiments, the methods of the present invention may further comprise a step of heating the solid comestible component or solid potato component prior to topically applying the fat-emulsifier component to the solid comestible component. In some embodiments, said heating comprises baking or frying the solid comestible component.

In some embodiments, the solid comestible component or solid potato component is heated prior to topically applying the fat-emulsifier component. In other embodiments, the solid comestible component or solid potato component is heated while topically applying the fat-emulsifier component to the solid comestible component.

In certain embodiments, topically applying comprises spraying the fat-emulsifier component onto a surface of the solid comestible component or solid potato component, dipping the solid comestible component or solid potato component into the fat-emulsifier component, coating the solid comestible component or solid potato component with the fat-emulsifier component, or a combination thereof.

In some embodiments, the method of the present invention further comprises a step of heating the solid comestible component prior to topically applying the fat-emulsifier component to the solid comestible component. Heating may be carried out by any method, using any suitable heating equipment. For example, heating may comprise baking the solid comestible component, frying the solid comestible component, or combinations thereof. In some embodiments, the solid comestible component is heated with a heat gun until the smell of fried notes occurs.

In some embodiments, the fat-emulsifier component is heated prior to topically applying the fat-emulsifier component to the solid comestible component. Heating may be carried out by any method, using any suitable heating equipment.

In other embodiments, the fat-emulsifier component is heated while topically applying the fat-emulsifier component to the solid comestible component. Heating may be carried out by any method, using any suitable heating equipment. For example, in some embodiments, the fat-emulsifier is applied to the solid comestible while in a heated pan coater.

Topical application of the fat-emulsifier component to the solid comestible component may comprise spraying the fat-emulsifier component onto a surface of the solid comestible component, dipping the solid comestible component into the fat-emulsifier component, coating the solid comestible component with the fat-emulsifier component, or combinations thereof.

In certain embodiments, the method of the present invention comprises dispersing polyglycerol polyricinoleate or acetic acid esters in high oleic sunflower oil to obtain the fat-emulsifier component; and topically applying the fat-emulsifier component to a solid potato component.

In some embodiments, the solid potato component is heated prior to topically applying the fat-emulsifier component to the solid potato component. Heating may be carried out by any method, using any suitable heating equipment. For example, heating may comprise baking the solid potato component, frying the solid potato component, or combinations thereof. In some embodiments, the solid potato component is heated with a heat gun until the smell of fried notes occurs.

In certain embodiments, the fat-emulsifier component is heated prior to topically applying the fat-emulsifier component to the solid potato component. Heating may be carried out by any method, using any suitable heating equipment.

In other embodiments, the fat-emulsifier component is heated while topically applying the fat-emulsifier component to the solid potato component. Heating may be carried out by any method, using any suitable heating equipment. For example, in some embodiments, the fat-emulsifier is applied to the solid potato component while in a heated pan coater.

In certain embodiments, topically applying comprises spraying the fat-emulsifier component onto a surface of the solid potato component, dipping the solid potato component into the fat-emulsifier component, coating the solid potato component with the fat-emulsifier component, or a combination thereof.

### EXAMPLES

The invention is further illustrated by reference to the following examples. The examples are representative, and they should not be construed to limit the scope of the invention.

In the following examples, 140g of the particular potato chip sample were weighed out and put into bench-top tumbler and then heated with heat gun until one could perceive fried notes. 8g (5% application level with 15% coverage) of oil phase (HOSO) containing 5wt% of emulsifier (PGPR) was then topically applied to the potato chips with a spraying device.

**TABLE 1:**

| COMPARATIVE EXAMPLE 1 (C1) | Full-fat potato chips |
|---|---|
| COMPARATIVE EXAMPLE 2 (C2) | Low-oil potato chips |
| COMPARATIVE EXAMPLE 3 (C3) | Low-oil potato chips with 0.5% high oleic sunflower oil topically applied |
| EXAMPLE 1 (E1) | Low-oil potato chips with 0.5% high oleic sunflower oil and 0.28% polyglycerol polyricinoleate topically applied |
| EXAMPLE 2 (E2) | Low-oil potato chips with 0.5% high oleic sunflower oil and 0.86% polyglycerol polyricinoleate topically applied |

Bench top sensory testing was then conducted on the various potato chip samples. The panelists were asked to rank the samples from most to least oily (1 being least oily and 5 being most oily). The results are summarized in Table 2 below.

**TABLE 2:**

| **Example:** | **C1** | **C2** | **C3** | **E1** | **E2** |
|---|---|---|---|---|---|
| Panelist: | | | | | |
| A | 4 | 1 | 2 | 5 | 3 |
| B | 1 | 3 | 2 | 5 | 4 |
| C | 4 | 2 | 1 | 3 | 5 |
| D | 2 | 1 | 3 | 5 | 3 |
| E | 2 | 1 | 3 | 4 | 5 |
| F | 3 | 1 | 4 | 5 | 2 |
| G | 4 | 1 | 5 | 3 | 2 |
| H | 3 | 5 | 2 | 1 | 4 |
| I | 4 | 1 | 5 | 3 | 2 |
| J | 2 | 1 | 5 | 3 | 4 |
| K | 3 | 1 | 2 | 4 | 5 |
| **Average:** | 2.9 | 1.6 | 3.1 | 3.7 | 3.5 |

In the following examples, 140g of the particular potato chip sample were weighed out and put into bench-top tumbler and then heated with heat gun until one could perceive fried notes. 8g (5% application level with 15% coverage) of oil phase (HOSO) containing 5wt% of emulsifier (PGPR) was then topically applied to the potato chips with a spraying device.

**TABLE 3:**

| | |
|---|---|
| COMPARATIVE EXAMPLE 4 (C4) | Classic LAY'S (full-fat potato chips) |
| COMPARATIVE EXAMPLE 5 (C5) | BAKED! LAY'S (Walker brand) |
| COMPARATIVE EXAMPLE 6 (C6) | BAKED! LAY'S (Walker brand) with 0.5% high oleic sunflower oil topically applied |
| EXAMPLE 3 (E3) | BAKED! LAY'S (Walker brand) with 0.5% high oleic sunflower oil and 0.28% polyglycerol polyricinoleate topically applied |
| EXAMPLE 4 (E4) | BAKED! LAY'S (Walker brand) with 0.5% high oleic sunflower oil and 0.86% polyglycerol polyricinoleate topically applied |

Bench top sensory testing was then conducted on the various potato chip samples. The panelists were asked to rank the samples from most to least oily (1 being least oily and 5 being most oily). The results are summarized in Table 4 below.

**TABLE 4:**

| **Example:** | **C4** | **C5** | **C6** | **E3** | **E4** |
|---|---|---|---|---|---|
| Panelist: | | | | | |
| A | 5 | 1 | 4 | 3 | 2 |
| B | 5 | 3 | 1 | 4 | 2 |
| C | 5 | 1 | 3 | 4 | 2 |
| D | 5 | 1 | 4 | 2 | 3 |
| E | 1 | 3 | 2 | 4 | 5 |
| F | 5 | 3 | 2 | 4 | 1 |
| G | 5 | 1 | 3 | 2 | 4 |
| H | 5 | 3 | 1 | 2 | 4 |
| I | 5 | 2 | 3 | 1 | 4 |
| J | 5 | 2 | 4 | 3 | 1 |
| K | 5 | 3 | 1 | 2 | 4 |
| **Average:** | 4.6 | 2.1 | 2.5 | 2.8 | 2.9 |

As can be seen from the examples above, the products of the present invention result in at least the same oiliness perception as that of full-fat potato chips. Thus, the products of the present invention are superior to conventional reduced fat products.

The citation of any document is not to be construed as an admission that it is prior art with respect to the present invention.

The terms used in the present specification shall be understood to have the meaning usually used in the field of art to which the present invention pertains, unless otherwise specified.

Where products are described herein as having, including, or comprising specific components, or where processes are described herein as having, including, or comprising specific process steps, it is contemplated that the products of the present invention can also consist essentially of, or consist of, the recited components, and that the processes of the present invention also consist essentially of, or consist of, the recited process steps.

Where a range of values is provided, each intervening value, to the tenth of the unit of the lower limit unless the context clearly dictates otherwise, between the upper and lower limit of that range and any other stated or intervening value in that stated range, is encompassed within the invention. The upper and lower limits of these smaller ranges may independently be included in the smaller ranges and are also encompassed within the invention, subject to any specifically excluded limit in the stated range. Where the stated range includes one or both of the limits, ranges excluding either or both of those included limits are also included in the invention. For example, a numerical range of "1 to 5" should be interpreted to include not only the explicitly recited values of 1 and 5, but also individual values and sub-ranges within the indicated range. Thus, included in this numerical range are individual values such as 2, 3, 4, etc. and sub-ranges such as from 1 to 3, from 2 to 4, from 3-5, etc. The listing of exemplary values or ranges is not a disclaimer of other values or ranges between and including the upper and lower limits of a given range.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrequited number may be a number, which, in the context in which it is presented, provides the substantial equivalent of the specifically recited number.

## Claims

1. A food product comprising:
a) a solid comestible component, wherein said solid comestible component has an oil content less than or equal to 15 grams/28.4 grams (15 grams/ounce); and
b) a fat-emulsifier component topically applied to the solid comestible component, wherein the fat-emulsifier component comprises:
i. an edible fat component; and either
iia. an emulsifier component with a hydrophilic-lipophilic balance (HLB) value less than or equal to 9, wherein the emulsifier component comprises polyglycerol polyricinoleate, or acetic acid esters; or
iib. a lecithin component with an acetone insolubles (AI) percentage in the range of from 20 to 90 and a phosphatidylcholine (PC) percentage of from 20 to 90, wherein the lecithin component comprises soybean lecithin, sunflower lecithin, canola lecithin, rapeseed lecithin, cottonseed lecithin, corn lecithin, flaxseed lecithin, hempseed lecithin, palm lecithin, egg lecithin, de-oiled lecithin, hydrophobically-modified lecithin, or a combination thereof,
wherein said emulsifier component or lecithin component is dispersed or solubilized in the edible fat component, and
wherein the fat-emulsifier component comprises 1 to 15 wt.% of the emulsifier component or lecithin component based on the total weight of the fat-emulsifier component.

2. The food product of claim 1, wherein the solid comestible component comprises a solid starch component, a solid fiber component, a solid carbohydrate component, a solid protein component, or a combination thereof; or
wherein the solid comestible component comprises potato, sweet potato, yam, corn, waxy corn, oats, wheat, sorghum, rice, millet, amaranth, kamut, rye, barley, waxy rice, kidney beans, pinto beans, lentils, chickpeas, tapioca, yucca, taro, beet, carrot, arrowroot, cassava, parsnip, Jerusalem artichoke, triticale, buckwheat, quinoa, banana, plantain, apple, strawberry, masa, rutabaga, turnip, jicama, garlic, onion, shallot, kale, spinach, kohlrabi, soybean, pepper, pea, or a combination thereof.

3. The food product of claim 1, wherein the solid comestible component comprises at least one chip, slice, flake, crisp, pellet, stick, cluster, cracker, cake, bar, dough, composite, puff, extrudate, cereal, solid matrix, extruded solid matrix, or combination thereof.

4. The food product of claim 1, wherein the solid comestible component has an oil content less than or equal to 7 grams/28.4 grams (7 grams/ounce), less than or equal to 5 grams/28.4 grams (5 grams/ounce), less than or equal to 3 grams/28.4 grams (3 grams/ounce), less than or equal to 1 grams/28.4 grams (1 grams/ounce), or less than or equal to 0.5 grams/28.4 grams (0.5 grams/ounce).

5. The food product of claim 1, wherein the edible fat component comprises a vegetable oil, animal oil, animal fat, sucrose polyester, or combination thereof;
optionally wherein the vegetable oil comprises sunflower oil, mid oleic sunflower oil, high oleic sunflower oil, canola oil, soybean oil, palm kernel oil, coconut oil, corn oil, cottonseed oil, palm oil, palm olein, safflower oil, high oleic safflower oil, palm stearin, rapeseed oil, or a combination thereof;
further optionally wherein the vegetable oil comprises high oleic sunflower oil.

6. The food product of claim 1, wherein the emulsifier component has an HLB value less than 8, less than or equal to 5, less than or equal to 4, less than or equal to 3, less than or equal to 1.5, less than or equal to 1, or less than or equal to 0.5.

7. The food product of claim 1, wherein the fat-emulsifier component comprises the emulsifier component;
optionally wherein the fat-emulsifier component comprises 5 weight % of the emulsifier component.

8. The food product of claim 1, wherein the food product has an oil content less than or equal to 15.5 grams/28.4 grams (15.5 grams/ounce), less than or equal to 7.5 grams/28.4 grams (7.5 grams/ounce), less than or equal to 5.5 grams/28.4 grams (5.5 grams/ounce), less than or equal to 3.5 grams/28.4 grams (3.5 grams/ounce), less than or equal to 1.5 grams/28.4 grams (1.5 grams/ounce), or less than or equal to 1 grams/28.4 grams (1 grams/ounce).

9. The food product of claim 1, wherein:
a) the solid comestible component is a solid potato component, wherein said solid potato component has an oil content less than or equal to 7 grams/28.4 grams (7 grams/ounce); and
b) the fat-emulsifier component comprises:
i. as the edible fat component, high oleic sunflower oil; and
ii. as the emulsifier component, polyglycerol polyricinoleate or acetic acid ester, wherein said polyglycerol polyricinoleate or acetic acid ester is dispersed or solubilized in the high oleic sunflower oil.

10. The food product of claim 9, wherein the solid potato component comprises at least one chip, slice, flake, crisp, pellet, stick, cluster, cracker, cake, bar, dough, composite, puff, extrudate, cereal, solid matrix, extruded solid matrix, or combination thereof.

11. The food product of claim 9, wherein the solid potato component has an oil content less than or equal to 5 grams/28.4 grams (5 grams/ounce), less than or equal to 3 grams/28.4 grams (3 grams/ounce), less than or equal to 1 grams/28.4 grams (1 grams/ounce), or less than or equal to 0.5 grams/28.4 grams (0.5 grams/ounce).

12. The food product of claim 9,
wherein the fat-emulsifier component comprises 1 to 15 weight % of the polyglycerol polyricinoleate or acetic acid esters based on the total weight of the fat-emulsifier component; optionally wherein the fat-emulsifier component comprises 5 weight % of the polyglycerol polyricinoleate or acetic acid esters based on the total weight of the fat-emulsifier component.

13. The food product of claim 9, wherein the food product has an oil content less than or equal to 7.5 grams/28.4 grams (7.5 grams/ounce), less than or equal to 5.5 grams/28.4 grams (5.5 grams/ounce), less than or equal to 3.5 grams/28.4 grams (3.5 grams/ounce), less than or equal to 1.5 grams/28.4 grams (1.5 grams/ounce), or less than or equal to 1 grams/28.4 grams (1 grams/ounce).

14. A method of producing the food product of claim 1 or claim 9, said method comprising:
a) dispersing or solubilizing the emulsifier component or lecithin component in the edible fat component to obtain the fat-emulsifier component; and
b) topically applying the fat-emulsifier component to the solid comestible component.

15. A method according to claim 14 of producing the food product of claim 9, said method comprising:
a) dispersing or solubilizing the polyglycerol polyricinoleate or acetic acid ester in the high oleic sunflower oil to obtain the fat-emulsifier component; and
b) topically applying the fat-emulsifier component to the solid potato component.

16. The method of claim 14 or claim 15, said method further comprising a step of heating the solid comestible component or solid potato component prior to topically applying the fat-emulsifier component to the solid comestible component or solid potato component;
optionally wherein said heating comprises baking or frying the solid comestible component or solid potato component.

17. The method of claim 14 or claim 15, wherein the fat-emulsifier component is heated prior to topically applying the fat-emulsifier component to the solid comestible component or solid potato component;
or
wherein the fat-emulsifier component is heated while topically applying the fat-emulsifier component to the solid comestible component or solid potato component.

18. The method of claim 14 or claim 15, wherein topically applying comprises spraying the fat-emulsifier component onto a surface of the solid comestible component or solid potato component, dipping the solid comestible component or solid potato component into the fat-emulsifier component, coating the solid comestible component or solid potato component with the fat-emulsifier component, or a combination thereof.

## Patentansprüche

1. Lebensmittelprodukt, umfassend:
a) eine feste verzehrbare Komponente, wobei die feste verzehrbare Komponente einen Ölgehalt von kleiner als oder gleich 15 Gramm/28,4 Gramm (15 Gramm/Unze) aufweist; und
b) eine Fett-Emulgator-Komponente, die topisch auf die feste verzehrbare Komponente aufgebracht ist, wobei die Fett-Emulgator-Komponente umfasst:
i. eine essbare Fettkomponente; und entweder
iia. eine Emulgatorkomponente mit einem hydrophil-lipophil-Gleichgewicht(HLB)-Wert von kleiner als oder gleich 9, wobei die Emulgatorkomponente Polyglycerolpolyricinoleat oder Essigsäureester umfasst; oder
iib. eine Lecithinkomponente mit einem prozentuellen Anteil von acetonunlöslichen Stoffen (AI) in dem Bereich von 20 bis 90 und einem prozentuellen Anteil von Phosphatidylcholin (PC) von 20 bis 90, wobei die Lecithinkomponente Sojabohnenlecithin, Sonnenblumenlecithin, Canolalecithin, Rapslecithin, Baumwollsamenlecithin, Maislecithin, Flachssamenlecithin, Hanfsamenlecithin, Palmlecithin, Eilecithin, entöltes Lecithin, hydrophob modifiziertes Lecithin oder eine Kombination davon umfasst,
wobei die Emulgatorkomponente oder Lecithinkomponente in der essbaren Fettkomponente dispergiert oder solubilisiert ist und
wobei die Fett-Emulgator-Komponente 1 bis 15 Gew.-% an der Emulgatorkomponente oder Lecithinkomponente, bezogen auf das Gesamtgewicht der Fett-Emulgator-Komponente, umfasst.

2. Lebensmittelprodukt gemäß Anspruch 1, wobei die feste verzehrbare Komponente eine feste Stärkekomponente, eine feste Ballaststoffkomponente, eine feste Kohlenhydratkomponente, eine feste Proteinkomponente oder eine Kombination davon umfasst; oder
wobei die feste verzehrbare Komponente Kartoffel, Süßkartoffel, Yam, Mais, Wachsmais, Hafer, Weizen, Sorghum, Reis, Hirse, Amaranth, Kamut, Roggen, Hafer, Wachsreis, Kidneybohnen, Pintobohnen, Linsen, Kichererbsen, Tapioka, Yucca, Taro, Rüben, Möhren, Pfeilwurz, Kassava, Pastinake, Jerusalem-Artischocke, Triticale, Buchweizen, Quinoa, Banane, Kochbanane, Apfel, Erdbeere, Masa, Kohlrübe, Steckrübe, Jicama, Knoblauch, Zwiebel, Schalotte, Grünkohl, Spinat, Kohlrabi, Sojabohne, Paprika, Erbse oder eine Kombination davon umfasst.

3. Lebensmittelprodukt gemäß Anspruch 1, wobei die feste verzehrbare Komponente wenigstens ein(e) Stückchen, Scheibe, Flocke, Crisp, Pellet, Stäbchen, Cluster, Cracker, Kuchen, Riegel, Teig, Verbundmaterial, Puff-Backwerk, Extrudat, Cerealie, feste Matrix, extrudierte feste Matrix oder Kombination davon umfasst.

4. Lebensmittelprodukt gemäß Anspruch 1, wobei die feste verzehrbare Komponente einen Ölgehalt von kleiner als oder gleich 7 Gramm/28,4 Gramm (7 Gramm/Unze), kleiner als oder gleich 5 Gramm/28,4 Gramm (5 Gramm/Unze), kleiner als oder gleich 3 Gramm/28,4 Gramm (3 Gramm/Unze), kleiner als oder gleich 1 Gramm/28,4 Gramm (1 Gramm/Unze) oder kleiner als oder gleich 0,5 Gramm/28,4 Gramm (0,5 Gramm/Unze) aufweist.

5. Lebensmittelprodukt gemäß Anspruch 1, wobei die essbare Fettkomponente ein Pflanzenöl, Tieröl, Tierfett, einen Saccharose-Polyester oder eine Kombination davon umfasst;
wobei das Pflanzenöl gegebenenfalls Sonnenblumenöl, Sonnenblumenöl mit mittlerem Ölsäureanteil, ölsäurereiches Sonnenblumenöl, Canolaöl, Sojabohnenöl, Palmkernöl, Kokosnussöl, Maisöl, Baumwollsamenöl, Palmöl, Palmolein, Distelöl, ölsäurereiches Distelöl, Palmstearin, Rapsöl oder eine Kombination davon umfasst;
wobei das Pflanzenöl gegebenenfalls ferner ölsäurereiches Sonnenblumenöl umfasst.

6. Lebensmittelprodukt gemäß Anspruch 1, wobei die Emulgatorkomponente einen HLB-Wert von kleiner als 8, kleiner als oder gleich 5, kleiner als oder gleich 4, kleiner als oder gleich 3, kleiner als oder gleich 1,5, kleiner als oder gleich 1 oder kleiner als oder gleich 0,5 aufweist.

7. Lebensmittelprodukt gemäß Anspruch 1, wobei die Fett-Emulgator-Komponente die Emulgatorkomponente umfasst;
wobei die Fett-Emulgator-Komponente gegebenenfalls 5 Gew.-% an der Emulgatorkomponente umfasst.

8. Lebensmittelprodukt gemäß Anspruch 1, wobei das Lebensmittelprodukt einen Ölgehalt von kleiner als oder gleich 15,5 Gramm/28,4 Gramm (15,5 Gramm/Unze), kleiner als oder gleich 7,5 Gramm/28,4 Gramm (7,5 Gramm/Unze), kleiner als oder gleich 5,5 Gramm/28,4 Gramm (5,5 Gramm/Unze), kleiner als oder gleich 3,5 Gramm/28,4 Gramm (3,5 Gramm/Unze), kleiner als oder gleich 1,5 Gramm/28,4 Gramm (1,5 Gramm/Unze) oder kleiner als oder gleich 1 Gramm/28,4 Gramm (1 Gramm/Unze) aufweist.

9. Lebensmittelprodukt gemäß Anspruch 1, wobei:
a) die feste verzehrbare Komponente eine feste Kartoffelkomponente ist, wobei die feste Kartoffelkomponente einen Ölgehalt von kleiner als oder gleich 7 Gramm/28,4 Gramm (7 Gramm/Unze) aufweist; und
b) die Fett-Emulgator-Komponente umfasst:
i. ölsäurereiches Sonnenblumenöl als die essbare Fettkomponente; und
ii. Polyglycerolpolyricinoleat oder Essigsäureester als die Emulgatorkomponente, wobei das Polyglycerolpolyricinoleat oder der Essigsäureester in dem ölsäurereichen Sonnenblumenöl dispergiert oder solubilisiert ist.

10. Lebensmittelprodukt gemäß Anspruch 9, wobei die feste Kartoffelkomponente wenigstens ein(e) Stückchen, Scheibe, Flocke, Crisp, Pellet, Stäbchen, Cluster, Cracker, Kuchen, Riegel, Teig, Verbundmaterial, Puff-Backwerk, Extrudat, Cerealie, feste Matrix, extrudierte feste Matrix oder Kombination davon umfasst.

11. Lebensmittelprodukt gemäß Anspruch 9, wobei die feste Kartoffelkomponente einen Ölgehalt von kleiner als oder gleich 5 Gramm/28,4 Gramm (5 Gramm/Unze), kleiner als oder gleich 3 Gramm/28,4 Gramm (3 Gramm/Unze), kleiner als oder gleich 1 Gramm/28,4 Gramm (1 Gramm/Unze) oder kleiner als oder gleich 0,5 Gramm/28,4 Gramm (0,5 Gramm/Unze) aufweist.

12. Lebensmittelprodukt gemäß Anspruch 9, wobei die Fett-Emulgator-Komponente 1 bis 15 Gew.-% an dem Polyglycerolpolyricinoleat oder den Essigsäureestern, bezogen auf das Gesamtgewicht der Fett-Emulgator-Komponente, umfasst; wobei die Fett-Emulgator-Komponente gegebenenfalls 5 Gew.-% an dem Polyglycerolpolyricinoleat oder den Essigsäureestern, bezogen auf das Gesamtgewicht der Fett-Emulgator-Komponente, umfasst.

13. Lebensmittelprodukt gemäß Anspruch 9, wobei das Lebensmittelprodukt einen Ölgehalt von kleiner als oder gleich 7,5 Gramm/28,4 Gramm (7,5 Gramm/Unze), kleiner als oder gleich 5,5 Gramm/28,4 Gramm (5,5 Gramm/Unze), kleiner als oder gleich 3,5 Gramm/28,4 Gramm (3,5 Gramm/Unze), kleiner als oder gleich 1,5 Gramm/28,4 Gramm (1,5 Gramm/Unze) oder kleiner als oder gleich 1 Gramm/28,4 Gramm (1 Gramm/Unze) aufweist.

14. Verfahren zur Herstellung des Lebensmittelprodukts gemäß Anspruch 1 oder Anspruch 9, wobei das Verfahren umfasst:
a) Dispergieren oder Solubilisieren der Emulgatorkomponente oder Lecithinkomponente in der essbaren Fettkomponente, um die Fett-Emulgator-Komponente zu erhalten; und
b) topisches Aufbringen der Fett-Emulgator-Komponente auf die feste verzehrbare Komponente.

15. Verfahren gemäß Anspruch 14 zur Herstellung des Lebensmittelprodukts gemäß Anspruch 9, wobei das Verfahren umfasst:
a) Dispergieren oder Solubilisieren des Polyglycerolpolyricinoleats oder Essigsäureesters in dem ölsäurereichen Sonnenblumenöl, um die Fett-Emulgator-Komponente zu erhalten; und
b) topisches Aufbringen der Fett-Emulgator-Komponente auf die feste Kartoffelkomponente.

16. Verfahren gemäß Anspruch 14 oder Anspruch 15, wobei das Verfahren ferner einen Schritt des Erhitzens der festen verzehrbaren Komponente oder festen Kartoffelkomponente vor dem topischen Aufbringen der Fett-Emulgator-Komponente auf die feste verzehrbare Komponente oder feste Kartoffelkomponente umfasst;
wobei das Erhitzen gegebenenfalls Backen oder Frittieren der festen verzehrbaren Komponente oder festen Kartoffelkomponente umfasst.

17. Verfahren gemäß Anspruch 14 oder Anspruch 15, wobei die Fett-Emulgator-Komponente erhitzt wird, bevor die Fett-Emulgator-Komponente topisch auf die feste verzehrbare Komponente oder feste Kartoffelkomponente aufgebracht wird;
oder
wobei die Fett-Emulgator-Komponente erhitzt wird, während die Fett-Emulgator-Komponente topisch auf die feste verzehrbare Komponente oder feste Kartoffelkomponente aufgebracht wird.

18. Verfahren gemäß Anspruch 14 oder Anspruch 15, wobei das topische Aufbringen Sprühen der Fett-Emulgator-Komponente auf eine Oberfläche der festen verzehrbaren Komponente oder festen Kartoffelkomponente, Eintauchen der festen verzehrbaren Komponente oder festen Kartoffelkomponente in die Fett-Emulgator-Komponente, Überziehen der der festen verzehrbaren Komponente oder festen Kartoffelkomponente mit der Fett-Emulgator-Komponente oder eine Kombination davon umfasst.

## Revendications

1. Produit alimentaire, comprenant :
a) un composant comestible solide, ledit composant comestible solide ayant une teneur en huile inférieure ou égale à 15 grammes/28,4 grammes (15 grammes/once) ; et
b) un composant d'émulsifiant de matière grasse appliqué de manière topique au composant comestible solide, le composant d'émulsifiant de matière grasse comprenant :
i. un composant de matière grasse comestible ; et
iia. un composant d'émulsifiant ayant une valeur de rapport hydro-lipophile (HLB) inférieure ou égale à 9, le composant d'émulsifiant comprenant du polyricinoléate de polyglycérol, ou des esters d'acide acétique ; ou bien
iib. un composant de lécithine ayant un pourcentage de matières insolubles dans l'acétone (AI) dans la plage allant de 20 à 90 et un pourcentage de phosphatidylcholine (PC) allant de 20 à 90, où le composant de lécithine comprend de la lécithine de soja, de la lécithine de tournesol, de la lécithine de canola, de la lécithine de colza, de la lécithine de coton, de la lécithine de maïs, de la lécithine de lin, de la lécithine de graines de chanvre, de la lécithine de palme, de la lécithine d'œuf, de la lécithine déshuilée, de la lécithine modifiée de manière hydrophobe, ou une combinaison de celles-ci,
où ledit composant d'émulsifiant ou composant de lécithine est dispersé ou solubilisé dans le composant de matière grasse comestible, et
où le composant d'émulsifiant de matière grasse comprend de 1 à 15 % en poids du composant d'émulsifiant ou du composant de lécithine, sur la base du poids total du composant d'émulsifiant de matière grasse.

2. Produit alimentaire selon la revendication 1, dans lequel le composant comestible solide comprend un composant d'amidon solide, un composant de fibres solide, un composant de glucides solide, un composant de protéines solide, ou une combinaison de ceux-ci ; ou
où le composant comestible solide comprend de la pomme de terre, de la patate douce, de l'igname, du maïs, du maïs cireux, de l'avoine, du blé, du sorgho, du riz, du millet, de l'amarante, du blé Khorasan, du seigle, de l'orge, du riz cireux, des haricots secs, des haricots pinto, des lentilles, des pois chiches, du tapioca, du yucca, du taro, de la betterave, de la carotte, de l'arrow-root, du manioc, du panais, du topinambour, du triticale, du sarrasin, du quinoa, de la banane, de la banane plantain, de la pomme, de la fraise, de la purée de maïs, du rutabaga, du navet, du jicama, de l'ail, de l'oignon, de l'échalote, du chou frisé, de l'épinard, du chou-rave, du soja, du poivron, des pois, ou une combinaison de ceux-ci.

3. Produit alimentaire selon la revendication 1, dans lequel le composant comestible solide comprend au moins un copeau, une tranche, un flocon, des chips, un pellet, un bâtonnet, un agrégat, un craquelin, un gâteau, une barre, une pâte, un composite, un feuilleté, un extrudat, des céréales, une matrice solide, une matrice solide extrudée, ou une combinaison de ceux-ci.

4. Produit alimentaire selon la revendication 1, dans lequel le composant comestible solide possède une teneur en huile inférieure ou égale à 7 grammes/28,4 grammes (7 grammes/once), inférieure ou égale à 5 grammes/28,4 grammes (5 grammes/once), inférieure ou égale à 3 grammes/28,4 grammes (3 grammes/once), inférieure ou égale à 1 gramme/28,4 grammes (1 gramme/once), ou inférieure ou égale à 0,5 gramme/28,4 grammes (0,5 gramme/once).

5. Produit alimentaire selon la revendication 1, dans lequel le composant de matière grasse comestible comprend une huile végétale, une huile animale, une matière grasse animale, un polyester de saccharose, ou une combinaison de ceux-ci ;
éventuellement où l'huile végétale comprend de l'huile de tournesol, de l'huile de tournesol à teneur moyenne en acide oléique, de l'huile de tournesol à teneur élevée en acide oléique, de l'huile de canola, de l'huile de soja, de l'huile de palmiste, de l'huile de noix de coco, de l'huile de maïs, de l'huile de coton, de l'huile de palme, de l'oléfine de palme, de l'huile de carthame, de l'huile de carthame à teneur élevée en acide oléique, de la stéarine de palme, de l'huile de colza, ou une combinaison de celles-ci ;
en outre éventuellement où l'huile végétale comprend de l'huile de tournesol à teneur élevée en acide oléique.

6. Produit alimentaire selon la revendication 1, dans lequel le composant d'émulsifiant possède une valeur de HLB inférieure à 8, inférieure ou égale à 5, inférieure ou égale à 4, inférieure ou égale à 3, inférieure ou égale à 1,5, inférieure ou égale à 1, ou inférieure ou égale à 0,5.

7. Produit alimentaire selon la revendication 1, dans lequel le composant d'émulsifiant de matière grasse comprend le composant d'émulsifiant ;
éventuellement où le composant d'émulsifiant de matière grasse comprend 5 % en poids du composant d'émulsifiant.

8. Produit alimentaire selon la revendication 1, le produit alimentaire ayant une teneur en huile inférieure ou égale à 15,5 grammes/28,4 grammes (15,5 grammes/once), inférieure ou égale à 7,5 grammes/28,4 grammes (7,5 grammes/once), inférieure ou égale à 5,5 grammes/28,4 grammes (5,5 grammes/once), inférieure ou égale à 3,5 grammes/28,4 grammes (3,5 grammes/once), inférieure ou égale à 1,5 gramme/28,4 grammes (1,5 gramme/once), ou inférieure ou égale à 1 gramme/28,4 grammes (1 gramme/once).

9. Produit alimentaire selon la revendication 1, dans lequel
a) le composant comestible solide est un composant de pomme de terre solide, ledit composant de pomme de terre solide ayant une teneur en huile inférieure ou égale à 7 grammes/28,4 grammes (7 grammes/once) ; et
b) le composant d'émulsifiant de matière grasse comprend :
i. comme composant de matière grasse comestible, de l'huile de tournesol à teneur élevée en acide oléique ; et
ii. comme composant d'émulsifiant, du polyricinoléate de polyglycérol, ou un ester d'acide acétique, où ledit polyricinoléate de polyglycérol ou ester d'acide acétique est dispersé ou solubilisé dans l'huile de tournesol à teneur élevée en acide oléique.

10. Produit alimentaire selon la revendication 9, dans lequel le composant de pomme de terre solide comprend au moins un copeau, une tranche, un flocon, des chips, un pellet, un bâtonnet, un agrégat, un craquelin, un gâteau, une barre, une pâte, un composite, un feuilleté, un extrudat, des céréales, une matrice solide, une matrice solide extrudée, ou une combinaison de ceux-ci.

11. Produit alimentaire selon la revendication 9, dans lequel le composant de pomme de terre solide possède une teneur en huile inférieure ou égale à 5 grammes/28,4 grammes (5 grammes/once), inférieure ou égale à 3 grammes/28,4 grammes (3 grammes/once), inférieure ou égale à 1 gramme/28,4 grammes (1 gramme/once), ou inférieure ou égale à 0,5 gramme/28,4 grammes (0,5 gramme/once).

12. Produit alimentaire selon la revendication 9, dans lequel le composant d'émulsifiant de matière grasse comprend de 1 à 15 % en poids du polyricinoléate de polyglycérol ou des esters d'acide acétique, sur la base du poids total du composant d'émulsifiant de matière grasse ; éventuellement où le composant d'émulsifiant de matière grasse comprend 5 % en poids du polyricinoléate de polyglycérol ou des esters d'acide acétique, sur la base du poids total du composant d'émulsifiant de matière grasse.

13. Produit alimentaire selon la revendication 9, le produit alimentaire ayant une teneur en huile inférieure ou égale à 7,5 grammes/28,4 grammes (7,5 grammes/once), inférieure ou égale à 5,5 grammes/28,4 grammes (5,5 grammes/once), inférieure ou égale à 3,5 grammes/28,4 grammes (3,5 grammes/once), inférieure ou égale à 1,5 gramme/28,4 grammes (1,5 gramme/once), ou inférieure ou égale à 1 gramme/28,4 grammes (1 gramme/once).

14. Méthode de production du produit alimentaire selon la revendication 1 ou la revendication 9, ladite méthode comprenant :
a) la dispersion ou la solubilisation du composant d'émulsifiant ou du composant de lécithine dans le composant de matière grasse comestible afin d'obtenir le composant d'émulsifiant de matière grasse ; et
b) l'application de manière topique du composant d'émulsifiant de matière grasse au composant comestible solide.

15. Méthode selon la revendication 14 de production du produit alimentaire la revendication 9, ladite méthode comprenant :
a) la dispersion ou la solubilisation du polyricinoléate de polyglycérol ou d'un ester d'acide acétique dans l'huile de tournesol à teneur élevée en acide oléique afin d'obtenir le composant d'émulsifiant de matière grasse ; et
b) l'application de manière topique du composant d'émulsifiant de matière grasse au composant de pomme de terre solide.

16. Méthode selon la revendication 14 ou la revendication 15, ladite méthode comprenant en outre une étape consistant à chauffer le composant comestible solide ou le composant de pomme de terre solide, préalablement à l'application de manière topique du composant d'émulsifiant de matière grasse au composant comestible solide ou au composant de pomme de terre solide ;
éventuellement où ledit chauffage comprend la cuisson ou la friture du composant comestible solide ou du composant de pomme de terre solide.

17. Méthode selon la revendication 14 ou la revendication 15, dans laquelle le composant d'émulsifiant de matière grasse est chauffé préalablement à l'application de manière topique du composant d'émulsifiant de matière grasse au composant comestible solide ou au composant de pomme de terre solide ; ou
où le composant d'émulsifiant de matière grasse est chauffé tout en mettant en œuvre l'application de manière topique du composant d'émulsifiant de matière grasse au composant comestible solide ou au composant de pomme de terre solide.

18. Méthode selon la revendication 14 ou la revendication 15, dans laquelle l'application de manière topique comprend la pulvérisation du composant d'émulsifiant de matière grasse sur une surface du composant comestible solide ou du composant de pomme de terre solide, le trempage du composant comestible solide ou du composant de pomme de terre solide dans le composant d'émulsifiant de matière grasse, le revêtement du composant comestible solide ou du composant de pomme de terre solide par le composant d'émulsifiant de matière grasse, ou une combinaison de ceux-ci.
